# EUROPEAN PATENT APPLICATION

(11) **EP 4 841 883 A1**
(43) Date of publication of application: **18.11.2026**
(21) Application number: 25738789.4
(22) Date of filing: 08.01.2025
(51) Int. Cl.: H02M 7/48

(54) **ELECTRIC POWER CONVERTING DEVICE**

(30) Priority: 10.01.2024 JP 2024002093
(71) Applicant: Panasonic Intellectual Property Management Co., Ltd., Kadoma-shi, Osaka 571-0057 (JP)
(72) Inventor: KAMON, Yutaka, Kadoma-shi, Osaka 571-0057 (JP); HIGASHIYAMA, Koji, Kadoma-shi, Osaka 571-0057 (JP)
(74) Representative: Novagraaf International SA
(86) International application number: PCT/JP2025/000410
(87) International publication number: WO 2025/150521

(57) **Abstract**

The problem is to stop performing zero-voltage soft switching without making pulse width modulation of a second control signal for each of a plurality of switches provided for the purpose of making zero-voltage soft switching. When performing a first control operation, a control system (50) allows at least a part of a high-level period of a second control signal for a switch (8) to overlap with a dead time period provided between a high-level period of a first control signal for a first switching element (1) and a high-level period of a first control signal for a second switching element (2). When performing a second control operation, the control system (50) allows at least a part of the high-level period of the second control signal to overlap with the high-level period of the first control signal for a target switching element by shifting the high-level period of the second control signal to shorten an overlap period between the high-level period of the second control signal to be applied to each of the plurality of switches (8) and the dead time period compared to a situation where the first control operation is performed.

## Description

### Technical Field

The present disclosure generally relates to a power converter. More particularly, the present disclosure relates to a power converter having the ability to convert DC power into AC power.

### Background Art

Patent Literature 1 discloses a power conversion system.

The power conversion system (power converter) of Patent Literature 1 includes a main switching means (power converter circuit), two capacitors, one coil (resonant inductor), a plurality of auxiliary switch elements, and a controller. The main switching means includes a plurality of main switching circuits provided for respective phases of multiphase AC power. Each of the plurality of main switching circuits is implemented as a pair of main switch elements which are connected in series between both terminals of a DC power supply and uses, as the output node of its associated phase, the interconnection node of the pair of main switch elements. The two capacitors divide the voltage of the DC power supply. One terminal of the coil is connected to a voltage division node of the two capacitors. The plurality of auxiliary switch elements connect the other terminal of the coil and the output nodes of the respective phases. The controller generates control signals (first control signals) for performing PWM control on the respective main switch elements and outputs the control signals to the respective gates of the main switch elements. In addition, the controller also generates control signals (second control signals) for controlling the ON/OFF states of the respective auxiliary switch elements and outputs the control signals to the respective gates of the auxiliary switch elements. When determining that a plurality of phase currents should flow through the coil, the controller controls the plurality of auxiliary switch elements to make the amount of current flowing through at least one phase smaller than a preset amount.

In the power conversion system (power converter) of Patent Literature 1, when predicting that the operating times of auxiliary switches corresponding to two phases will collide against each other, for example, the controller reduces the ON period of an auxiliary switch element corresponding to one of the two phases to zero and does not perform soft switching with respect to that phase.

The power converter is sometimes required to stop performing zero-voltage soft switching on a switching element as a target of zero-voltage soft switching without making pulse width modulation of the control signal (second control signal) for each of a plurality of switches to be subjected to zero-voltage soft switching.

### Citation List

### Patent Literature

Patent Literature 1: JP 2010-233306 A

### Summary of Invention

An object of the present disclosure is to provide a power converter having the ability to stop performing zero-voltage soft switching without making pulse width modulation of a second control signal for each of a plurality of switches to be subjected to zero-voltage soft switching.

A power converter according to an aspect of the present disclosure includes: a first DC terminal and a second DC terminal; a power converter circuit; a plurality of AC terminals; a plurality of switches; a plurality of resonant capacitors; at least one resonant inductor; a regenerative capacitor; and a control system. The power converter circuit includes a plurality of first switching elements and a plurality of second switching elements. In the power converter circuit, a plurality of switching circuits in each of which one of the plurality of first switching elements and a corresponding one of the plurality of second switching elements are connected one to one in series, are connected to each other in parallel. In the power converter circuit, the plurality of first switching elements are connected to the first DC terminal. In the power converter circuit, the plurality of second switching elements are connected to the second DC terminal. The plurality of AC terminals are provided one to one for the plurality of switching circuits. Each of the plurality of AC terminals is connected to a connection node between the first switching element and the second switching element of a corresponding one of the plurality of switching circuits. A load current flows through each of the plurality of AC terminals. The plurality of switches are provided one to one for the plurality of switching circuits. Each of the plurality of switches has a first end thereof connected to the connection node between the first switching element and the second switching element of a corresponding one of the plurality of switching circuits. The plurality of resonant capacitors are provided one to one for the plurality of switches. Each of the plurality of resonant capacitors is connected between the first end of a corresponding one of the plurality of switches and the second DC terminal. The at least one resonant inductor has a third end and a fourth end. The third end of the at least one resonant inductor is connected to a second end of a corresponding one of the plurality of switches. The regenerative capacitor has a fifth end and a sixth end. The fifth end of the regenerative capacitor is connected to the second DC terminal. The sixth end of the regenerative capacitor is connected to the fourth end of the at least one resonant inductor. The control system applies a first control signal, having a potential alternating between a high level and a low level, to each of the plurality of first switching elements and the plurality of second switching elements and applies a second control signal, having a potential alternating between the high level and the low level, to each of the plurality of switches. The control system may perform a first control operation and a second control operation when changing, in each of the plurality of switching circuits, the first control signal for a target switching element from the low level to the high level. The target switching element is one of the first and second switching elements that is going to be turned ON in the switching circuit. When performing the first control operation, the control system allows, with respect to each of the plurality of switching circuits, at least a part of a high-level period of the second control signal for one of the plurality of switches which corresponds to the switching circuit, to overlap with a dead time period provided between a high-level period of the first control signal for the first switching element and a high-level period of the first control signal for the second switching element. When performing the second control operation, the control system allows at least a part of the high-level period of the second control signal to overlap with the high-level period of the first control signal for the target switching element by shifting the high-level period of the second control signal to shorten an overlap period between the high-level period of the second control signal to be applied to each of the plurality of switches and the dead time period compared to a situation where the first control operation is performed.

### Brief Description of Drawings

[FIG. 1] FIG. 1 is a circuit diagram of a system including a power converter according to a first embodiment;
[FIG. 2] FIG. 2 shows how duties and load currents, respectively corresponding to three-phase voltage instructions in an AC load connected to a plurality of AC terminals of the power converter, change with time;
[FIG. 3] FIG. 3 is a timing chart illustrating how the power converter operates;
[FIG. 4] FIG. 4 is a timing chart illustrating how a power converter according to a second embodiment operates;
[FIG. 5] FIG. 5 is a circuit diagram of a system including a power converter according to a third embodiment;
[FIG. 6] FIG. 6 is a circuit block diagram of a signal generator circuit in the power converter;
[FIG. 7] FIG. 7 is a timing chart illustrating how the power converter operates;
[FIG. 8] FIG. 8 illustrates how the power converter operates in a first period;
[FIG. 9] FIG. 9 illustrates how the power converter operates in a second period;
[FIG. 10] FIG. 10 illustrates how the power converter operates in a third period;
[FIG. 11] FIG. 11 illustrates how the power converter operates when a heavy load is imposed thereon;
[FIG. 12] FIG. 12 illustrates how the power converter operates when a light load is imposed thereon;
[FIG. 13] FIG. 13 illustrates how the power converter operates when no load is imposed thereon;
[FIG. 14] FIG. 14 is a timing chart illustrating how the power converter may also operate;
[FIG. 15] FIG. 15 is a timing chart illustrating how a power converter according to a fourth embodiment operates;
[FIG. 16] FIG. 16 illustrates how the power converter operates;
[FIG. 17] FIG. 17 is a circuit diagram of a system including a power converter according to a fifth embodiment;
[FIG. 18] FIG. 18 is a timing chart showing an exemplary boundary condition between a situation where currents flowing through a resonant inductor do not overlap with each other (i.e., do not flow simultaneously) and a situation where the currents flowing through the resonant inductor overlap with each other (i.e., flow simultaneously) in the power converter;
[FIG. 19] FIG. 19 is a timing chart showing an exemplary boundary condition between a situation where a U-phase resonant current and a V-phase resonant current do not overlap with each other (i.e., do not flow simultaneously) and a situation where the U-phase resonant current and the V-phase resonant current overlap with each other (i.e., flow simultaneously) in the power converter;
[FIG. 20] FIG. 20 is a timing chart illustrating how the power converter operates;
[FIG. 21] FIG. 21 is a timing chart illustrating how a power converter according to a sixth embodiment operates;
[FIG. 22] FIG. 22 is a timing chart illustrating how a power converter according to a seventh embodiment operates;
[FIG. 23] FIG. 23 is a timing chart illustrating how a power converter according to an eighth embodiment operates;
[FIG. 24] FIG. 24 is a timing chart illustrating how a power converter according to a ninth embodiment operates;
[FIG. 25] FIG. 25 is a timing chart illustrating how the power converter operates;
[FIG. 26] FIG. 26 is a timing chart illustrating how a power converter according to a tenth embodiment operates;
[FIG. 27] FIG. 27 is a timing chart illustrating how the power converter operates;
[FIG. 28] FIG. 28 is a timing chart illustrating how a power converter according to an eleventh embodiment operates;
[FIG. 29] FIG. 29 is a timing chart illustrating how a power converter according to a twelfth embodiment operates;
[FIG. 30] FIG. 30 is a timing chart illustrating how a power converter according to a thirteenth embodiment operates;
[FIG. 31] FIG. 31 is a timing chart illustrating how a power converter according to a fourteenth embodiment operates;
[FIG. 32] FIG. 32 is a timing chart illustrating how a power converter according to a fifteenth embodiment operates;
[FIG. 33] FIG. 33 is a timing chart illustrating how the power converter operates;
[FIG. 34] FIG. 34 is a timing chart illustrating how a power converter according to a sixteenth embodiment operates;
[FIG. 35] FIG. 35 is a timing chart illustrating how a power converter according to a seventeenth embodiment operates;
[FIG. 36] FIG. 36 is a timing chart illustrating how a power converter according to an eighteenth embodiment operates;
[FIG. 37] FIG. 37 is a timing chart illustrating how a power converter according to a nineteenth embodiment operates;
[FIG. 38] FIG. 38 is a timing chart illustrating how a power converter according to a twentieth embodiment operates;
[FIG. 39] FIG. 39 is a timing chart illustrating how a power converter according to a twenty-first embodiment operates;
[FIG. 40] FIG. 40 is a timing chart illustrating how a power converter according to a twenty-second embodiment operates;
[FIG. 41] FIG. 41 is a timing chart illustrating how a power converter according to a twenty-third embodiment operates;
[FIG. 42] FIG. 42 is a circuit diagram of a system including a power converter according to a twenty-fourth embodiment;
[FIG. 43] FIG. 43 is a circuit diagram of a system including a power converter according to a twenty-fifth embodiment;
[FIG. 44] FIG. 44 is a circuit diagram of a system including a power converter according to a twenty-sixth embodiment;
[FIG. 45] FIG. 45 is a circuit diagram of a system including a power converter according to a twenty-seventh embodiment;
[FIG. 46] FIG. 46 is a circuit diagram of a system including a power converter according to a twenty-eighth embodiment;
[FIG. 47] FIG. 47 is a circuit diagram of a system including a power converter according to a twenty-ninth embodiment;
[FIG. 48] FIG. 48 is a circuit diagram of a system including a power converter according to a thirtieth embodiment; and
[FIG. 49] FIG. 49 is a circuit diagram of a system including a power converter according to a thirty-first embodiment.

### Description of Embodiments

### (First embodiment)

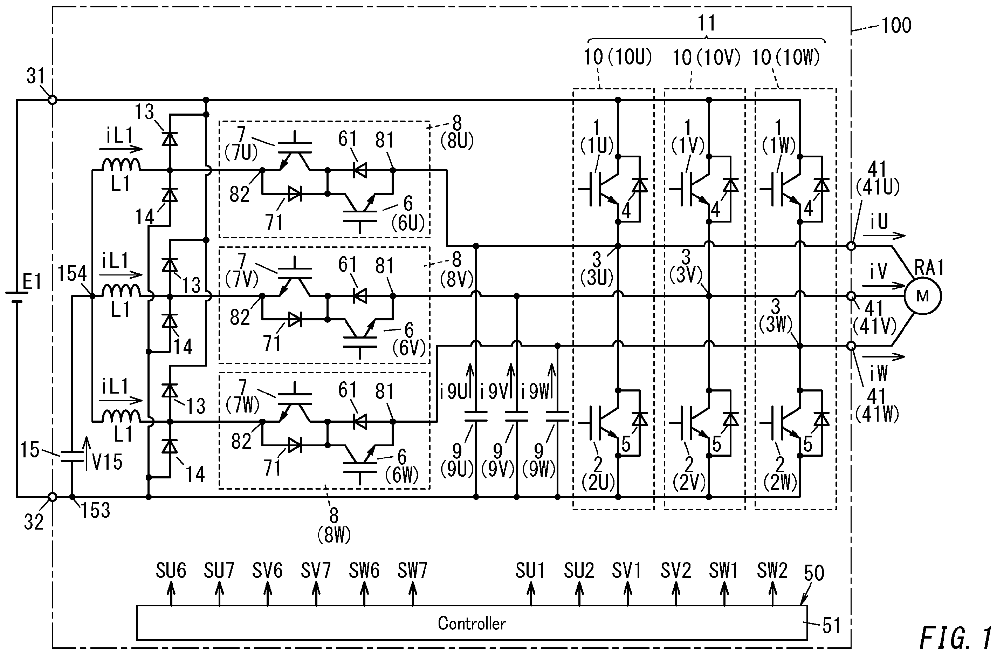

A power converter 100 according to a first embodiment will now be described with reference to FIGS. 1-3.

### (1) Overall configuration for power converter

The power converter 100 includes a first DC terminal 31 and a second DC terminal 32, and a plurality of (e.g., three) AC terminals 41 as shown in FIG. 1, for example. A DC power supply E1 is connected between the first DC terminal 31 and the second DC terminal 32. An AC load RA1 is connected to the plurality of AC terminals 41. The AC load RA1 may be, for example, a three-phase servo motor. The power converter 100 converts the DC output of the DC power supply E1 into AC power and outputs the AC power to the AC load RA1. The DC power supply E1 may include, for example, a solar cell or a fuel cell. The DC power supply E1 may include a DC-DC converter. In the power converter 100, if the plurality of AC terminals 41 are three AC terminals 41, then the AC power is, for example, three-phase AC power having U-, V-, and W-phases.

The power converter 100 includes a power converter circuit 11, a plurality of (e.g., three) switches 8, a plurality of (e.g., three) resonant capacitors 9, a plurality of (e.g., three) resonant inductors L1, a regenerative capacitor 15, and a control system 50. Each of the plurality of switches 8 may be, for example, a bidirectional switch. In addition, the power converter 100 further includes a plurality of (e.g., three) first clamping diodes 13 and a plurality of (e.g., three) second clamping diodes 14.

The power converter circuit 11 includes a plurality of (e.g., three) first switching elements 1 and a plurality of (e.g., three) second switching elements 2. In the power converter circuit 11, a plurality of (e.g., three) switching circuits 10, in each of which one of the plurality of first switching elements 1 and a corresponding one of the plurality of second switching elements 2 are connected one to one in series, are connected to each other in parallel. In the power converter circuit 11, the plurality of first switching elements 1 are connected to the first DC terminal 31 and the plurality of second switching elements 2 are connected to the second DC terminal 32.

The plurality of AC terminals 41 are provided one to one for the plurality of switching circuits 10. Each of the plurality of AC terminals 41 is connected to a connection node 3 between the first switching element 1 and the second switching element 2 of a corresponding one of the plurality of switching circuits 10.

The plurality of switches 8 are provided one to one for the plurality of switching circuits 10. Each of the plurality of switches 8 has a first end 81 and a second end 82. Each of the plurality of switches 8 has the first end 81 thereof connected to the connection node 3 between the first switching element 1 and the second switching element 2 of a corresponding one of the plurality of switching circuits 10.

The plurality of resonant capacitors 9 are provided one to one for the plurality of switches 8. Each of the plurality of resonant capacitors 9 is connected between the first end 81 of a corresponding one of the plurality of switches 8 and the second DC terminal 32.

Each of the plurality of resonant inductors L1 has a third end and a fourth end. In each of the plurality of resonant inductors L1, the third end thereof is connected to the second end 82 of a corresponding one of the plurality of switches 8.

The regenerative capacitor 15 has a fifth end 153 and a sixth end 154. In the regenerative capacitor 15, the fifth end 153 thereof is connected to the second DC terminal 32 and the sixth end 154 thereof is connected to the respective fourth ends of the plurality of resonant inductors L1.

The control system 50 applies a first control signal to each of the plurality of first switching elements 1 and the plurality of second switching elements 2. In addition, the control system 50 also applies a second control signal to each of the plurality of switches 8.

### (2) Details of power converter

In the following description, as for the plurality of switching circuits 10, the switching circuits 10 for the U-, V-, and W-phases will be hereinafter sometimes referred to as a "switching circuit 10U," a "switching circuit 10V," and a "switching circuit 10W," respectively, for the sake of convenience of description. Also, in the following description, the first switching element 1 and second switching element 2 of the switching circuit 10U will be hereinafter sometimes referred to as a "first switching element 1U" and a "second switching element 2U," respectively. In the same way, in the following description, the first switching element 1 and second switching element 2 of the switching circuit 10V will be hereinafter sometimes referred to as a "first switching element 1V" and a "second switching element 2V," respectively. In the same way, in the following description, the first switching element 1 and second switching element 2 of the switching circuit 10W will be hereinafter sometimes referred to as a "first switching element 1W" and a "second switching element 2W," respectively. Furthermore, in the following description, the connection node 3 between the first switching element 1U and the second switching element 2U will be hereinafter sometimes referred to as a "connection node 3U," the connection node 3 between the first switching element 1V and the second switching element 2V will be hereinafter sometimes referred to as a "connection node 3V," and the connection node 3 between the first switching element 1W and the second switching element 2W will be hereinafter sometimes referred to as a "connection node 3W." Furthermore, in the following description, the AC terminal 41 connected to the connection node 3U will be hereinafter sometimes referred to as an "AC terminal 41U," the AC terminal 41 connected to the connection node 3V will be hereinafter sometimes referred to as an "AC terminal 41V," and the AC terminal 41 connected to the connection node 3W will be hereinafter sometimes referred to as an "AC terminal 41W." Furthermore, in the following description, the resonant capacitor 9 connected to the second switching element 2U in parallel will be hereinafter sometimes referred to as a "resonant capacitor 9U," the resonant capacitor 9 connected to the second switching element 2V in parallel will be hereinafter sometimes referred to as a "resonant capacitor 9V," and the resonant capacitor 9 connected to the second switching element 2W in parallel will be hereinafter sometimes referred to as a "resonant capacitor 9W." Furthermore, in the following description, the switch 8 connected to the connection node 3U will be hereinafter sometimes referred to as a "switch 8U," the switch 8 connected to the connection node 3V will be hereinafter sometimes referred to as a "switch 8V," and the switch 8 connected to the connection node 3W will be hereinafter sometimes referred to as a "switch 8W."

In the power converter 100, the higher-potential output terminal (positive electrode) of the DC power supply E1 is connected, for example, to the first DC terminal 31, and the lower-potential output terminal (negative electrode) of the DC power supply E1 is connected, for example, to the second DC terminal 32. Also, in the power converter 100, the U-, V-, and W-phase terminals of the AC load RA1, for example, are connected to the three AC terminals 41U, 41V, and 41W, respectively.

In the power converter circuit 11, each of the plurality of (e.g., three in the example illustrated in FIG. 1) first switching elements 1 and the plurality of (e.g., three in the example illustrated in FIG. 1) second switching elements 2 has a control terminal, a first main terminal, and a second main terminal. The respective control terminals of the plurality of first switching elements 1 and the plurality of second switching elements 2 are connected to the control system 50. In each of the plurality of switching circuits 10 of the power converter 100, the first main terminal of the first switching element 1 is connected to the first DC terminal 31, the second main terminal of the first switching element 1 is connected to the first main terminal of the second switching element 2, and the second main terminal of the second switching element 2 is connected to the second DC terminal 32. In each of the plurality of switching circuits 10, the first switching element 1 is a high-side switching element (P-side switching element) and the second switching element 2 is a low-side switching element (N-side switching element). Each of the plurality of first switching elements 1 and the plurality of second switching elements 2 may be, for example, an insulated gate bipolar transistor (IGBT). Thus, in each of the plurality of first switching elements 1 and the plurality of second switching elements 2, the control terminal, the first main terminal, and the second main terminal thereof are a gate terminal, a collector terminal, and an emitter terminal, respectively.

The power converter circuit 11 further includes a plurality of (e.g., three) first diodes 4 which are connected one to one to the plurality of (e.g., three) first switching elements 1 in antiparallel and a plurality of (e.g., three) second diodes 5 which are connected one to one to the plurality of (e.g., three) second switching elements 2 in antiparallel. In each of the plurality of first diodes 4, the anode of the first diode 4 is connected to the second main terminal (emitter terminal) of the first switching element 1 corresponding to the first diode 4, and the cathode of the first diode 4 is connected to the first main terminal (collector terminal) of the first switching element 1 corresponding to the first diode 4. In each of the plurality of second diodes 5, the anode of the second diode 5 is connected to the second main terminal (emitter terminal) of the second switching element 2 corresponding to the second diode 5, and the cathode of the second diode 5 is connected to the first main terminal (collector terminal) of the second switching element 2 corresponding to the second diode 5.

The U-phase terminal of the AC load RA1 may be connected, for example, to the connection node 3U between the first switching element 1U and the second switching element 2U via the AC terminal 41U. The V-phase terminal of the AC load RA1 may be connected, for example, to the connection node 3V between the first switching element 1V and the second switching element 2V via the AC terminal 41V. The W-phase terminal of the AC load RA1 may be connected, for example, to the connection node 3W between the first switching element 1W and the second switching element 2W via the AC terminal 41W.

The plurality of resonant capacitors 9 are provided one to one for the plurality of switches 8. Each of the plurality of resonant capacitors 9 is connected between the first end 81 of a corresponding one of the plurality of switches 8 and the second DC terminal 32. The power converter 100 includes a plurality of resonant circuits. Each of the plurality of resonant circuits includes a corresponding one of the resonant capacitors 9 and a corresponding one of the resonant inductors L1.

Each of the plurality of switches 8 includes a third switching element 6 and a fourth switching element 7. Each of the plurality of (e.g., three in the example illustrated in FIG. 1) third switching elements 6 and the plurality of (e.g., three in the example illustrated in FIG. 1) fourth switching elements 7 has a control terminal, a first main terminal, and a second main terminal. The respective control terminals of the plurality of third switching elements 6 and the plurality of fourth switching elements 7 are connected to the control system 50. Each of the plurality of third switching elements 6 and the plurality of fourth switching elements 7 may be implemented as, for example, an IGBT. Thus, in each of the plurality of third switching elements 6 and the plurality of fourth switching elements 7, the control terminal, the first main terminal, and the second main terminal thereof are a gate terminal, a collector terminal, and an emitter terminal, respectively. In each of the plurality of switches 8, the third switching element 6 and the fourth switching element 7 are connected to each other in anti-series. In each of the plurality of switches 8, the first main terminal (collector terminal) of the third switching element 6 is connected to the first main terminal (collector terminal) of the fourth switching element 7. In each of the plurality of switches 8, the second main terminal (emitter terminal) of the third switching element 6 is connected to the connection node 3 of a corresponding one of the plurality of switching circuits 10, and the second main terminal (emitter terminal) of the fourth switching element 7 is connected to a corresponding one of the plurality of resonant inductors L1. Each of the plurality of switches 8 further includes a diode 61 connected to the third switching element 6 in antiparallel and a diode 71 connected to the fourth switching element 7 in antiparallel.

In the power converter 100, the switch 8U is connected to the connection node 3U between the first switching element 1U and the second switching element 2U. The switch 8V is connected to the connection node 3V between the first switching element 1V and the second switching element 2V. The switch 8W is connected to the connection node 3W between the first switching element 1W and the second switching element 2W. In the following description, the third switching element 6 and fourth switching element 7 of the switch 8U will be hereinafter referred to as a "third switching element 6U" and a "fourth switching element 7U," respectively, the third switching element 6 and fourth switching element 7 of the switch 8V will be hereinafter referred to as a "third switching element 6V" and a "fourth switching element 7V," respectively, and the third switching element 6 and fourth switching element 7 of the switch 8W will be hereinafter referred to as a "third switching element 6W" and a "fourth switching element 7W," respectively, for the sake of convenience of description.

The plurality of switches 8 are controlled by the control system 50. In other words, the third switching element 6U, the fourth switching element 7U, the third switching element 6V, the fourth switching element 7V, the third switching element 6W, and the fourth switching element 7W are controlled by the control system 50.

Each of the plurality of resonant inductors L1 has a third end and a fourth end. The resonant inductor L1 has the third end thereof connected to the second end 82 of one of the plurality of switches 8. In the first embodiment, each of the plurality of resonant inductors L1 has the third end thereof connected to the second end 82 of a corresponding one of the plurality of switches 8. The respective fourth ends of the plurality of resonant inductors L1 are connected to the sixth end 154 of the regenerative capacitor 15.

The regenerative capacitor 15 is connected between the respective fourth ends of the plurality of resonant inductors L1 and the second DC terminal 32. The regenerative capacitor 15 may be, for example, a film capacitor.

In this embodiment, the control system 50 includes a controller 51, a plurality of (three) first gate driver circuits (not shown), a plurality of (three) second gate driver circuits (not shown), a plurality of (three) third gate driver circuits (not shown), and a plurality of (three) fourth gate driver circuits (not shown). The plurality of first gate driver circuits are provided one to one for the plurality of first switching elements 1. The plurality of second gate driver circuits are provided one to one for the plurality of second switching elements 2. The plurality of third gate driver circuits are provided one to one for the plurality of third switching elements 6. The plurality of fourth gate driver circuits are provided one to one for the plurality of fourth switching elements 7.

A first control signal SU1 is supplied from the controller 51 to the first switching element 1U via a first gate driver circuit corresponding to the first switching element 1U which belongs to the plurality of first gate driver circuits. A first control signal SV1 is supplied from the controller 51 to the first switching element 1V via a first gate driver circuit corresponding to the first switching element 1V which belongs to the plurality of first gate driver circuits. A first control signal SW1 is supplied from the controller 51 to the first switching element 1W via a first gate driver circuit corresponding to the first switching element 1W which belongs to the plurality of first gate driver circuits.

A first control signal SU2 is supplied from the controller 51 to the second switching element 2U via a second gate driver circuit corresponding to the second switching element 2U which belongs to the plurality of second gate driver circuits. A first control signal SV2 is supplied from the controller 51 to the second switching element 2V via a second gate driver circuit corresponding to the second switching element 2V which belongs to the plurality of second gate driver circuits. A first control signal SW2 is supplied from the controller 51 to the second switching element 2W via a second gate driver circuit corresponding to the second switching element 2W which belongs to the plurality of second gate driver circuits.

A second control signal SU6 is supplied from the controller 51 to the third switching element 6U via a third gate driver circuit corresponding to the third switching element 6U which belongs to the plurality of third gate driver circuits. A second control signal SV6 is supplied from the controller 51 to the third switching element 6V via a third gate driver circuit corresponding to the third switching element 6V which belongs to the plurality of third gate driver circuits. A second control signal SW6 is supplied from the controller 51 to the third switching element 6W via a third gate driver circuit corresponding to the third switching element 6W which belongs to the plurality of third gate driver circuits.

A second control signal SU7 is supplied from the controller 51 to the fourth switching element 7U via a fourth gate driver circuit corresponding to the fourth switching element 7U which belongs to the plurality of fourth gate driver circuits. A second control signal SV7 is supplied from the controller 51 to the fourth switching element 7V via a fourth gate driver circuit corresponding to the fourth switching element 7V which belongs to the plurality of fourth gate driver circuits. A second control signal SW7 is supplied from the controller 51 to the fourth switching element 7W via a fourth gate driver circuit corresponding to the fourth switching element 7W which belongs to the plurality of fourth gate driver circuits.

The controller 51 controls the plurality of first switching elements 1 and the plurality of second switching elements 2. The controller 51 includes a computer system. The computer system includes a processor and a memory as principal hardware components thereof. The computer system performs the functions of the controller 51 according to the present disclosure by making the processor execute a program stored in the memory of the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits such as an IC or an LSI include integrated circuits called a "system LSI," a "very-large-scale integrated circuit (VLSI)," and an "ultra-large-scale integrated circuit (ULSI)." Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

The controller 51 outputs the first control signals SU1, SV1, SW1 for controlling the ON/OFF states of the plurality of first switching elements 1U, 1V, 1W, respectively. Each of the first control signals SU1, SV1, SW1 may be, for example, a pulse width modulation (PWM) signal having, for example, a potential level which alternates between a first potential level (hereinafter referred to as a "low level") and a second potential level (hereinafter referred to as a "high level") higher than the first potential level. The first switching elements 1U, 1V, and 1W are respectively in ON state when the first control signals SU1, SV1, SW1 have high level and are respectively in OFF state when the first control signals SU1, SV1, SW1 have low level. In addition, the controller 51 also outputs the first control signals SU2, SV2, SW2 for controlling the ON/OFF states of the plurality of second switching elements 2U, 2V, 2W, respectively. Each of the first control signals SU2, SV2, SW2 may be, for example, a PWM signal having, for example, a potential level which alternates between the first potential level (hereinafter referred to as a "low level") and the second potential level (hereinafter referred to as a "high level") higher than the first potential level. The second switching elements 2U, 2V, 2W are respectively in ON state when the first control signals SU2, SV2, SW2 have high level and are respectively in OFF state when the first control signals SU2, SV2, SW2 have low level.

The controller 51 generates, using a carrier signal having a saw-tooth waveform, the first control signals SU1, SV1, SW1 for the plurality of first switching elements 1U, 1V, 1W, respectively, and the first control signals SU2, SV2, SW2 for the plurality of second switching elements 2U, 2V, 2W, respectively. More specifically, the controller 51 generates, based on at least the carrier signal and a U-phase voltage instruction, the first control signals SU1, SU2 to be applied to the first switching element 1U and the second switching element 2U, respectively. Also, the controller 51 generates, based on at least the carrier signal and a V-phase voltage instruction, the first control signals SV1, SV2 to be applied to the first switching element 1V and the second switching element 2V, respectively. Furthermore, the controller 51 generates, based on at least the carrier signal and a W-phase voltage instruction, the first control signals SW1, SW2 to be applied to the first switching element 1W and the second switching element 2W, respectively. The U-phase voltage instruction, the V-phase voltage instruction, and the W-phase voltage instruction may be, for example, sinusoidal wave signals, of which the phases are different from each other by 120 degrees and of which the value (voltage instruction value) changes with time. Note that the waveform of the carrier signal does not have to be the saw-tooth waveform but may also be a triangular waveform. Also, the U-phase voltage instruction, the V-phase voltage instruction, and the W-phase voltage instruction each have one cycle of the same length. In addition, one cycle of the U-phase voltage instruction, the V-phase voltage instruction, and the W-phase voltage instruction is longer than one cycle of the carrier signal.

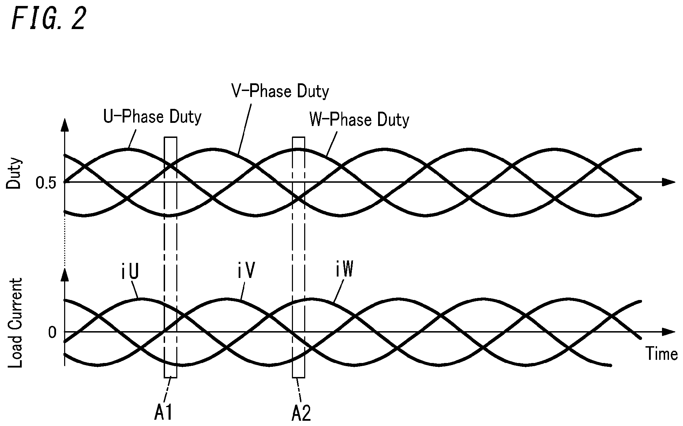

The duty of the first control signals SU1, SU2 to be applied from the controller 51 to the first switching element 1U and the second switching element 2U, respectively, varies in accordance with the U-phase voltage instruction. In FIG. 2, the duty of the first control signal SU1 is shown as a "U-phase duty." The controller 51 (refer to FIG. 1) generates the first control signal SU1 to be applied to the first switching element 1U by comparing the U-phase voltage instruction with the carrier signal. The controller 51 generates the first control signal SU2 to be applied to the second switching element 2U by inverting the first control signal SU1 to be applied to the first switching element 1U. In addition, to prevent the respective ON periods of the first switching element 1U and the second switching element 2U from overlapping with each other, the controller 51 sets a dead time period between a high-level period of the first control signal SU1 and a high-level period of the first control signal SU2.

The duty of the first control signals SV1, SV2 to be applied from the controller 51 to the first switching element 1V and the second switching element 2V, respectively, varies in accordance with the V-phase voltage instruction. In FIG. 2, the duty of the first control signal SV1 is shown as a "V-phase duty." The controller 51 (refer to FIG. 1) generates the first control signal SV1 to be applied to the first switching element 1V by comparing the V-phase voltage instruction with the carrier signal. The controller 51 also generates the first control signal SV2 to be applied to the second switching element 2V by inverting the first control signal SV1 to be applied to the first switching element 1V. In addition, to prevent the respective ON periods of the first switching element 1V and the second switching element 2V from overlapping with each other, the controller 51 sets a dead time period between a high-level period of the first control signal SV1 and a high-level period of the first control signal SV2.

The duty of the first control signals SW1, SW2 to be applied from the controller 51 to the first switching element 1W and the second switching element 2W, respectively, varies in accordance with the W-phase voltage instruction. In FIG. 2, the duty of the first control signal SW1 is shown as a "W-phase duty." The controller 51 (refer to FIG. 1) generates the first control signal SW1 to be applied to the first switching element 1W by comparing the W-phase voltage instruction with the carrier signal. The controller 51 generates the first control signal SW2 to be applied to the second switching element 2W by inverting the first control signal SW1 to be applied to the first switching element 1W. In addition, to prevent the respective ON periods of the first switching element 1W and the second switching element 2W from overlapping with each other, the controller 51 sets a dead time period between a high-level period of the first control signal SW1 and a high-level period of the first control signal SW2.

The U-phase voltage instruction, the V-phase voltage instruction, and the W-phase voltage instruction may be, for example, sinusoidal wave signals, of which the phases are different from each other by 120 degrees and of which the value changes with time. Thus, the respective duties (i.e., U-, V-, and W-phase duties) of the first control signals SU1, SV1, and SW1 change in the form of sinusoidal waves, of which the phases are different from each other by 120 degrees, as shown in FIG. 2, for example. In the same way, the respective duties of the first control signals SU2, SV2, and SW2 also change in the form of sinusoidal waves, of which the phases are different from each other by 120 degrees.

The controller 51 generates the respective first control signals SU1, SU2, SV1, SV2, SW1, and SW2 based on the carrier signal, the respective voltage instructions, and information about the state of the AC load RA1. For example, if the AC load RA1 is a three-phase servo motor, the information about the state of the AC load RA1 may include, for example, detection values provided by a plurality of current sensors for respectively detecting output currents (hereinafter also referred to as "load currents") iU, iV, and iW flowing respectively through the U-, V-, and W-phases of the AC load RA1.

The plurality of switches 8, the resonant inductors L1, the plurality of resonant capacitors 9, and the regenerative capacitor 15 are provided to make zero-voltage soft switching of the plurality of first switching elements 1 and the plurality of second switching elements 2.

If the third switching element 6U is in ON state and the fourth switching element 7U is in OFF state, the switch 8U allows a charging current which flows through the regenerative capacitor 15, the resonant inductor L1, the switch 8U, and the resonant capacitor 9U in this order to pass therethrough. The charging current is a current for charging the resonant capacitor 9U with electricity. On the other hand, if the third switching element 6U is in OFF state and the fourth switching element 7U is in ON state, the switch 8U allows a discharging current which flows through the resonant capacitor 9U, the switch 8U, the resonant inductor L1, and the regenerative capacitor 15 in this order to pass therethrough. The discharging current is a current for discharging electricity from the resonant capacitor 9U.

If the third switching element 6V is in ON state and the fourth switching element 7V is in OFF state, the switch 8V allows a charging current which flows through the regenerative capacitor 15, the resonant inductor L1, the switch 8V, and the resonant capacitor 9V in this order to pass therethrough. The charging current is a current for charging the resonant capacitor 9V with electricity. On the other hand, if the third switching element 6V is in OFF state and the fourth switching element 7V is in ON state, the switch 8V allows a discharging current which flows through the resonant capacitor 9V, the switch 8V, the resonant inductor L1, and the regenerative capacitor 15 in this order to pass therethrough. The discharging current is a current for discharging electricity from the resonant capacitor 9V.

If the third switching element 6W is in ON state and the fourth switching element 7W is in OFF state, the switch 8W allows a charging current which flows through the regenerative capacitor 15, the resonant inductor L1, the switch 8W, and the resonant capacitor 9W in this order to pass therethrough. The charging current is a current for charging the resonant capacitor 9W with electricity. On the other hand, if the third switching element 6W is in OFF state and the fourth switching element 7W is in ON state, the switch 8W allows a discharging current which flows through the resonant capacitor 9W, the switch 8W, the resonant inductor L1, and the regenerative capacitor 15 in this order to pass therethrough. The discharging current is a current for discharging electricity from the resonant capacitor 9W.

As used herein, the "dead time period" mentioned above refers to a period which is set, with respect to each of the plurality of switching circuits 10, between the high-level period of the first control signal for the first switching element 1 and the high-level period of the first control signal for the second switching element 2. In the dead time period, the first control signal for the first switching element 1 and the first control signal for the second switching element 2 both have the low level to prevent the respective ON periods of the first switching element 1 and the second switching element 2 from overlapping with each other (i.e., so that there are no periods in which the first switching element 1 and the second switching element 2 are both in ON state). In this embodiment, the length of a resonant half cycle is designed for each of the plurality of switches 8 according to the length of the dead time period for each of the plurality of switching circuits 10. The resonant half cycle is one half of a resonant cycle, which is the reciprocal of the resonant frequency of a resonant circuit including one switch 8, one resonant inductor L1, and one resonant capacitor 9. Thus, if the inductance of the resonant inductor L1 is L and the capacitance of the resonant capacitor 9 is C, then the resonant half cycle is π × (L▪C)^{1/2}. The length of the resonant half cycle is set to be equal to the length of the dead time period, for example.

The length of the resonant half cycle of a resonant circuit including the resonant inductor L1 and the resonant capacitor 9U is set to be equal to, for example, the length of the dead time period provided between the high-level period of the first control signal SU1 and the high-level period of the first control signal SU2. The length of the resonant half cycle of a resonant circuit including the resonant inductor L1 and the resonant capacitor 9V is set to be equal to, for example, the length of the dead time period provided between the high-level period of the first control signal SV1 and the high-level period of the first control signal SV2. The length of the resonant half cycle of a resonant circuit including the resonant inductor L1 and the resonant capacitor 9W is set to be equal to, for example, the length of the dead time period provided between the high-level period of the first control signal SW1 and the high-level period of the first control signal SW2.

Supposing the resonant cycle is Tres, Tres/2 which is a resonant half cycle is the length of the dead time period. It is preferable that the end time of the resonant half cycle be synchronous with the end time of the dead time period for a switching circuit 10 corresponding to the switch 8.

The resonant half cycle has such a length according to an ideal design. Alternatively, the length of the resonant half cycle may also be equal to or greater than 90% and equal to or less than 110% of the length of the dead time period. That is to say, the resonant half cycle and the dead time period may have mutually different lengths.

Each of the plurality of first clamping diodes 13 is provided one to one for a corresponding one of the plurality of resonant inductors L1. The first clamping diode 13 has its anode connected to the third end of its corresponding resonant inductor L1 and has its cathode connected to the first DC terminal 31. Each of the plurality of second clamping diodes 14 is provided one to one for a corresponding one of the plurality of resonant inductors L1. The second clamping diode 14 has its cathode connected to the third end of its corresponding resonant inductor L1 and has its anode connected to the second DC terminal 32.

In the first embodiment, the high-level period of the second control signal for each of the plurality of switches 8 is longer than the dead time period.

### (3) Operation of power converter

In the following description, as for a current iL1 flowing through the resonant inductor L1, if the current iL1 flows in the direction indicated by the arrow shown in FIG. 1, then the polarity of the current iL1 is supposed to be positive. On the other hand, if the current iL1 flows in the direction opposite from the one indicated by the arrow shown in FIG. 1, then the polarity of the current iL1 is supposed to be negative. In addition, in the following description, as for each of the load currents iU, iV, and iW respectively flowing through the U-, V-, and W-phases of the AC load RA1, if the load current iU, iV, iW flows in the direction indicated by a corresponding one of the arrows shown in FIG. 1, then the polarity of the load current iU, iV, iW is supposed to be positive. On the other hand, if the load current iU, iV, iW flows in the opposite direction from the one indicated by the arrow shown in FIG. 1, then the polarity of the load current iU, iV, iW is supposed to be negative. Furthermore, as for each of currents i9U, i9V, and i9W flowing through the resonant capacitors 9U, 9V, and 9W, respectively, if the current i9U, i9V, i9W flows in the direction indicated by a corresponding one of the arrows shown in FIG. 1, then the polarity of the current i9U, i9V, i9W is supposed to be positive. On the other hand, if the current i9U, i9V, i9W flows in the direction opposite from the one indicated by the arrow shown in FIG. 1, then the polarity of the current i9U, i9V, i9W is supposed to be negative. Thus, in the case of the discharging operation of discharging electricity from the resonant capacitor 9U, 9V, 9W, the polarity of the current i9U, i9V, i9W is positive. On the other hand, in the case of the charging operation of charging the resonant capacitor 9U, 9V, 9W with electricity, the polarity of the current i9U, i9V, i9W is negative.

In the following description, the switching element (which is either the first switching element 1 or the second switching element 2) to be turned ON in each of the plurality of switching circuits 10 will be hereinafter sometimes referred to as a "target switching element."

The control system 50 may perform a first control operation and a second control operation when changing the first control signal for the target switching element (which is either the first switching element 1 or the second switching element 2) to be turned ON in each of the plurality of switching circuits 10 from low level to high level.

When performing the first control operation, the control system 50 causes, with respect to each of the plurality of switching circuits 10, at least a part of the high-level period of the second control signal for one switch 8 corresponding to any one of the plurality of switching circuits 10 which belongs to the plurality of switches 8 to overlap with the dead time period provided between the high-level period of the first control signal for the first switching element 1 thereof and the high-level period of the first control signal for the second switching element 2 thereof.

When performing the second control operation, the control system 50 causes a part of the high-level period of the second control signal to overlap with a part of the high-level period of the first control signal for the target switching element by shifting the high-level period of the second control signal to make the overlap period between the high-level period of the second control signal to be applied to each of the plurality of switches 8 and the dead time period shorter than in the case of the first control operation.

### (3.1) First control operation

### (3.1.1) If target switching element is first switching element

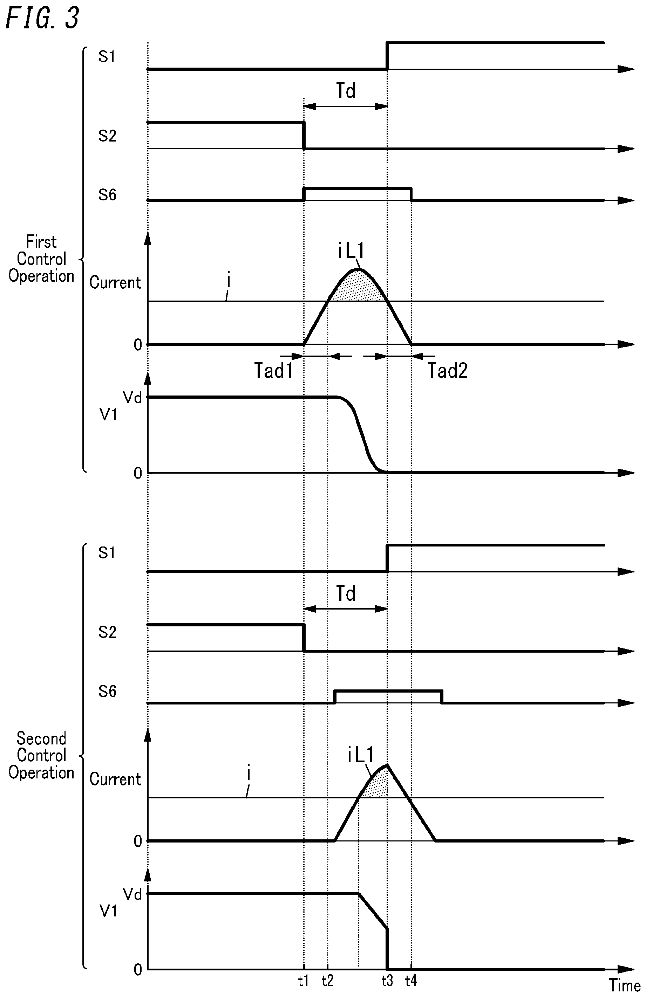

In FIG. 3, a first control signal to be applied from the control system 50 to the first switching element 1 of a randomly selected switching circuit 10 including the target switching element is shown as a first control signal S1 and a first control signal to be applied from the control system 50 to the second switching element 2 is shown as a first control signal S2. Also, in FIG. 3, the dead time period provided between the high-level period of the first control signal S1 applied from the control system 50 to the first switching element 1 and the high-level period of the first control signal S2 to be applied from the control system 50 to the second switching element 2 is shown as a dead time period Td. Furthermore, in FIG. 3, the second control signal to be applied from the control system 50 to the third switching element 6 of the switch 8 corresponding to a randomly selected switching circuit 10 including the target switching element is shown as a second control signal S6 and a current iL1 flowing through the resonant inductor L1 connected to the switch 8 is also shown. Furthermore, in FIG. 3, a current flowing through the AC terminal 41 connected to the connection node 3 of the randomly selected switching circuit 10 including the target switching element is shown as a load current i. Furthermore, in FIG. 3, the voltage across the first switching element 1 of the randomly selected switching circuit 10 including the target switching element is shown as voltage V1. Furthermore, in FIG. 3, the voltage value of the DC power supply E1 is shown as Vd. In the example shown in FIG. 3, the beginning time and end time of the dead time period Td are a time t1 and a time t3, respectively. Note that a timing chart for one cycle of the carrier signal is shown in FIG. 3.

In the example shown in FIG. 3, the polarity of the load current i flowing through the AC terminal 41 connected to the target switching element is positive.

When performing the first control operation, the control system 50 causes a part of the high-level period of the second control signal S6 for the third switching element 6 to overlap with the dead time period Td.

If the target switching element is a target first switching element 1, the voltage V1 across the first switching element 1 goes zero at the end time t3 of the dead time period Td just before the high-level period of the first control signal S1. Thus, when the first control signal S1 changes from low level to high level at the time t3, the first switching element 1 is subjected to zero-voltage soft switching. In the example shown in FIG. 3, the current iL1 starts flowing through the resonant inductor L1 at the beginning time t1 of the high-level period of the second control signal SU6, comes to have the same value as the load current i at a time t2 when a first predetermined amount of time Tad1 has passed since the time t1, comes to have the same value as the load current i at the end time t3 of the dead time period Td, and goes zero at a time t4 when a second predetermined amount of time Tad2, which is as long as the first predetermined amount of time Tad1, has passed since the time t3. The first predetermined amount of time Tad1 is obtained by the control system 50 by the equation: Tad1 = i × (L/V15) using either the detection result of the load currents i by a current sensor or a signal processing value thereof, or an estimated value of the load current i, the inductance L of the resonant inductor L1 that has been stored in advance, and the detection result of the voltage V15 at the regenerative capacitor 15 (i.e., a potential V15 at the fourth end of the regenerative capacitor 15), for example,. In the control system 50, at a time t1 when the first control signal S2 changes from high level to low level, the second control signal S6 changes from low level to high level. At the time t4 when the combined period of the dead time period Td and the second predetermined amount of time Tad2 has passed, the second control signal S6 changes from high level to low level. The current iL1 flowing from the time t2 through the time t3 is a resonant current flowing from the regenerative capacitor 15 through the resonant capacitor 9U via the resonant inductor L1 (i.e., a charging current for the resonant capacitor 9U). As for the current iL1, the current iL1 satisfies iL1 ≥ i from the time t2, and therefore, the current iL1 in the dotted hatched part of the current waveform shown as the fourth waveform from the top of FIG. 3 flows into the resonant capacitor 9 to produce LC resonance. From the end time t3 of the dead time period Td and on, the current iL1 will be regenerated to the power converter circuit 11 via the first clamping diode 13 directly connected to the resonant inductor L1.

When performing the first control operation, the control system 50 causes a part of the high-level period of the second control signal S6 for the third switching element 6 to overlap with the dead time period Td. This turns the third switching element 6 ON in the dead time period Td to produce resonance between the resonant inductor L1 connected to the target first switching element 1 and the resonant capacitor 9 and thereby charge the resonant capacitor 9 with electric charges supplied from the regenerative capacitor 15. As a result, the voltage V1 across the target first switching element 1 goes zero. This allows the power converter 100 to make zero-voltage soft switching of the target first switching element 1.

### (3.1.2) If target switching element is second switching element

When performing the first control operation, the control system 50 causes a part of the high-level period of the second control signal for the fourth switching element 7 to overlap with the dead time period Td. This turns the fourth switching element 7 ON in the dead time period Td to produce resonance between the resonant inductor L1 connected to the target second switching element 2 and the resonant capacitor 9 and thereby charge the regenerative capacitor 15 with electricity discharged from the resonant capacitor 9. As a result, the voltage across the target second switching element 2 goes zero. This allows the power converter 100 to make zero-voltage soft switching of the target second switching element 2. From the end time of the dead time period Td and on, the current iL1 will be regenerated to the power converter circuit 11 via the second clamping diode 14 directly connected to the resonant inductor L1.

### (3.2) Second control operation

### (3.2.1) If target switching element is first switching element

When performing the second control operation, the control system 50 causes a part of the high-level period of the second control signal S6 to overlap with a part of the high-level period of the first control signal S1 for the target first switching element 1 by shifting the high-level period of the second control signal S6 to make the overlap period between the high-level period of the second control signal S6 to be applied to the third switching element 6 and the dead time period Td shorter than in the case of the first control operation as shown in FIG. 3, for example. In this manner, the control system 50 stops performing zero-voltage soft switching on the target first switching element 1. As used herein, the phrase "to stop performing zero-voltage soft switching" means switching (i.e., turning ON), without making zero-voltage soft switching, the target first switching element 1 in a shorter time than when performing zero-voltage soft switching in the case of the first control operation. In this embodiment, after shifting, a part of the high-level period of the second control signal S6 overlaps with a part of the high-level period of the first control signal S1 for the target first switching element 1, while the rest of the high-level period of the second control signal S6 overlaps with a part of the dead time period Td. This makes the voltage V1 across the target first switching element 1 when the target first switching element 1 turns ON lower than the voltage value Vd of the DC power supply E1.

### (3.2.2) If target switching element is second switching element

When performing the second control operation, the control system 50 causes a part of the high-level period of the second control signal to overlap with a part of the high-level period of the first control signal for the target second switching element 2 by shifting the high-level period of the second control signal to make the overlap period between the high-level period of the second control signal to be applied to the fourth switching element 7 and the dead time period Td shorter than in the case of the first control operation. In this manner, the control system 50 stops performing zero-voltage soft switching on the target second switching element 2. As used herein, the phrase "to stop performing zero-voltage soft switching" means switching (i.e., turning ON), without making zero-voltage soft switching, the target second switching element 2 in a shorter time than when performing zero-voltage soft switching in the case of the first control operation. In this embodiment, after shifting, a part of the high-level period of the second control signal overlaps with a part of the high-level period of the first control signal for the target second switching element 2, while the rest of the high-level period of the second control signal overlaps with a part of the dead time period Td. This makes the voltage across the target second switching element 2 when the target second switching element 2 turns ON lower than the voltage value Vd of the DC power supply E1.

### (4) Advantages

In the power converter 100 according to the first embodiment, the control system 50 may perform a first control operation and a second control operation when changing, in each of the plurality of switching circuits 10, the first control signal for a target switching element, from the low level to the high level. The target switching element is one of the first and second switching elements 1, 2 that is going to be turned ON in the switching circuit 10. When performing the first control operation, the control system 50 allows, with respect to each of the plurality of switching circuits 10, at least a part of a high-level period of the second control signal for one of the plurality of switches 8 which corresponds to the switching circuit 10, to overlap with a dead time period Td provided between a high-level period of the first control signal S1 for the first switching element 1 and a high-level period of the first control signal S2 for the second switching element 2. When performing the second control operation, the control system 50 allows at least a part of the high-level period of the second control signal to overlap with a part of the high-level period of the first control signal for the target switching element by shifting the high-level period of the second control signal to shorten an overlap period between the high-level period of the second control signal to be applied to each of the plurality of switches 8 and the dead time period Td compared to a situation where the first control operation is performed.

This configuration allows for stopping performing zero-voltage soft switching without making pulse width modulation of the second control signal for each of the plurality of switches 8 provided for the purpose of making zero-voltage soft switching.

Alternatively, the power converter 100 may also be configured to stop performing zero-voltage soft switching, for example, when the controller 51 having the ability to detect failures of the power converter circuit 11 detects any failure. Still alternatively, in the power converter 100, the controller 51 may also be configured to stop performing zero-voltage soft switching on at least one target switching element out of the plurality of first switching elements 1 and the plurality of second switching elements 2 in accordance with a command signal supplied from an external device (high-order device). Yet alternatively, the power converter 100 may also be configured to perform the second control operation to improve the efficiency.

### (Second embodiment)

### (1) Configuration

A power converter 100 according to a second embodiment has the same configuration as the power converter 100 according to the first embodiment (refer to FIG. 1), and therefore, illustration and description thereof will be omitted herein.

### (2) Operation

The power converter 100 according to the second embodiment operates in substantially the same way as the power converter 100 according to the first embodiment, except that the control system 50 performs a second control operation in a different manner.

### (2.1) First control operation

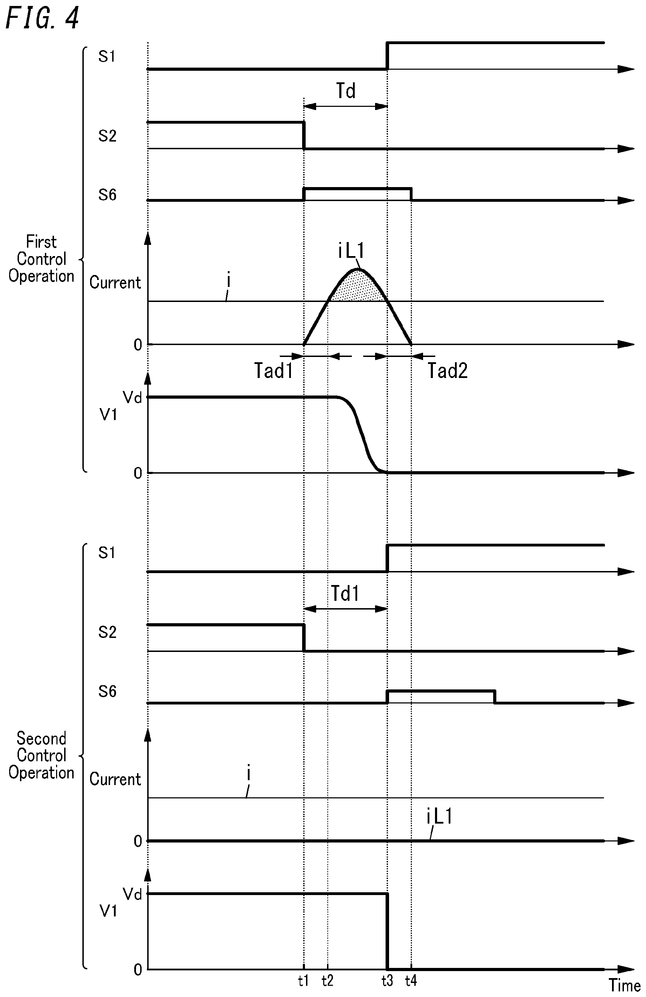

The first control operation (refer to FIG. 4, for example) performed by the control system 50 is the same as the first control operation (refer to FIG. 3, for example) performed by the control system 50 according to the first embodiment.

### (2.2) Second control operation

When performing the second control operation, the control system 50 allows the entire high-level period of the second control signal to overlap with a part of the high-level period of the first control signal for the target switching element by shifting the high-level period of the second control signal to shorten an overlap period between the high-level period of the second control signal to be applied to each of the plurality of switches 8 and the dead time period compared to a situation where the first control operation is performed.

### (2.2.1) If target switching element is first switching element

When performing the second control operation, the control system 50 causes the entire high-level period of the second control signal S6 to overlap with a part of the high-level period of the first control signal S1 for the target first switching element 1 by shifting the high-level period of the second control signal S6 to make the overlap period between the high-level period of the second control signal S6 to be applied to the third switching element 6 and the dead time period Td shorter than in the case of the first control operation as shown in FIG. 4, for example. In this manner, the control system 50 stops performing zero-voltage soft switching on the target first switching element 1. As used herein, the phrase "to stop performing zero-voltage soft switching" means switching (i.e., turning ON), without making zero-voltage soft switching, the target first switching element 1 in a shorter time than when performing zero-voltage soft switching in the case of the first control operation. In this embodiment, after shifting, the entire high-level period of the second control signal S6 overlaps with a part of the high-level period of the first control signal S1 for the target first switching element 1. Thus, no current iL1 flows through the resonant inductor L1 (i.e., the current value of the current iL1 is zero), the resonant capacitor 9 is not charged, and the target first switching element 1 is hard-switched. Note that although the beginning time of the high-level period of the second control signal S6 is simultaneous with the beginning time t3 of the high-level period of the first control signal S1 in the example shown in FIG. 4, the beginning time of the high-level period of the second control signal S6 may also be later than the time t3.

### (2.2.2) If target switching element is second switching element

When performing the second control operation, the control system 50 causes the entire high-level period of the second control signal to overlap with a part of the high-level period of the first control signal for the target second switching element 2 by shifting the high-level period of the second control signal to make the overlap period between the high-level period of the second control signal to be applied to the fourth switching element 7 and the dead time period Td shorter than in the case of the first control operation. In this manner, the control system 50 stops performing zero-voltage soft switching on the target second switching element 2. As used herein, the phrase "to stop performing zero-voltage soft switching" means switching (i.e., turning ON), without making zero-voltage soft switching, the target second switching element 2 in a shorter time than when performing zero-voltage soft switching in the case of the first control operation. In this embodiment, after shifting, the entire high-level period of the second control signal overlaps with a part of the high-level period of the first control signal for the target second switching element 2. Thus, no current iL1 flows through the resonant inductor L1 (i.e., the current value of the current iL1 is zero), electricity is not discharged from the resonant capacitor 9, and the target second switching element 2 is hard-switched.

### (3) Advantages

The power converter 100 according to the second embodiment, as well as the power converter 100 according to the first embodiment, also allows for stopping performing zero-voltage soft switching without making pulse width modulation of the second control signal for each of the plurality of switches 8 provided for the purpose of making zero-voltage soft switching.

### (Third embodiment)

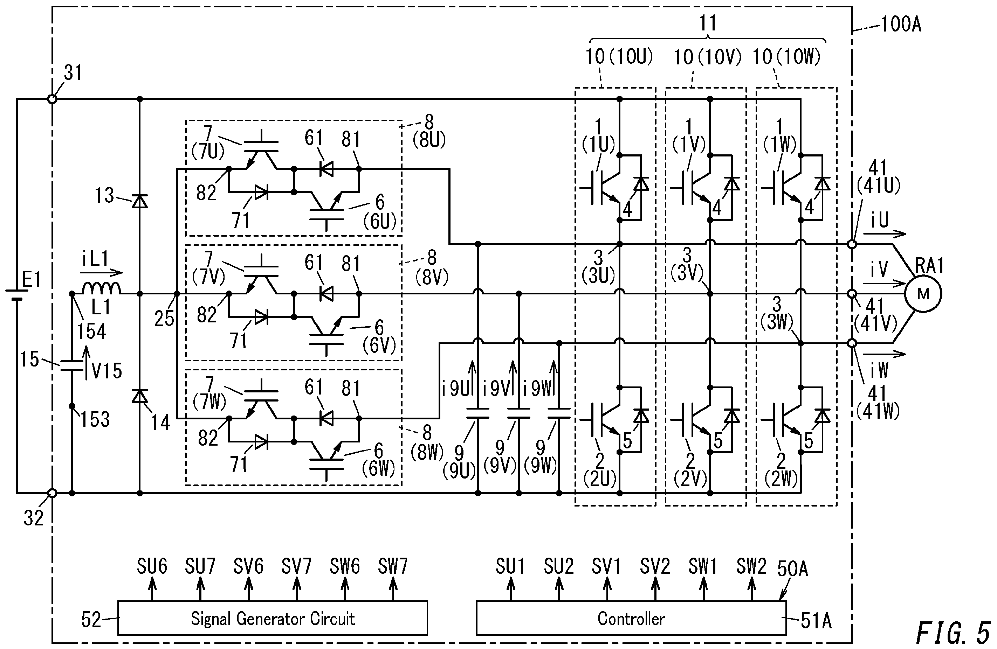

A power converter 100A according to a third embodiment will be described with reference to FIGS. 5-14. In the following description, any constituent element of the power converter 100A according to the third embodiment, having the same function as a counterpart of the power converter 100 according to the first embodiment (refer to FIG. 1) described above, will be designated by the same reference numeral as that counterpart's, and description thereof will be omitted herein.

### (1) Configuration

As shown in FIG. 5, the power converter 100A includes only one resonant inductor L1, which is a difference from the power converter 100 (refer to FIG. 1) according to the first embodiment. That is to say, in this embodiment, the same resonant inductor L1 is used in common by three resonant circuits. In this embodiment, the third end of the resonant inductor L1 is connected to a common connection node 25 to which respective second ends 82 of the plurality of switches 8 are connected.

In addition, the power converter 100A includes a control system 50A instead of the control system 50 of the power converter 100 (refer to FIG. 1), which is another difference from the power converter 100.

The control system 50A includes a controller 51A and a signal generator circuit 52. The controller 51A applies a first control signal to each of the plurality of first switching elements 1 and the plurality of second switching elements 2. The signal generator circuit 52 applies a second control signal to each of the plurality of switches 8.

In the power converter 100A, the plurality of first switching elements 1 and the plurality of second switching elements 2 are controlled by the controller 51A. The control terminal of each of the plurality of first switching elements 1 is connected to the controller 51A via a corresponding one of first gate driver circuits. The control terminal of each of the plurality of second switching elements 2 is connected to the controller 51A via a corresponding one of second gate driver circuits.

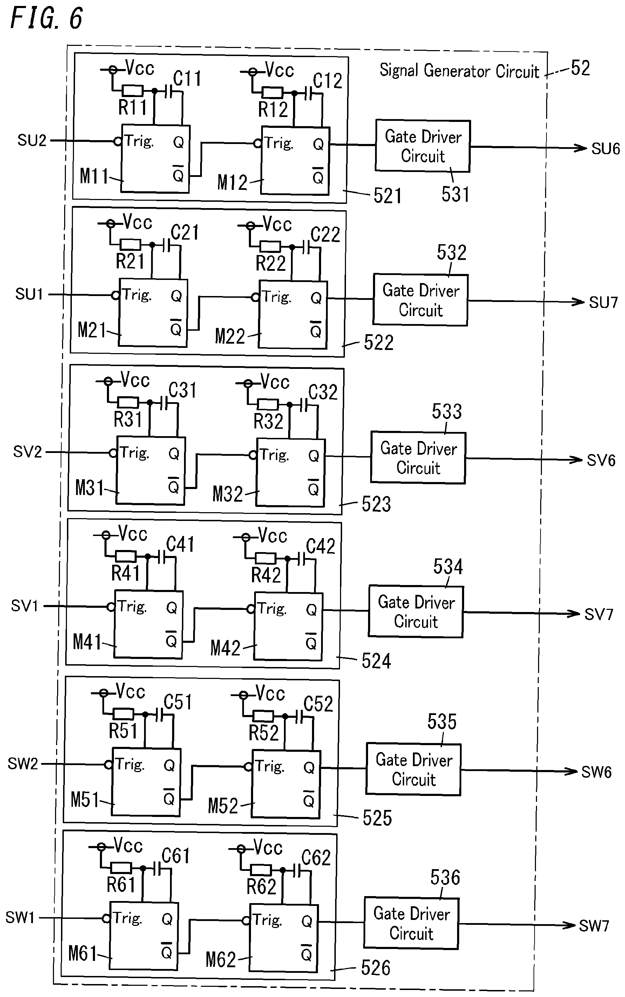

In the power converter 100A, the plurality of switches 8 are controlled by the signal generator circuit 52. In other words, the third switching element 6U, the fourth switching element 7U, the third switching element 6V, the fourth switching element 7V, the third switching element 6W, and the fourth switching element 7W are controlled by the signal generator circuit 52. The respective control terminals of the plurality of third switching elements 6 and the plurality of fourth switching elements 7 are connected to the signal generator circuit 52 (refer to FIG. 6).

The controller 51A controls the plurality of first switching elements 1 and the plurality of second switching elements 2. The controller 51A includes a computer system. The computer system includes a processor and a memory as principal hardware components thereof. The computer system performs the functions of the controller 51A according to the present disclosure by making the processor execute a program stored in the memory of the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits such as an IC or an LSI include integrated circuits called a "system LSI," a "very-large-scale integrated circuit (VLSI)," and an "ultra-large-scale integrated circuit (ULSI)." Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

In this embodiment, the controller 51A outputs the first control signals SU1, SV1, SW1 for controlling the ON/OFF states of the plurality of first switching elements 1U, 1V, 1W, respectively. In addition, the controller 51A also outputs the first control signals SU2, SV2, SW2 for controlling the ON/OFF states of the plurality of second switching elements 2U, 2V, 2W, respectively.

The controller 51A generates, using a carrier signal having a saw-tooth waveform, the first control signals SU1, SV1, SW1 for the plurality of first switching elements 1U, 1V, 1W, respectively, and the first control signals SU2, SV2, SW2 for the plurality of second switching elements 2U, 2V, 2W, respectively. More specifically, the controller 51A generates, based on at least the carrier signal and a U-phase voltage instruction, the first control signals SU1, SU2 to be applied to the first switching element 1U and the second switching element 2U, respectively. Also, the controller 51A generates, based on at least the carrier signal and a V-phase voltage instruction, the first control signals SV1, SV2 to be applied to the first switching element 1V and the second switching element 2V, respectively. Furthermore, the controller 51A generates, based on at least the carrier signal and a W-phase voltage instruction, the first control signals SW1, SW2 to be applied to the first switching element 1W and the second switching element 2W, respectively. The U-phase voltage instruction, the V-phase voltage instruction, and the W-phase voltage instruction may be, for example, sinusoidal wave signals, of which the phases are different from each other by 120 degrees and of which the value (voltage instruction value) changes with time. Note that the waveform of the carrier signal does not have to be the saw-tooth waveform but may also be a triangular waveform. Also, the U-phase voltage instruction, the V-phase voltage instruction, and the W-phase voltage instruction each have one cycle of the same length. In addition, one cycle of the U-phase voltage instruction, the V-phase voltage instruction, and the W-phase voltage instruction is longer than one cycle of the carrier signal.

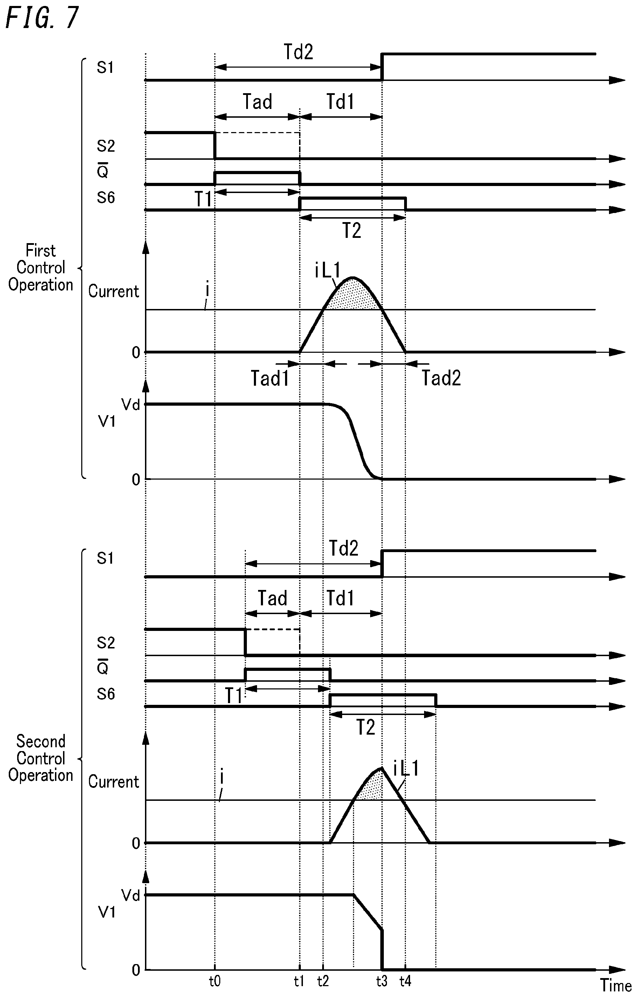

The duty of the first control signals SU1, SU2 to be applied from the controller 51A to the first switching element 1U and the second switching element 2U, respectively, varies in accordance with the U-phase voltage instruction. In FIG. 2, the duty of the first control signal SU1 is shown as a "U-phase duty." The controller 51A generates the first control signal SU1 to be applied to the first switching element 1U by comparing the U-phase voltage instruction with the carrier signal. The controller 51A generates the first control signal SU2 to be applied to the second switching element 2U by inverting the first control signal SU1 to be applied to the first switching element 1U. In addition, to prevent the respective ON periods of the first switching element 1U and the second switching element 2U from overlapping with each other, the controller 51A sets a first dead time period Td1 (refer to FIG. 7) between a high-level period of the first control signal SU1 and a high-level period of the first control signal SU2.

The duty of the first control signals SV1, SV2 to be applied from the controller 51A to the first switching element 1V and the second switching element 2V, respectively, varies in accordance with the V-phase voltage instruction. In FIG. 2, the duty of the first control signal SV1 is shown as a "V-phase duty." The controller 51A generates the first control signal SV1 to be applied to the first switching element 1V by comparing the V-phase voltage instruction with the carrier signal. The controller 51A also generates the first control signal SV2 to be applied to the second switching element 2V by inverting the first control signal SV1 to be applied to the first switching element 1V. In addition, to prevent the respective ON periods of the first switching element 1V and the second switching element 2V from overlapping with each other, the controller 51A sets a first dead time period Td1 (refer to FIG. 7) between a high-level period of the first control signal SV1 and a high-level period of the first control signal SV2.

The duty of the first control signals SW1 and SW2 to be applied from the controller 51A to the first switching element 1W and the second switching element 2W, respectively, varies in accordance with the W-phase voltage instruction. In FIG. 2, the duty of the first control signal SW1 is shown as a "W-phase duty." The controller 51A generates the first control signal SW1 to be applied to the first switching element 1W by comparing the W-phase voltage instruction with the carrier signal. The controller 51A generates the first control signal SW2 to be applied to the second switching element 2W by inverting the first control signal SW1 to be applied to the first switching element 1W. In addition, to prevent the respective ON periods of the first switching element 1W and the second switching element 2W from overlapping with each other, the controller 51A sets a dead time period Td1 (refer to FIG. 7) between a high-level period of the first control signal SW1 and a high-level period of the first control signal SW2.

The controller 51A generates the respective first control signals SU1, SU2, SV1, SV2, SW1, and SW2 based on the carrier signal, the respective voltage instructions, and information about the state of the AC load RA1. For example, if the AC load RA1 is a three-phase servo motor, the information about the state of the AC load RA1 may include, for example, detection values provided by a plurality of current sensors for respectively detecting output currents (hereinafter also referred to as "load currents") iU, iV, and iW flowing respectively through the U-, V-, and W-phases of the AC load RA1.

The plurality of switches 8, the resonant inductor L1, the plurality of resonant capacitors 9, and the regenerative capacitor 15 are provided to make zero-voltage soft switching of the plurality of first switching elements 1 and the plurality of second switching elements 2.

If the third switching element 6U is in ON state and the fourth switching element 7U is in OFF state, the switch 8U allows a charging current which flows through the regenerative capacitor 15, the resonant inductor L1, the switch 8U, and the resonant capacitor 9U in this order to pass therethrough. The charging current is a current for charging the resonant capacitor 9U with electricity. On the other hand, if the third switching element 6U is in OFF state and the fourth switching element 7U is in ON state, the switch 8U allows a discharging current which flows through the resonant capacitor 9U, the switch 8U, the resonant inductor L1, and the regenerative capacitor 15 in this order to pass therethrough. The discharging current is a current for discharging electricity from the resonant capacitor 9U.

If the third switching element 6V is in ON state and the fourth switching element 7V is in OFF state, the switch 8V allows a charging current which flows through the regenerative capacitor 15, the resonant inductor L1, the switch 8V, and the resonant capacitor 9V in this order to pass therethrough. The charging current is a current for charging the resonant capacitor 9V with electricity. On the other hand, if the third switching element 6V is in OFF state and the fourth switching element 7V is in ON state, the switch 8V allows a discharging current which flows through the resonant capacitor 9V, the switch 8V, the resonant inductor L1, and the regenerative capacitor 15 in this order to pass therethrough. The discharging current is a current for discharging electricity from the resonant capacitor 9V.

If the third switching element 6W is in ON state and the fourth switching element 7W is in OFF state, the switch 8W allows a charging current which flows through the regenerative capacitor 15, the resonant inductor L1, the switch 8W, and the resonant capacitor 9W in this order to pass therethrough. The charging current is a current for charging the resonant capacitor 9W with electricity. On the other hand, if the third switching element 6W is in OFF state and the fourth switching element 7W is in ON state, the switch 8W allows a discharging current which flows through the resonant capacitor 9W, the switch 8W, the resonant inductor L1, and the regenerative capacitor 15 in this order to pass therethrough. The discharging current is a current for discharging electricity from the resonant capacitor 9W.

In FIG. 7, a first control signal to be applied from the control system 50A to the first switching element 1 of a randomly selected switching circuit 10 including the target switching element is shown as a first control signal S1 and a first control signal to be applied from the control system 50 to the second switching element 2 is shown as a first control signal S2. Also, in FIG. 7, the second control signal to be applied from the control system 50 to the third switching element 6 of the switch 8 corresponding to a randomly selected switching circuit 10 including the target switching element is shown as a second control signal S6 and a current iL1 flowing through the resonant inductor L1 is also shown. Furthermore, in FIG. 7, a current flowing through the AC terminal 41 connected to the connection node 3 of the randomly selected switching circuit 10 including the target switching element is shown as a load current i. Furthermore, in FIG. 7, the voltage across the first switching element 1 of the randomly selected switching circuit 10 including the target switching element is shown as voltage V1. Furthermore, in FIG. 7, the voltage value of the DC power supply E1 is shown as Vd. Note that a timing chart for one cycle of the carrier signal is shown in FIG. 7.

In the example shown in FIG. 7, the polarity of the load current i flowing through the AC terminal 41 connected to the target switching element is positive.

The controller 51A sets, with respect to each of the plurality of switching circuits 10, a second dead time period Td2 as the dead time period provided between the high-level period of the first control signal S1 for the first switching element 1 and the high-level period of the first control signal S2 for the second switching element 2. The second dead time period Td2 is the sum of a first dead time period Td1, which has been set in advance to prevent the respective ON periods of the first switching element 1 and the second switching element 2 from overlapping with each other, and a predetermined amount of time (additional time Tad). The second dead time period Td2 includes the first dead time period Td1. The length of the second dead time period Td2 is equal to the sum of the length of the first dead time period Td1 and the predetermined amount of time (i.e., the total length calculated by adding together the length of the first dead time period Td1 and the predetermined amount of time). Stated from a different perspective, the controller 51A uses, as the dead time period, the second dead time period Td2 defined by extending the first dead time period Td1 by the predetermined amount of time.

As used herein, the first dead time period Td1 refers to a period which is set, with respect to each of the plurality of switching circuits 10, between the high-level period of the first control signal S1 for the first switching element 1 and the high-level period of the first control signal S2 for the second switching element 2. In the dead time period Td1, the first control signal S1 for the first switching element 1 and the first control signal S2 for the second switching element 2 both have the low level to prevent the respective ON periods of the first switching element 1 and the second switching element 2 from overlapping with each other (i.e., so that there are no periods in which the first switching element 1 and the second switching element 2 are both ON). In this embodiment, the length of a resonant half cycle is designed for each of the plurality of switches 8 according to the length of the first dead time period Td1 for each of the plurality of switching circuits 10. The resonant half cycle is one half of a resonant cycle, which is the reciprocal of the resonant frequency of a resonant circuit including one switch 8, the resonant inductor L1, and one resonant capacitor 9. Thus, if the inductance of the resonant inductor L1 is L and the capacitance of the resonant capacitor 9 is C, then the resonant half cycle is π × (L▪C)^{1/2}. The length of the resonant half cycle is set to be equal to the length of the first dead time period Td1, for example.

The length of the resonant half cycle of a resonant circuit including the resonant inductor L1 and the resonant capacitor 9 is set to be equal to, for example, the length of the first dead time period Td1 provided between the high-level period of the first control signal SU1 and the high-level period of the first control signal SU2. Supposing the resonant cycle is Tres, Tres/2 that is a resonant half cycle is the length of the first dead time period Td1. It is preferable that the end time of the resonant half cycle be synchronous with the end time of the first dead time period Td1 for a switching circuit 10 corresponding to the switch 8. In the example shown in FIG. 7, the beginning time and end time of the first dead time period Td1 are a time t1 and a time t3, respectively.

The length of the resonant half cycle described above is an exemplary value according to an ideal design. Alternatively, the length of the resonant half cycle may also be equal to or greater than 90% and equal to or less than 110% of the length of the first dead time period Td1. Alternatively, the resonant half cycle and the first dead time period Td1 may have mutually different lengths. FIG. 7 illustrates an example in which the resonant half cycle and the first dead time period Td1 have mutually different lengths.

The second dead time period Td2 is a period defined by extending the first dead time period Td1 by a predetermined amount of time. The predetermined amount of time may be, for example, an additional time Tad determined by the current value of the load current i, the inductance L of the resonant inductor L1, the voltage value of the regenerative capacitor 15, and the inductance L of the resonant inductor L1. The current value of the load current i may be, for example, either the result of detection of the load current by the current sensor or a signal processing value thereof or an estimated value of the load current i. In this case, as the detection result of the load current or the signal processing value thereof, either a detection value at a carrier cycle at which the additional time Tad is added to the first dead time period Td1 or a detection value at a timing closest to the carrier cycle may be used. Also, in this case, as the estimated value of the load current i, a value of the load current i estimated at the carrier cycle at which the additional time Tad is added to the first dead time period Td1 may be used, for example. As the inductance L of the resonant inductor L1, the value stored in advance by the controller 51A is used. The voltage value of the regenerative capacitor 15 is the detection value of the voltage V15 across the regenerative capacitor 15 (i.e., the potential V15 at the sixth end 154 of the regenerative capacitor 15). In the example shown in FIG. 7, the additional time Tad is a value calculated by the equation: Tad = i × (L/V15).

The length of the predetermined amount of time is an exemplary value according to an ideal design. Alternatively, the length of the predetermined amount of time may also be equal to or greater than 90% and equal to or less than 110% of the additional time Tad.

In this power converter 100A, the signal generator circuit 52 provided separately from the controller 51A controls the plurality of switches 8.

The signal generator circuit 52 generates second control signals SU6, SU7, SV6, SV7, SW6, and SW7 for use to control the ON/OFF states of the third switching element 6U, the fourth switching element 7U, the third switching element 6V, the fourth switching element 7V, the third switching element 6W, and the fourth switching element 7W and outputs the second control signals SU6, SU7, SV6, SV7, SW6, and SW7 to the respective gate terminals of the third switching element 6U, the fourth switching element 7U, the third switching element 6V, the fourth switching element 7V, the third switching element 6W, and the fourth switching element 7W.

The signal generator circuit 52 generates, with respect to each of the plurality of switches 8, the second control signal having a high-level period adapted to the second dead time period Td2 for a corresponding one of the plurality of switching circuits 10. The signal generator circuit 52 delays the beginning time of the high-level period of the second control signal with respect to each of the plurality of switches 8 for a prescribed amount of time T1 (refer to FIG. 7) from the beginning time of the second dead time period Td2 and delays the end time of the high-level period of the second control signal with respect to each of the plurality of switches 8 from the end time of the second dead time period Td2. The length (fixed length T2) of the high-level period of the second control signal with respect to each of the plurality of switches 8 is greater than the length of the first dead time period Td1.

The signal generator circuit 52 generates the second control signal for each of the plurality of switches 8 using either the first control signal for the first switching element 1 of a corresponding one of the plurality of switching circuits 10 or the first control signal for the second switching element 2 of the corresponding one of the plurality of switching circuits 10. The signal generator circuit 52 sets the length of the high-level period of the second control signal generated with respect to each of the plurality of switches 8 at the fixed length T2. The signal generator circuit 52 causes, with respect to each of the plurality of switches 8, the beginning timing of the high-level period with the fixed length T2 to follow the beginning timing of the second dead time period Td2 for a corresponding one of the plurality of switching circuits 10. In this embodiment, the signal generator circuit 52 includes a plurality of (e.g., six) logic circuits 521-526 and a plurality of (e.g., six) gate driver circuits 531-536 as shown in FIG. 6. In the signal generator circuit 52, the plurality of logic circuits 521-526 are provided one to one for the plurality of gate driver circuits 531-536.

The logic circuit 521 is configured to generate a second control signal SU6 using the first control signal SU2. The logic circuit 521 detects the fall of the first control signal SU2 for the second switching element 2U to generate a second control signal SU6 having a high-level period of the fixed length T2. The logic circuit 521 may include, for example, two multivibrators M11 and M12 which are connected to each other in series. Each of the two multivibrators M11 and M12 is a monostable multivibrator of an edge trigger type. In the logic circuit 521, an inverting output terminal (indicated by Q with an over bar in FIG. 6) of the multivibrator M11 on the first stage out of the two multivibrators M11 and M12 is connected to an inverting trigger terminal of the multivibrator M12 on the second stage. In the logic circuit 521, the prescribed time T1 is the length of a CR time constant determined by the capacitance of a capacitor C11 connected to the multivibrator M11 on the first stage and the resistance value of a resistor R11. Also, in the logic circuit 521, the fixed length T2 is the length of a CR time constant determined by the capacitance of a capacitor C12 connected to the multivibrator M12 on the second stage and the resistance value of a resistor R12. The logic circuit 521 receives the first control signal SU2 supplied from the controller 51A at the inverting trigger terminal of the multivibrator M11 on the first stage and outputs the second control signal SU6 through an output terminal Q of the multivibrator M12 on the second stage. The second control signal SU6 is passed to the third switching element 6U via the gate driver circuit 531.

The logic circuit 522 is configured to generate a second control signal SU7 using the first control signal SU1. The logic circuit 521 detects the fall of the first control signal SU1 for the first switching element 1U to generate a second control signal SU7 having a high-level period of the fixed length T2. The logic circuit 522 may include, for example, two multivibrators M21 and M22 which are connected to each other in series. Each of the two multivibrators M21 and M22 is a monostable multivibrator of an edge trigger type. In the logic circuit 522, an inverting output terminal (indicated by Q with an over bar in FIG. 6) of the multivibrator M21 on the first stage out of the two multivibrators M21 and M22 is connected to an inverting trigger terminal of the multivibrator M22 on the second stage. In the logic circuit 522, the prescribed time T1 is the length of a CR time constant determined by the capacitance of a capacitor C21 connected to the multivibrator M21 on the first stage and the resistance value of a resistor R21. Also, in the logic circuit 522, the fixed length T2 is the length of a CR time constant determined by the capacitance of a capacitor C22 connected to the multivibrator M22 on the second stage and the resistance value of a resistor R22. The logic circuit 522 receives the first control signal SU1 supplied from the controller 51A at the inverting trigger terminal of the multivibrator M21 on the first stage and outputs the second control signal SU7 through an output terminal Q of the multivibrator M22 on the second stage. The second control signal SU7 is passed to the fourth switching element 7U via the gate driver circuit 532.

The logic circuit 523 is configured to generate a second control signal SV6 using the first control signal SV2. The logic circuit 523 detects the fall of the first control signal SV2 for the second switching element 2V to generate a second control signal SV6 having a high-level period of the fixed length T2. The logic circuit 523 may include, for example, two multivibrators M31 and M32 which are connected to each other in series. Each of the two multivibrators M31 and M32 is a monostable multivibrator of an edge trigger type. In the logic circuit 523, an inverting output terminal (indicated by Q with an over bar in FIG. 6) of the multivibrator M31 on the first stage out of the two multivibrators M31 and M32 is connected to an inverting trigger terminal of the multivibrator M32 on the second stage. In the logic circuit 523, the prescribed time T1 is the length of a CR time constant determined by the capacitance of a capacitor C31 connected to the multivibrator M31 on the first stage and the resistance value of a resistor R31. Also, in the logic circuit 523, the fixed length T2 is the length of a CR time constant determined by the capacitance of a capacitor C32 connected to the multivibrator M32 on the second stage and the resistance value of a resistor R32. The logic circuit 523 receives the first control signal SV2 supplied from the controller 51A at the inverting trigger terminal of the multivibrator M31 on the first stage and outputs the second control signal SV6 through an output terminal Q of the multivibrator M32 on the second stage. The second control signal SV6 is passed to the third switching element 6V via the gate driver circuit 533.

The logic circuit 524 is configured to generate a second control signal SV7 using the first control signal SV1. The logic circuit 524 detects the fall of the first control signal SV1 for the first switching element 1V to generate a second control signal SV7 having a high-level period of the fixed length T2. The logic circuit 524 may include, for example, two multivibrators M41 and M42 which are connected to each other in series. Each of the two multivibrators M41 and M42 is a monostable multivibrator of an edge trigger type. In the logic circuit 524, an inverting output terminal (indicated by Q with an over bar in FIG. 6) of the multivibrator M41 on the first stage out of the two multivibrators M41 and M42 is connected to an inverting trigger terminal of the multivibrator M42 on the second stage. In the logic circuit 524, the prescribed time T1 is the length of a CR time constant determined by the capacitance of a capacitor C41 connected to the multivibrator M41 on the first stage and the resistance value of a resistor R41. Also, in the logic circuit 524, the fixed length T2 is the length of a CR time constant determined by the capacitance of a capacitor C42 connected to the multivibrator M42 on the second stage and the resistance value of a resistor R42. The logic circuit 524 receives the first control signal SV1 supplied from the controller 51A at the inverting trigger terminal of the multivibrator M41 on the first stage and outputs the second control signal SV7 through an output terminal Q of the multivibrator M42 on the second stage. The second control signal SV7 is passed to the fourth switching element 7V via the gate driver circuit 534.

The logic circuit 525 is configured to generate a second control signal SW6 using the first control signal SW2. The logic circuit 525 detects the fall of the first control signal SW2 for the second switching element 2W to generate a second control signal SW6 having a high-level period of the fixed length T2. The logic circuit 525 may include, for example, two multivibrators M51 and M52 which are connected to each other in series. Each of the two multivibrators M51 and M52 is a monostable multivibrator of an edge trigger type. In the logic circuit 525, an inverting output terminal (indicated by Q with an over bar in FIG. 6) of the multivibrator M51 on the first stage out of the two multivibrators M51 and M52 is connected to an inverting trigger terminal of the multivibrator M52 on the second stage. In the logic circuit 525, the prescribed time T1 is the length of a CR time constant determined by the capacitance of a capacitor C51 connected to the multivibrator M51 on the first stage and the resistance value of a resistor R51. Also, in the logic circuit 525, the fixed length T2 is the length of a CR time constant determined by the capacitance of a capacitor C52 connected to the multivibrator M52 on the second stage and the resistance value of a resistor R52. The logic circuit 525 receives the first control signal SW2 supplied from the controller 51A at the inverting trigger terminal of the multivibrator M51 on the first stage and outputs the second control signal SW6 through an output terminal of the multivibrator M52 on the second stage. The second control signal SW6 is passed to the third switching element 6W via the gate driver circuit 535.

The logic circuit 526 is configured to generate a second control signal SW7 using the first control signal SW1. The logic circuit 526 detects the fall of the first control signal SW1 for the first switching element 1W to generate a second control signal SW7 having a high-level period of the fixed length T2. The logic circuit 526 may include, for example, two multivibrators M61 and M62 which are connected to each other in series. Each of the two multivibrators M61 and M62 is a monostable multivibrator of an edge trigger type. In the logic circuit 526, an inverting output terminal (indicated by Q with an over bar in FIG. 6) of the multivibrator M61 on the first stage out of the two multivibrators M61 and M62 is connected to an inverting trigger terminal of the multivibrator M62 on the second stage. In the logic circuit 526, the prescribed time T1 is the length of a CR time constant determined by the capacitance of a capacitor C61 connected to the multivibrator M61 on the first stage and the resistance value of a resistor R61. Also, in the logic circuit 526, the fixed length T2 is the length of a CR time constant determined by the capacitance of a capacitor C62 connected to the multivibrator M62 on the second stage and the resistance value of a resistor R62. The logic circuit 526 receives the first control signal SW1 supplied from the controller 51A at the inverting trigger terminal of the multivibrator M61 on the first stage and outputs the second control signal SW7 through an inverting output terminal (indicated by Q with an over bar in FIG. 6) of the multivibrator M62 on the second stage. The second control signal SW7 is passed to the fourth switching element 7W via the gate driver circuit 536.

### (2) Operation

The power converter 100A according to the third embodiment operates in substantially the same way as the power converter 100 according to the first embodiment except that the control system 50A operates differently from the control system 50. Now, it will be described with reference to FIG. 7 how the power converter 100A operates. In FIG. 7, first control signals S1, S2, the output signal of the inverting output terminal (indicated by Q with an over bar in FIG. 6) of the multivibrator on the first stage, and a second control signal S6 are shown for a situation where the target switching element is a first switching element 1. In addition, in FIG. 7, also shown are a current iL1 flowing through the resonant inductor L1, a load current i, and a voltage V1 across the first switching element 1. Furthermore, the voltage value of the DC power supply E1 is designated by Vd.

### (2.1) First control operation

### (2.1.1) If target switching element is first switching element

In the case of the first control operation, the first control signal S2 falls from high level to low level at a time t0, the output signal supplied through the inverting output terminal of the multivibrator on the first stage falls from high level to low level at a time t1, the first control signal S1 changes from low level to high level at a time t3, and the second control signal S6 changes from high level to low level at a time t4, as shown in FIG. 7.

If the target switching element is the first switching element 1, the voltage across the second switching element 2 in the switching circuit 10 becomes Vd at a time t3 when the second dead time period Td2 ends just before the high-level period of the first control signal S1. On the other hand, the voltage V1 across the first switching element 1 goes zero at the time t3 when the second dead time period Td2 ends just before the high-level period of the first control signal S1. Thus, when the first control signal S1 changes from low level to high level at the time t3, the first switching element 1 is subjected to zero-voltage soft switching. In the example shown in FIG. 7, the current iL1 starts flowing through the resonant inductor L1 at the beginning time t1 of the high-level period of the second control signal SU6, comes to have the same value as the load current i at a time t2 when a first predetermined amount of time Tad1 has passed since the time t1, comes to have the same value as the load current i at the end time t3 of the second dead time period Td2, and goes zero at a time t4 when a second predetermined amount of time Tad2 has passed since the time t3. In the signal generator circuit 52, at the time t1 at which the prescribed amount of time T1 has passed since the time t0 when the first control signal S2 changed from high level to low level, the second control signal S6 changes from low level to high level. The current iL1 flowing from the time t2 through the time t3 is a resonant current flowing from the regenerative capacitor 15 through the resonant capacitor 9 via the resonant inductor L1 (i.e., a charging current for the resonant capacitor 9).

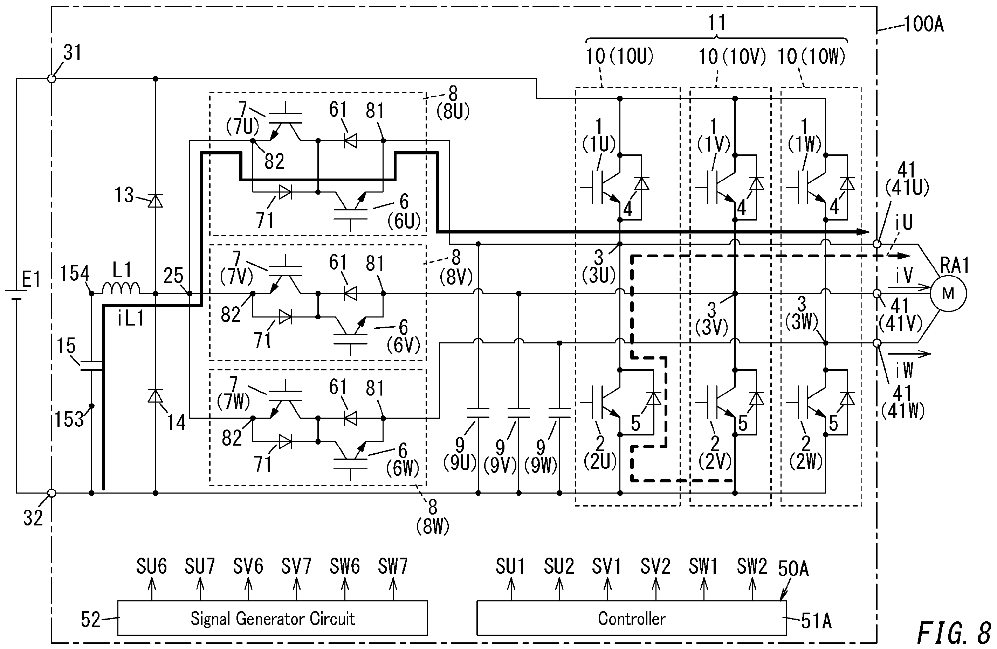

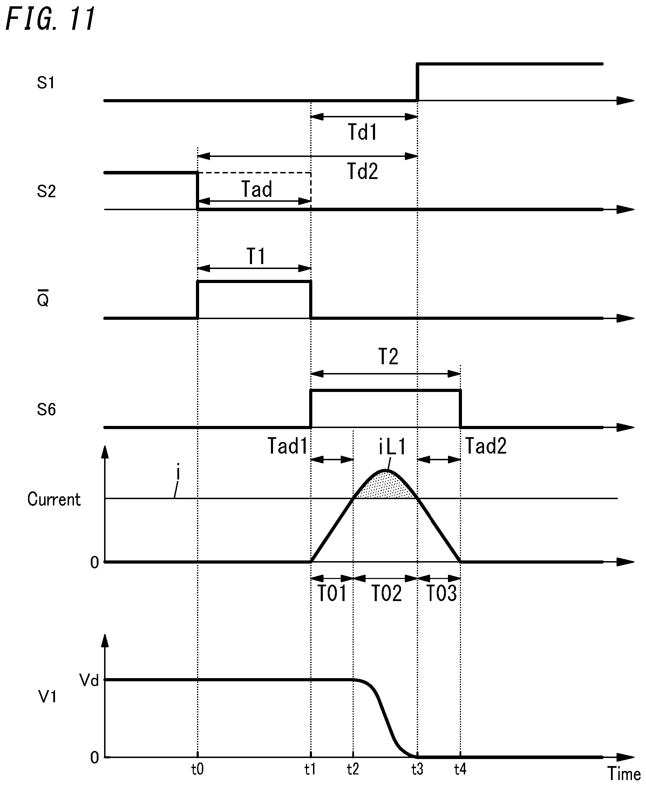

If the target first switching element 1 is the first switching element 1U, for example, each of the first switching element 1U, the second switching element 2U, and the fourth switching element 7U is in OFF state and the third switching element 6U is in ON state in a first period T01 (refer to FIG. 11). In the first period T01, the current iL1 flows along the path that passes through the regenerative capacitor 15, the resonant inductor L1, the diode 71, the third switching element 6U, and the AC terminal 41U in this order as indicated by the bold line in FIG. 8. In addition, in the first period T01, the load current iU flows along the path that passes through the second diode 5 connected to the second switching element 2U in antiparallel, the AC terminal 41U, and the AC load RA1 in this order as indicated by the bold dashed line in FIG. 8.

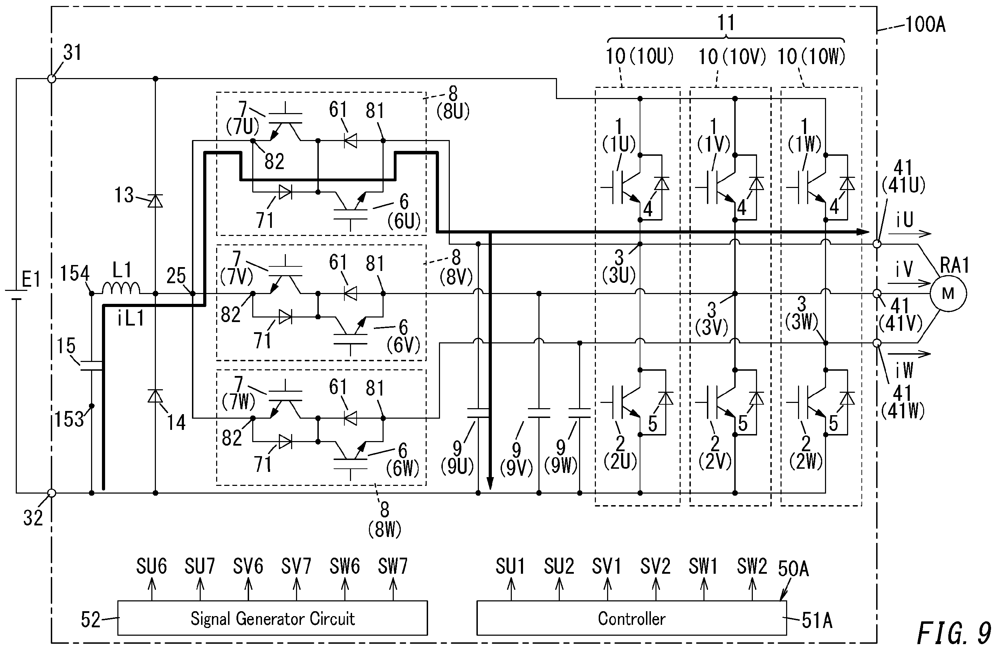

In a second period T02 (refer to FIG. 11), each of the first switching element 1U, the second switching element 2U, and the fourth switching element 7U is in OFF state, and the third switching element 6U is in ON state. In the second period T02, the current iL1 flows along the path that passes through the regenerative capacitor 15, the resonant inductor L1, the diode 71, and the third switching element 6U in this order and branches into a current flowing toward the AC terminal 41U and a current (resonant current) flowing toward the resonant capacitor 9U as indicated by the bold line in FIG. 9. In the second period T02, the resonant capacitor 9U is charged with the current flowing through the resonant capacitor 9.

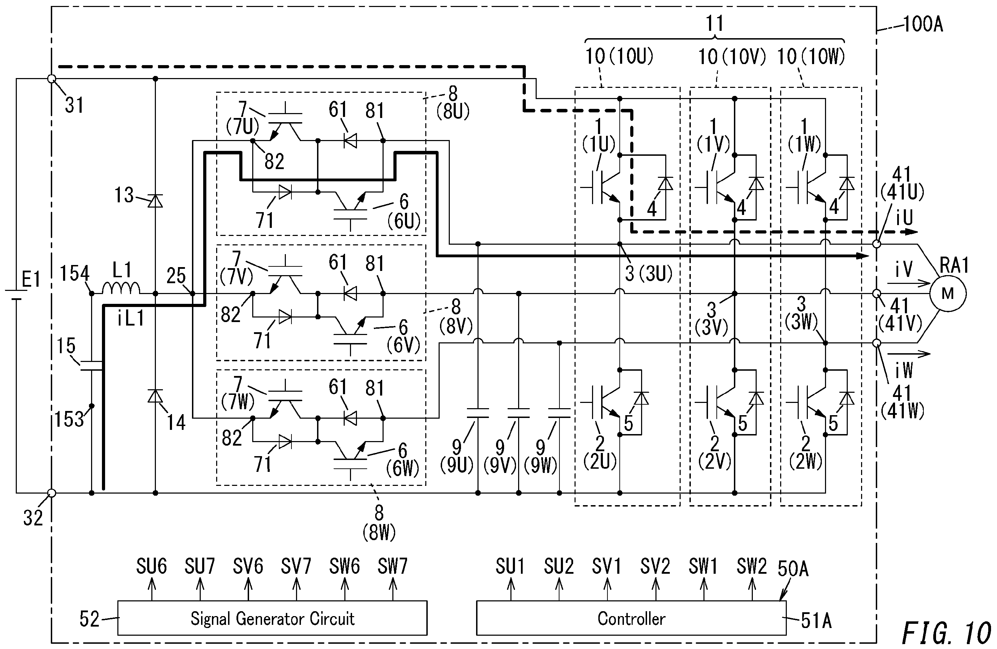

In a third period T03 (refer to FIG. 11), the first switching element 1U and the third switching element 6U are in ON state, and each of the second switching element 2U and the fourth switching element 7U is in OFF state. In the third period T03, the current iL1 flows along the path that passes through the regenerative capacitor 15, the resonant inductor L1, the diode 71, the third switching element 6U, and the AC terminal 41U in this order as shown in FIG. 10. As a result, the current iL1 is reduced to zero. In addition, in the third period T03, the load current iU flows along the path that passes through the first DC terminal 31, the first switching element 1U, the AC terminal 41U, and the AC load RA1 in this order as indicated by the bold dashed line in FIG. 10.

In FIGS. 11-13, as well as in the upper part of FIG. 7, the first control signals S1, S2, the output signal supplied through the inverting output terminal (indicated by Q with an over bar in FIGS. 11-13) of the multivibrator on the first stage, the second control signal S6, the current iL1 flowing through the resonant inductor L1, a load current i, and the voltage V1 across the first switching element 1U are shown for a situation where the target switching element is a first switching element 1. Furthermore, the voltage value of the DC power supply E1 is designated by Vd in FIGS. 11-13.

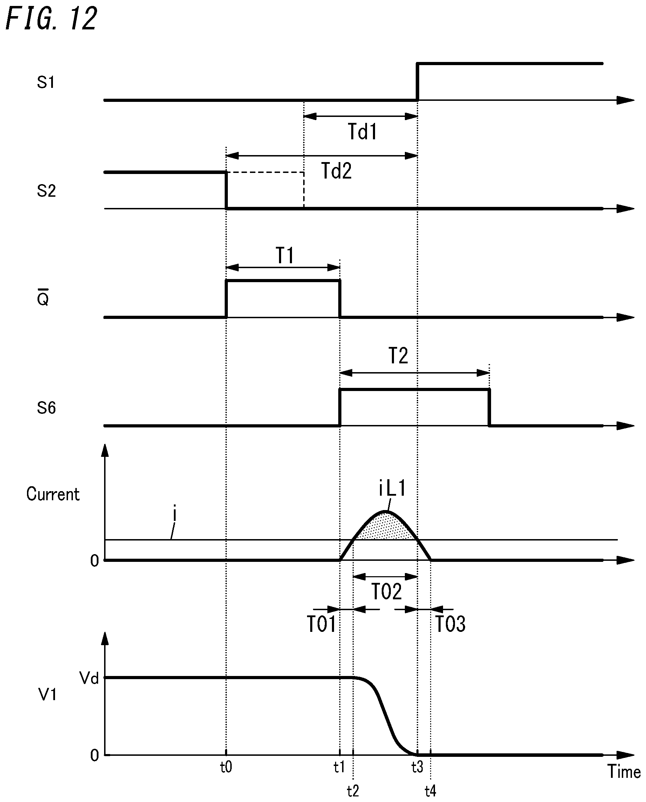

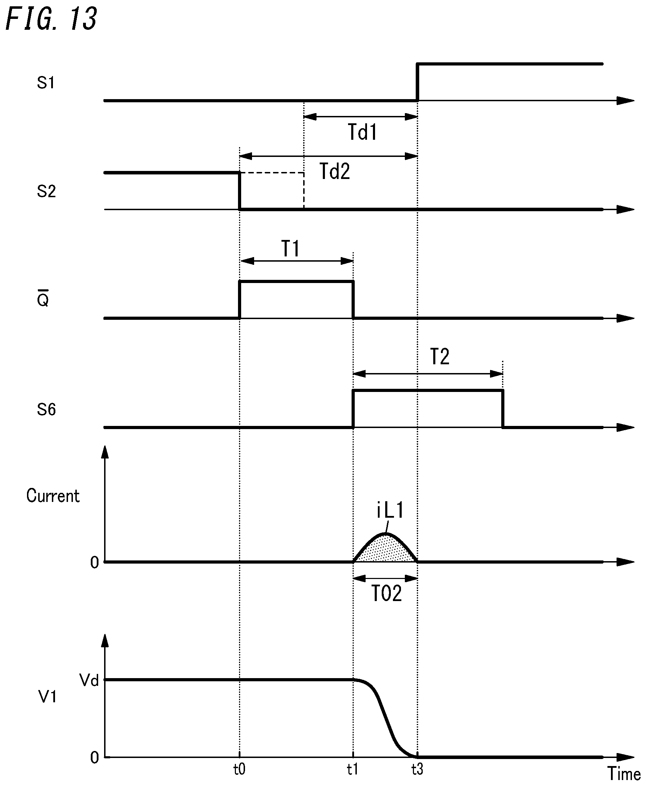

In FIGS. 11-13, the current values of the load current iU are different from each other. FIG. 11 shows a situation where a heavy load is applied, and the current value of the load current i is maximum. FIG. 12 shows a situation where a light load is applied and the current value of the load current i is smaller than in FIG. 11. FIG. 13 shows a situation where no load is applied and the current value of the load current i is zero.

The fixed length T2 is the sum of the respective lengths of the first period T01, the second period T02, and the third period T03 in a situation where a heavy load is applied and the current value of the load current i is maximum as shown in FIG. 11. The first period T01 is as long as a first predetermined amount of time Tad1. The second period T02 is a half as long as one resonant cycle. The third period T03 is as long as a second predetermined amount of time Tad2. In FIGS. 11-13, the lengths of the first period T01 are different from each other. In FIG. 13, the length of the first period T01 is equal to zero. On the other hand, in FIGS. 11-13, the lengths of the second period T02 are equal to each other. Furthermore, in FIGS. 11-13, the lengths of the third period T03 are different from each other. In FIG. 13, the length of the third period T03 is equal to zero.

### (2.1.2) If target switching element is second switching element

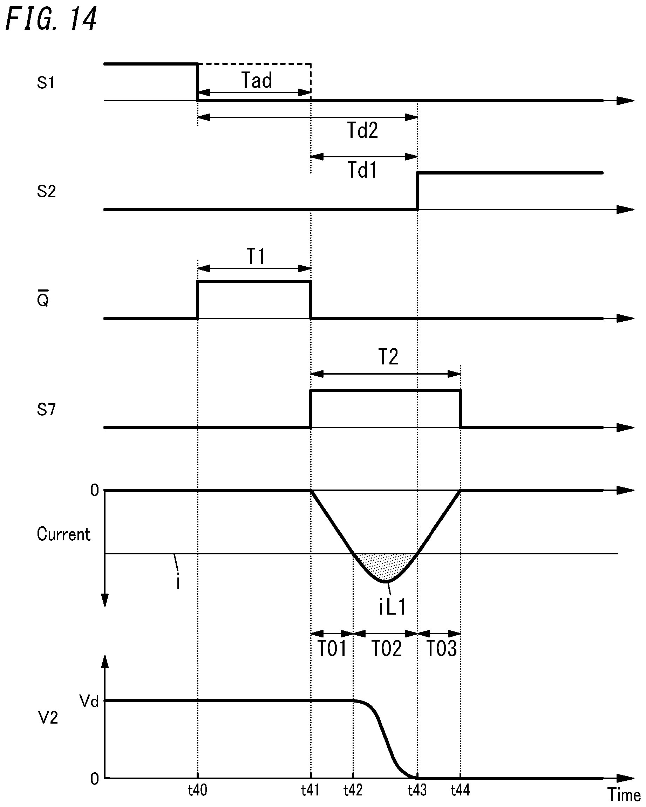

In the case of the first control operation, the first control signal S1 falls from high level to low level at a time t40, the output signal supplied through the inverting output terminal of the multivibrator on the first stage falls from high level to low level at a time t41, the first control signal S2 changes from low level to high level at a time t43, and the second control signal S7 changes from high level to low level at a time t44, as shown in FIG. 14.

If the target switching element is the second switching element 2, the voltage V1 across the first switching element 1 in the switching circuit 10 becomes Vd at the end time t43 of the second dead time period Td2 just before the high-level period of the first control signal S2. On the other hand, the voltage V2 across the second switching element 2 goes zero at the end time t43 of the second dead time period Td2 just before the high-level period of the first control signal S2. Thus, when the first control signal S2 changes from low level to high level at the time t43, the second switching element 2 is subjected to zero-voltage soft switching. In the example shown in FIG. 14, the current iL1 starts flowing through the resonant inductor L1 at the beginning time t41 of the high-level period of the second control signal SU7, comes to have the same value as the load current i at a time t42 when a first predetermined amount of time Tad1 has passed since the time t41, comes to have the same value as the load current i at the end time t43 of the second dead time period Td2, and goes zero at a time t44 when a second predetermined amount of time Tad2 has passed since the time t43. In the signal generator circuit 52, at the time t41 at which the prescribed amount of time T1 has passed since the time t40 when the first control signal S1 changed from high level to low level, the second control signal S7 changes from low level to high level. The current iL1 flowing from the time t42 through the time t43 is a resonant current flowing from the resonant capacitor 9 through the regenerative capacitor 15 via the resonant inductor L1 (i.e., a discharging current for the resonant capacitor 9).

In FIG. 14, the first period T01 is a period from the time t41 through the time t42. In the first period T01, each of the first switching element 1, the second switching element 2, and the third switching element 6 is in OFF state and the fourth switching element 7 is in ON state. In the first period T01, the current iL1 flows along the path that passes through the AC terminal 41, the diode 61, the fourth switching element 7, the resonant inductor L1, and the regenerative capacitor 15 in this order. In addition, in the first period T01, the load current iU flows along the path that passes through the AC load RA1, the AC terminal 41, and the first diode 4 connected to the first switching element 1 in antiparallel in this order.

In FIG. 14, the second period T02 is a period from the time t42 through the time t43. In the second period T02, each of the first switching element 1, the second switching element 2, and the third switching element 6 is in OFF state and the fourth switching element 7 is in ON state. In the second period T02, the current iL1 flowing through the resonant inductor L1 is a confluent current of the current flowing along the path that passes through the AC terminal 41U, the diode 61, the fourth switching element 7U, the resonant inductor L1, and the regenerative capacitor 15 in this order and the current (resonant current) flowing along the path that passes through the resonant capacitor 9, the diode 61, the fourth switching element 7, the resonant inductor L1, and the regenerative capacitor 15 in this order. In the second period T02, electricity is discharged from the resonant capacitor 9.

In FIG. 14, the third period T03 is a period from the time t43 through a time t44. In the third period T03, the second switching element 2U is in ON state, the first switching element 1U and the third switching element 6U are in OFF state, and the fourth switching element 7U is in ON state. In the third period T03, the current iL1 flows along the path that passes through the AC terminal 41U, the diode 61, the fourth switching element 7U, the resonant inductor L1, and the regenerative capacitor 15 in this order. As a result, the absolute value of the current iL1 is reduced to zero. In addition, in the third period T03, the load current iU flows along the path that passes through the AC load RA1, the AC terminal 41U, the second switching element 2U, and the second DC terminal 32 in this order.

### (2.2) Second control operation

When performing the second control operation, the control system 50A causes the entire high-level period of the second control signal to overlap with a part of the high-level period of the first control signal for the target first switching element by shifting the high-level period of the second control signal to make the overlap period between the high-level period of the second control signal to be applied to each of the plurality of switches 8 and the dead time period (second dead time period Td2) shorter than in the case of the first control operation.

### (2.2.1) If target switching element is first switching element

When performing the second control operation, the control system 50A causes a part of the high-level period of the second control signal S6 to overlap with a part of the high-level period of the first control signal S1 for the target first switching element 1 by shifting the high-level period of the second control signal S6 to make the overlap period between the high-level period of the second control signal S6 to be applied to the third switching element 6 and the dead time period (second dead time period Td2) shorter than in the case of the first control operation as shown in FIG. 7, for example. In this manner, the control system 50A stops performing zero-voltage soft switching on the target first switching element 1.

### (2.2.2) If target switching element is second switching element

When performing the second control operation, the control system 50A causes the entire high-level period of the second control signal to overlap with a part of the high-level period of the first control signal for the target second switching element 2 by shifting the high-level period of the second control signal to make the overlap period between the high-level period of the second control signal to be applied to the fourth switching element 7 and the dead time period (second dead time period Td2) shorter than in the case of the first control operation. In this manner, the control system 50A stops performing zero-voltage soft switching on the target second switching element 2. In this embodiment, after shifting, the entire high-level period of the second control signal overlaps with a part of the high-level period of the first control signal for the target second switching element 2. Thus, no current iL1 flows through the resonant inductor L1 (i.e., the current value of the current iL1 is zero), no electricity is discharged from the resonant capacitor 9, and the target second switching element 2 is hard-switched.

### (3) Advantages

In the power converter 100A according to the third embodiment, the control system 50A may perform a first control operation and a second control operation when changing, in each of the plurality of switching circuits 10, the first control signal for a target switching element from the low level to the high level. The target switching element is one of the first and second switching elements 1, 2 that is going to be turned ON. When performing the first control operation, the control system 50A allows, with respect to each of the plurality of switching circuits 10, at least a part of a high-level period of the second control signal for one of the plurality of switches 8 which corresponds to the switching circuit 10, to overlap with a dead time period Td provided between a high-level period of the first control signal S1 for the first switching element 1 and a high-level period of the first control signal S2 for the second switching element 2. When performing the second control operation, the control system 50A allows a part of the high-level period of the second control signal to overlap with a part of the high-level period of the first control signal S1 for the target switching element by shifting the high-level period of the second control signal to shorten an overlap period between the high-level period of the second control signal to be applied to each of the plurality of switches 8 and the dead time period (second dead time period Td2) compared to a situation where the first control operation is performed.

This configuration allows for stopping performing zero-voltage soft switching without making pulse width modulation of the second control signal for each of the plurality of switches 8 provided for the purpose of making zero-voltage soft switching.

Alternatively, the power converter 100A may also be configured to stop performing zero-voltage soft switching, for example, when the controller 51A having the ability to detect failures of the power converter circuit 11 detects any failure. Still alternatively, the power converter 100A may also be configured to perform the second control operation to improve the efficiency.

Also, in the power converter 100A according to the third embodiment, the control system 50A includes a controller 51A and a signal generator circuit 52. The controller 51A applies the first control signal to each of the plurality of first switching elements 1 and the plurality of second switching elements 2. The signal generator circuit 52 applies the second control signal to each of the plurality of switches 8. The controller 51A sets a second dead time period Td2 as the dead time period. The second dead time period Td2 is the sum of a first dead time period Td1 and a predetermined amount of time (additional time Tad). The first dead time period Td1 has been set in advance to prevent respective ON periods of the first switching element 1 and the second switching element 2 from overlapping with each other. The predetermined amount of time (additional time Tad) is determined in accordance with a current value of the load current, inductance of the resonant inductor L1, and a voltage value of the regenerative capacitor 15. The signal generator circuit 52 generates, with respect to each of the plurality of switches 8, the second control signal, of which the high-level period is determined in accordance with the second dead time period Td2 for a corresponding one of the plurality of switching circuits 10.

This configuration allows for performing zero-voltage soft switching with more reliability without having the controller 51A directly control a plurality of switches 8 provided for the purpose of making zero-voltage soft switching. More specifically, there is no need for the controller 51A to generate a second control signal in order to directly control the plurality of switches 8 provided for the purpose of making zero-voltage soft switching. This allows the controller 51A to make zero-voltage soft switching of each of the plurality of first switching elements 1 and the plurality of second switching elements 2 even without directly controlling the plurality of switches 8. Furthermore, according to this configuration, there is no need for the controller 51A to generate and output the plurality of second control signals SU6, SU7, SV6, SV7, SW6, and SW7, thus contributing to simplifying the configuration of the controller 51A. For example, this may reduce an increase in the number of control ports of a microcomputer included in the controller 51A and thereby reduce an increase in the overall size of the controller 51A.

Furthermore, in the power converter 100A, the signal generator circuit 52 generates, with respect to each of the plurality of switches 8, the second control signal using at least one of the first control signal S1 for the first switching element 1 of a corresponding one of the plurality of switching circuits 10 or the first control signal S2 for the second switching element 2 of the corresponding one of the plurality of switching circuits 10.

This configuration allows the configuration of the signal generator circuit 52 to be simplified.

Furthermore, in the power converter 100A, the signal generator circuit 52 includes a plurality of logic circuits 521-526 but includes no microcontrollers.

This configuration allows the configuration of the signal generator circuit 52 to be simplified.

### (Fourth embodiment)

### (1) Configuration

A power converter 100A according to a fourth embodiment has the same configuration as the power converter 100A according to the third embodiment, and therefore, illustration and description thereof will be omitted herein.

### (2) Operation

The power converter 100A according to the fourth embodiment operates in substantially the same way as the power converter 100A according to the third embodiment, except that the control system 50A performs the second control operation in a different manner.

### (2.1) First control operation

The first control operation performed by the control system 50A is the same as the first control operation performed by the control system 50A according to the third embodiment.

### (2.2) Second control operation

When performing the second control operation, the control system 50A allows the entire high-level period of the second control signal to overlap with a part of the high-level period of the first control signal for the target switching element by shifting the high-level period of the second control signal to shorten an overlap period between the high-level period of the second control signal to be applied to each of the plurality of switches 8 and the dead time period compared to a situation where the first control operation is performed.

### (2.2.1) If target switching element is first switching element

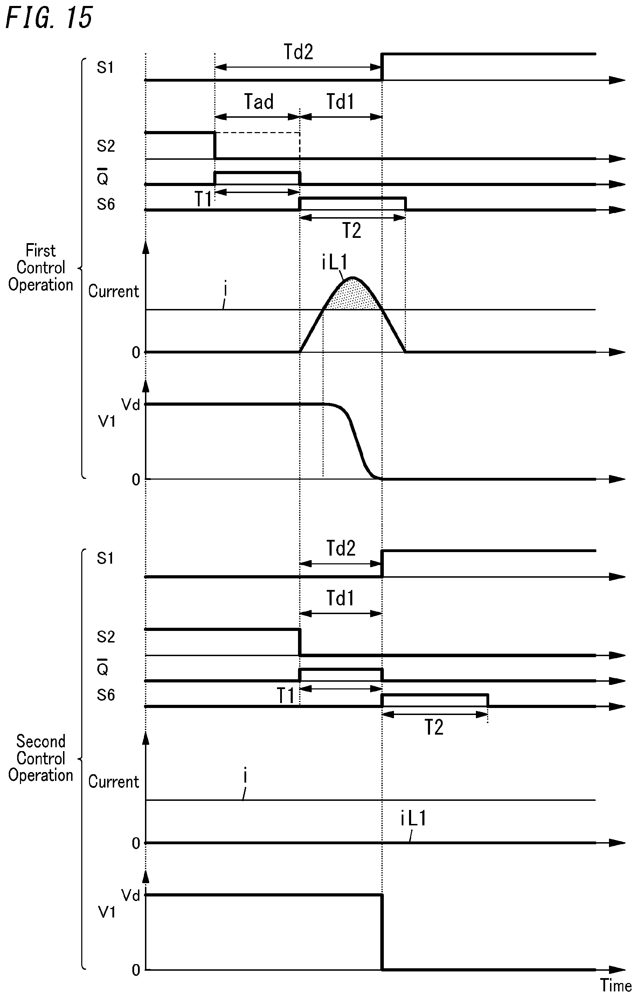

When performing the second control operation, the control system 50A causes the entire high-level period of the second control signal S6 to overlap with a part of the high-level period of the first control signal S1 for the target first switching element 1 by shifting the high-level period of the second control signal S6 to make the overlap period between the high-level period of the second control signal S6 to be applied to the third switching element 6 and the dead time period Td shorter than in the case of the first control operation as shown in FIG. 15, for example. In this manner, the control system 50A stops performing zero-voltage soft switching on the target first switching element 1. As used herein, the phrase "to stop performing zero-voltage soft switching" means switching (i.e., turning ON), without making zero-voltage soft switching, the target first switching element 1 in a shorter time than when performing zero-voltage soft switching in the case of the first control operation. In this embodiment, after shifting, the entire high-level period of the second control signal S6 overlaps with a part of the high-level period of the first control signal S1 for the target first switching element 1. Thus, no current iL1 flows through the resonant inductor L1 (i.e., the current value of the current iL1 is zero), the resonant capacitor 9 is not charged, and the target first switching element 1 is hard-switched.

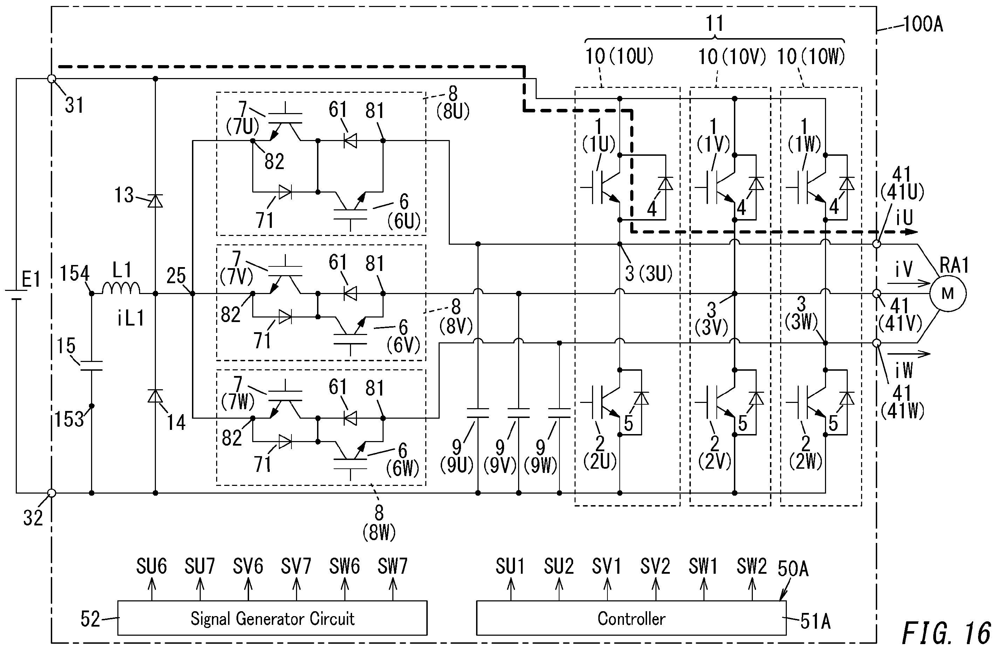

In this embodiment, in the overlap period between the high-level period of the first control signal S1 and the second control signal S6, the voltage across the resonant capacitor 9 is greater than the voltage V15 across the regenerative capacitor 15. Thus, in the power converter 100A, even when the first switching element 1 turns ON, no resonant current flows through the resonant inductor L1 and a current flows along the path that passes through the first switching element 1, the connection node 3, and the AC terminal 41 in this order as indicated by the bold dashed line in FIG. 16.

### (2.2.2) If target switching element is second switching element

When performing the second control operation, the control system 50A causes the entire high-level period of the second control signal to overlap with a part of the high-level period of the first control signal for the target second switching element 2 by shifting the high-level period of the second control signal to make the overlap period between the high-level period of the second control signal to be applied to the fourth switching element 7 and the dead time period Td shorter than in the case of the first control operation. In this manner, the control system 50A stops performing zero-voltage soft switching on the target second switching element 2. As used herein, the phrase "to stop performing zero-voltage soft switching" means switching (i.e., turning ON), without making zero-voltage soft switching, the target second switching element 2 in a shorter time than when performing zero-voltage soft switching in the case of the first control operation. In this embodiment, after shifting, the entire high-level period of the second control signal overlaps with a part of the high-level period of the first control signal for the target second switching element 2. Thus, no current iL1 flows through the resonant inductor L1 (i.e., the current value of the current iL1 is zero), no electricity is discharged from the resonant capacitor 9, and the target second switching element 2 is hard-switched.

### (3) Advantages

The power converter 100A according to the fourth embodiment, as well as the power converter 100A according to the third embodiment, also allows for stopping performing zero-voltage soft switching without making pulse width modulation of the second control signal for each of the plurality of switches 8 provided for the purpose of making zero-voltage soft switching.

In addition, in the power converter 100A according to the fourth embodiment, as well as in the power converter 100A according to the third embodiment, the control system 50A also includes a controller 51A and a signal generator circuit 52. This allows for performing zero-voltage soft switching with more reliability without having the controller 51A directly control a plurality of switches 8 provided for the purpose of making zero-voltage soft switching. More specifically, there is no need for the controller 51A to generate a second control signal in order to directly control the plurality of switches 8 provided for the purpose of making zero-voltage soft switching. This allows the controller 51A to make zero-voltage soft switching of each of the plurality of first switching elements 1 and the plurality of second switching elements 2 even without directly controlling the plurality of switches 8.

### (Fifth embodiment)

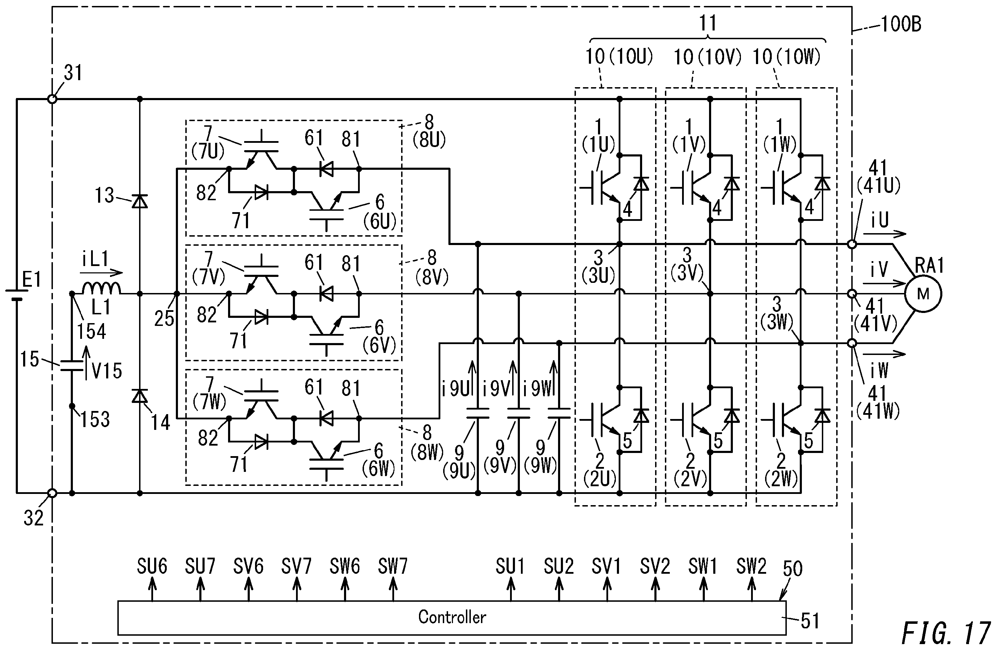

A power converter 100B according to a fifth embodiment will be described with reference to FIGS. 17-20. In the following description, any constituent element of the power converter 100B according to the fifth embodiment, having the same function as a counterpart of the power converter 100 according to the first embodiment (refer to FIG. 1) described above, will be designated by the same reference numeral as that counterpart's, and description thereof will be omitted herein.

In the power converter 100B according to the fifth embodiment, the plurality of switches 8 are connected in common to a single resonant inductor L1, which is a difference from the power converter 100 according to the first embodiment (refer to FIG. 1).

### (2) Operation

In this embodiment, the control system 50 determines whether or not resonant currents, respectively passing through two or more switches 8 belonging to the plurality of switches 8 are going to flow simultaneously through the resonant inductor L1 when a second control signal having a preset high-level period is applied to each of the plurality of switches 8.

### (2.1) First control operation

The first control operation performed by the control system 50 is the same as the first control operation performed by the control system 50 according to the first embodiment.

### (2.2) Second control operation

The control system 50 determines whether or not resonant currents, respectively passing through two or more switches 8 belonging to the plurality of switches 8 are going to flow simultaneously through the resonant inductor L1 when a second control signal having a preset high-level period is applied to each of the plurality of switches 8. When determining that the resonant currents, respectively passing through the two or more switches 8, should be going to flow simultaneously, the control system 50 performs the second control operation on a first switch which is one of the two or more switches 8. As used herein, the expression "when determining that resonant currents, respectively passing through two or more switches 8, should be going to flow simultaneously" refers to a situation where it has been presumed in advance that the resonant currents respectively passing through two or more switches 8 would flow simultaneously through the resonant inductor L1.

### (2.2.1) Determining whether resonant currents respectively passing through two switches flow simultaneously

In the power converter 100B, the phases of three-phase (i.e., U-, V-, and W-phase) voltage instructions are different from each other by 120 degrees, but the instruction values of two-phase voltage instructions approach each other every electrical angle of 60 degrees and the duties of two-phase first control signals approach each other. The polarity of the resonant current is the same as the polarity of the current iL1. For example, in a first region A1 (refer to FIG. 2) where the duty of the U-phase first control signal and the duty of the V-phase first control signal become around 0.75, the polarity of the resonant current is positive. In a second region A2 (refer to FIG. 2) where the duty of the U-phase first control signal and the duty of the V-phase first control signal become around 0.25, the polarity of the resonant current is negative. In the first region A1, the time lag between the beginning time of the high-level period of the second control signal SU6 to be applied to the third switching element 6U and the beginning time of the high-level period of the second control signal SV6 to be applied to the third switching element 6V becomes so short in one cycle time of the carrier signal, for example, that the U-phase resonant current and the V-phase resonant current may flow simultaneously through the resonant inductor L1. In the power converter 100B, the direction of the resonant current in the second region A2 is reverse from that of the resonant current in the first region A1 but the U-phase resonant current and the V-phase resonant current may flow simultaneously through the resonant inductor L1.

Supposing the capacitance of each of the plurality of resonant capacitors 9U, 9V, and 9W is C, if a U-phase current and a V-phase current flow simultaneously through the resonant inductor L1, a capacitor having a combined capacitance (= 2 × C) of the resonant capacitor 9U and the resonant capacitor 9V is connected to the resonant inductor L1 in series in an equivalent circuit. Thus, in the power converter 100B, if two-phase currents flow simultaneously through the resonant inductor L1, then the resonant frequency of a resonant circuit including the resonant inductor L1 changes compared to a situation where a single-phase current flows through the resonant inductor L1. Consequently, the power converter 100B may be unable to make zero-voltage soft switching.

### (2.2.1.1) When charging operation is performed on resonant capacitor

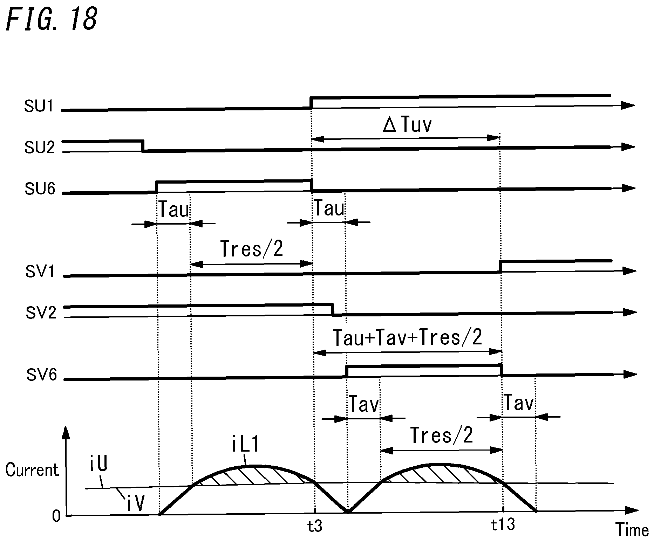

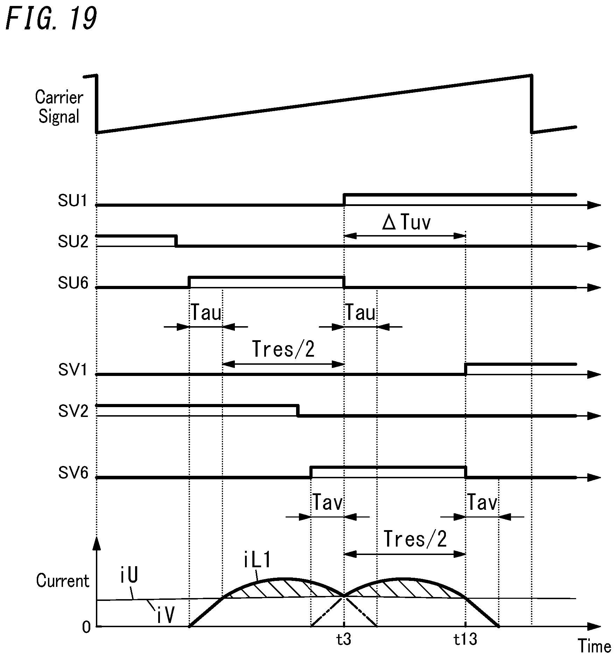

FIG. 18 shows an exemplary boundary condition between a situation where a U-phase current (i.e., a current passing through the switch 8U) and a V-phase current (i.e., a current passing through the switch 8V) do not overlap with each other (i.e., do not flow simultaneously) in the resonant inductor L1 and a situation where the U-phase current and the V-phase current overlap with each other (i.e., flow simultaneously) in the resonant inductor L1. The boundary condition will be described with reference to FIG. 18. FIG. 19 shows an exemplary boundary condition between a situation where a U-phase resonant current and a V-phase resonant current do not overlap with each other (i.e., do not flow simultaneously) in the resonant inductor L1 and a situation where the U-phase resonant current and the V-phase resonant current overlap with each other (i.e., flow simultaneously) in the resonant inductor L1. The boundary condition will be described with reference to FIG. 19.

In the power converter 100, if the time lag ΔTuv is equal to or greater than Tau + Tav + (Tres/2), then the U-phase current and the V-phase current do not overlap with each other in the resonant inductor L1 as shown in FIG. 18. On the other hand, if the time lag ΔTuv is less than Tau + Tav + (Tres/2), then the U-phase current and the V-phase current overlap with each other. The time lag ΔTuv is a time lag between the beginning time t3 of the high-level period of the first control signal SU1 and the beginning time t13 of the high-level period of the first control signal SV1.

In the power converter 100, if the time lag ΔTuv is equal to or greater than Tres/2, then the U-phase resonant current and the V-phase resonant current do not overlap with each other in the resonant inductor L1 as shown in FIG. 19. On the other hand, if the time lag ΔTuv is less than Tres/2, then the U-phase resonant current and the V-phase resonant current overlap with each other in the resonant inductor L1 as shown in FIG. 19.

The controller 51 sets a threshold value for the time lag ΔTuv at Tres/2. If the time lag ΔTuv is less than Tres/2, the controller 51 presumes that U-phase and V-phase resonant currents would flow simultaneously through the resonant inductor L1. Note that this threshold value is only an example, and the threshold value may also be set at any other value. For example, with the error of the Tres/2 value taken into account, the threshold value may also be set at a value even larger than Tres/2. For instance, the threshold value may be set at Tau + Tav + (Tres/2). In that case, if the time lag ΔTuv is less than Tau + Tav + (Tres/2), the controller 51 presumes that the U-phase current (i.e., a current passing through the switch 8U) and the V-phase current (i.e., a current passing through the switch 8V) would overlap with each other in the resonant inductor L1. For example, with the error of the Tau + Tav + (Tres/2) value taken into account, the threshold value may also be set at a value even larger than Tau + Tav + (Tres/2). In addition, the above-described method for calculating the time lag ΔTuv to determine whether the two-phase resonant currents flow simultaneously is only an example. Rather, any other calculating method may also be adopted as long as a time lag corresponding to the time lag ΔTuv may be calculated. For example, as the time lag ΔTuv for use to determine whether the two-phase resonant currents flow simultaneously, a time lag between the end time of the high-level period of the first control signal SU2 and the end time of the high-level period of the first control signal SV2 may also be used.

Also, in the following description, the time lag between the beginning time of the high-level period of the first control signal SU1 and the beginning time of the high-level period of the first control signal SW1 will be hereinafter referred to as "ΔTuw." In the power converter 100, if the time lag ΔTuw is equal to or greater than Tres/2, then the U-phase resonant current and the W-phase resonant current do not overlap with each other in the resonant inductor L1. On the other hand, if the time lag ΔTuw is less than Tres/2, then the U-phase resonant current and the W-phase resonant current overlap with each other in the resonant inductor L1.

The controller 51 sets a threshold value for the time lag ΔTuw at Tres/2. If the time lag ΔTuw is less than the threshold value, the controller 51 presumes that the U-phase and W-phase resonant currents would flow simultaneously through the resonant inductor L1. Note that this threshold value is only an example, and the threshold value may also be set at any other value. For example, with the error of the Tres/2 value taken into account, the threshold value may also be set at a value even larger than Tres/2. For instance, the threshold value may be set at Tau + Taw + (Tres/2). In that case, if the time lag ΔTuw is less than Tau + Taw + (Tres/2), the controller 51 presumes that the U-phase current (i.e., a current passing through the switch 8U) and the W-phase current (i.e., a current passing through the switch 8W) would overlap with each other in the resonant inductor L1. For example, with the error of the Tau + Taw + (Tres/2) value taken into account, the threshold value may also be set at a value even larger than Tau + Taw + (Tres/2). In addition, the above-described method for calculating the time lag ΔTuw to determine whether the two-phase resonant currents flow simultaneously is only an example. Rather, any other calculating method may also be adopted as long as a time lag corresponding to the time lag ΔTuw may be calculated. For example, as the time lag ΔTuw for use to determine whether the two-phase resonant currents flow simultaneously, a time lag between the end time of the high-level period of the first control signal SU2 and the end time of the high-level period of the first control signal SW2 may also be used.

Also, in the following description, the time lag between the beginning time of the high-level period of the first control signal SV1 to be applied to the first switching element V1 of the switching circuit 10V and the beginning time of the high-level period of the first control signal SW1 to be applied to the first switching element 1W of the switching circuit 10W will be hereinafter referred to as "ΔTvw." In the power converter 100, if the time lag ΔTvw is equal to or greater than Tres/2, then the V-phase resonant current and the W-phase resonant current do not overlap with each other in the resonant inductor L1. On the other hand, if the time lag ΔTvw is less than Tres/2, then the V-phase resonant current and the W-phase resonant current overlap with each other in the resonant inductor L1.

The controller 51 sets a threshold value for the time lag ΔTuw at Tres/2. If the time lag ΔTvw is less than the threshold value, the controller 51 presumes that the V-phase and W-phase resonant currents would flow simultaneously through the resonant inductor L1. Note that this threshold value is only an example, and the threshold value may also be set at any other value. For example, with the error of the Tres/2 value taken into account, the threshold value may also be set at a value even larger than Tres/2. For example, the threshold value may be set at Tav + Taw + (Tres/2). In that case, if the time lag ΔTvw is less than Tav + Taw + (Tres/2), the controller 51 presumes that the V-phase current (i.e., a current passing through the switch 8V) and the W-phase current (i.e., a current passing through the switch 8W) would overlap with each other in the resonant inductor L1. For instance, with the error of the Tav + Taw + (Tres/2) value taken into account, the threshold value may also be set at a value even larger than Tav + Taw + (Tres/2). In addition, the above-described method for calculating the time lag ΔTvw to determine whether the two-phase resonant currents flow simultaneously is only an example. Rather, any other calculating method may also be adopted as long as a time lag corresponding to the time lag ΔTvw may be calculated. For example, as the time lag ΔTvw for use to determine whether the two-phase resonant currents flow simultaneously, a time lag between the end time of the high-level period of the first control signal SV2 and the end time of the high-level period of the first control signal SW2 may also be used.

### (2.2.1.2) When discharging operation is performed on resonant capacitor

When performing a discharging operation on the resonant capacitor 9, the controller 51 may also determine, using the same time lag and threshold value as in the case of performing the charging operation on the resonant capacitor 9, whether two-phase resonant currents are going to flow simultaneously.

For example, if the time lag between the beginning time of the high-level period of the first control signal SU2 and the beginning time of the high-level period of the first control signal SV2 is less than the threshold value (e.g., Tres/2), then the controller 51 presumes that the U-phase resonant current and the V-phase resonant current would overlap with each other. Note that this threshold value is only an example, and the threshold value may also be set at any other value. For example, with the error of the Tres/2 value taken into account, the threshold value may also be set at a value even larger than Tres/2. For instance, the threshold value may be set at Tau + Tav + (Tres/2). In that case, if the time lag ΔTuv is less than Tau + Tav + (Tres/2), the controller 51 presumes that the U-phase current (i.e., a current passing through the switch 8U) and the V-phase current (i.e., a current passing through the switch 8V) would overlap with each other in the resonant inductor L1. For example, with the error of the Tau + Tav + (Tres/2) value taken into account, the threshold value may also be set at a value even larger than Tau + Tav + (Tres/2).

Also, if the time lag between the beginning time of the high-level period of the first control signal SU2 and the beginning time of the high-level period of the first control signal SW2 is less than the threshold value (e.g., Tres/2), then the controller 51 presumes that the U-phase resonant current and the W-phase resonant current would overlap with each other. Note that this threshold value is only an example, and the threshold value may also be set at any other value. For example, with the error of the Tres/2 value taken into account, the threshold value may also be set at a value even larger than Tres/2. For instance, the threshold value may be set at Tau + Taw + (Tres/2). In that case, if the time lag ΔTuw is less than Tau + Taw + (Tres/2), the controller 51 presumes that the U-phase current (i.e., a current passing through the switch 8U) and the W-phase current (i.e., a current passing through the switch 8W) would overlap with each other in the resonant inductor L1. For example, with the error of the Tau + Taw + (Tres/2) value taken into account, the threshold value may also be set at a value even larger than Tau + Taw + (Tres/2).

Furthermore, if the time lag between the beginning time of the high-level period of the first control signal SV2 and the beginning time of the high-level period of the first control signal SW2 is less than the threshold value (e.g., Tres/2), then the controller 51 presumes that the V-phase resonant current and the W-phase resonant current would overlap with each other. Note that this threshold value is only an example, and the threshold value may also be set at any other value. For example, with the error of the Tres/2 value taken into account, the threshold value may also be set at a value even larger than Tres/2. For example, the threshold value may be set at Tav + Taw + (Tres/2). In that case, if the time lag ΔTvw is less than Tav + Taw + (Tres/2), the controller 51 presumes that the V-phase current (i.e., a current passing through the switch 8V) and the W-phase current (i.e., a current passing through the switch 8W) would overlap with each other in the resonant inductor L1. For instance, with the error of the Tav + Taw + (Tres/2) value taken into account, the threshold value may also be set at a value even larger than Tav + Taw + (Tres/2).

### (2.2.2) When two-phase resonant currents are determined to flow simultaneously

The controller 51 performs the second control operation on a first switch which is one of the two or more switches. The controller 51 performs the first control operation on a second switch different from the first switch which also belongs to the two or more switches. When the controller 51 performs the second control operation, the first switch is one of the two or more switches 8 and corresponds to one switching circuit 10 belonging to two or more switching circuits 10. The two or more switching circuits 10 are switching circuits 10 respectively corresponding to the two or more switches 8 which belong to the plurality of switching circuits 10. The two or more switching circuits 10 respectively cause load currents having mutually different absolute values to flow therethrough. The one switching circuit 10 causes a load current, of which the absolute value is the largest among the two or more switching circuits 10, to flow therethrough.

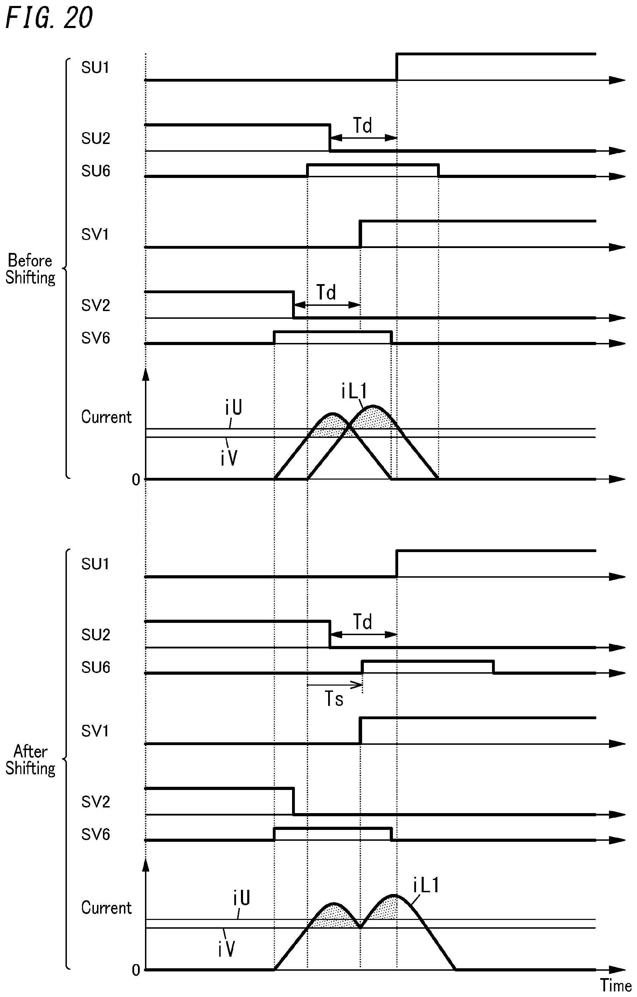

The upper part of FIG. 20 is a timing chart showing a situation where the control system 50 has determined that U- and V-phase resonant currents should be going to flow simultaneously. In this case, in the upper part of the timing chart of FIG. 20, shown are the respective waveforms of the first control signals SU1, SU2, SV1, and SV2, the second control signals SU6 and SV6, the load currents iU and, iV, and the current iL1 before shifting is made by performing the second control operation. In the upper part of FIG. 20, a current passing through the switch 8U and the resonant inductor L1 and a current passing through the switch 8V and the resonant inductor L1 are drawn separately from each other. In the example shown in FIG. 20, the absolute value of the load current iU is larger than the absolute value of the load current iV. Thus, the first switch is a switch 8U.

On the other hand, the lower part of FIG. 20 is a timing chart showing a situation where the control system 50 has performed shifting as the second control operation. In this case, the lower part of FIG. 20 is a timing chart showing the respective waveforms of the first control signals SU1, SU2, SV1, and SV2, the second control signals SU6 and SV6, the load currents iU and iV, and the current iL1. Note that FIG. 20 shows a timing chart for a part of one cycle of the carrier signal.

In the power converter 100B, if the controller 51 does not perform the second control operation, then the resonant capacitor 9U, 9V has not been charged fully yet by a point in time when the first control signal SU1, SV1 makes a transition from the low-level period to the high-level period (i.e., the end time of the dead time period Td corresponding to each of the U- and V-phases). Thus, the voltage across each of the first switching elements 1U, 1V has not decreased to zero by the end time of the dead time period Td corresponding to each of the U- and V-phases. As a result, in the power converter 100B, the first switching element 1U, 1V is switched by hard switching.

### (2.2.2.1) When performing charging operation on resonant capacitor

When determining that the U-phase and V-phase resonant currents should be going to flow simultaneously, the controller 51 shortens the overlap period between the high-level period of the second control signal SU6 and the dead time period Td just before the high-level period of the first control signal SU1 by shifting (postponing on the time axis) the high-level period of the second control signal SU6 for the U-phase third switching element 6U by a shifted time Ts. The shifted time Ts may be randomly set by the controller 51 as long as the shifted time Ts is shorter than Tau + (Tres/2). In the power converter 100B, having the controller 51 perform the second control operation not only reduces the degree of hard switching of the first switching element 1U but also subjects the first switching element 1V to zero-voltage soft switching. Since the voltage across the first switching circuit 10U is Vd, the sum of the voltage across the first switching element 1U and the voltage across the second switching element 2U is also Vd. As used herein, the expression "reducing the degree of hard switching of the first switching element" means that the voltage across the first switching element 1U when the first switching element 1U turns ON is reduced to a value less than Vd. As can be seen from the waveform of the current iL1 on the upper part of FIG. 20 and the waveform of the current iL1 on the lower part thereof, the power converter 100B may shorten the overlap period between the U-phase and V-phase resonant currents by performing the second control operation on the (third switching element 6U of the) switch 8U when the controller 51 has determined in advance that two-phase resonant currents, namely, the U-phase and V-phase resonant currents, should be going to flow simultaneously.

Alternatively, the controller 51 may also shorten the overlap period between the high-level period of the second control signal SV6 and the dead time period Td just before the high-level period of the first control signal SV1 by shifting (postponing on the time axis) the high-level period of the second control signal SV6, instead of the high-level period of the second control signal SU6, by the shifted time Ts. In that case, the shifted time Ts may be randomly set by the controller 51 as long as the shifted time Ts is shorter than Tav + (Tres/2). In the power converter 100B, having the controller 51 perform the second control operation allows for not only subjecting the first switching element 1U to soft switching but also reduces the degree of hard switching of the first switching element 1V.

Also, in the power converter 100B, when determining in advance that two-phase resonant currents, namely, the U-phase and W-phase resonant currents, should be going to flow simultaneously, the controller 51 shortens the overlap period between the high-level period of the second control signal SU6 and the dead time period Td just before the high-level period of the first control signal SU1 by shifting (postponing on the time axis) the high-level period of the second control signal SU6 for the U-phase third switching element 6U by a shifted time Ts. This allows the power converter 100B to not only shorten the overlap period between the U-phase resonant current and the W-phase resonant current but also reduce the degree of hard switching of the first switching element 1U and subject the first switching element 1W to zero-voltage soft switching.

Alternatively, the controller 51 may also shorten the overlap period between the high-level period of the second control signal SW6 and the dead time period Td just before the high-level period of the first control signal SW1 by shifting (postponing on the time axis) the high-level period of the second control signal SW6, instead of the high-level period of the second control signal SU6, by the shifted time Ts. This allows the power converter 100B to not only subject the first switching element 1U to soft switching but also reduce the degree of hard switching of the first switching element 1W as well.

Also, in the power converter 100B, when determining in advance that two-phase resonant currents, namely, the V-phase and W-phase resonant currents, should be going to flow simultaneously, the controller 51 shortens the overlap period between the high-level period of the second control signal SV6 and the dead time period Td just before the high-level period of the first control signal SV1 by shifting (postponing on the time axis) the high-level period of the second control signal SV6 for the V-phase third switching element 6V by a shifted time Ts. This allows the power converter 100B to not only shorten the overlap period between the V-phase resonant current and the W-phase resonant current but also reduce the degree of hard switching of the first switching element 1V and subject the first switching element 1W to zero-voltage soft switching as well.

Alternatively, the controller 51 may also shorten the overlap period between the high-level period of the second control signal SW6 and the dead time period Td just before the high-level period of the first control signal SW1 by shifting (postponing on the time axis) the high-level period of the second control signal SW6, instead of the high-level period of the second control signal SU6, by the shifted time Ts. This allows the power converter 100B to not only subject the first switching element 1U to soft switching but also reduce the degree of hard switching of the first switching element 1W as well.

### (2.2.2.2) When discharging operation is performed on resonant capacitor

In this case, the polarity of the load current and the polarity of the current iL1 are negative, which is a difference from a situation where the charging operation is performed on the resonant capacitor 9. In addition, the overlap period between the high-level period of the second control signal for the fourth switching element 7, instead of the third switching element 6, and the dead time period Td just before the high-level period of the first control signal is shortened by shifting (postponing on the time axis) the fourth switching element 7, which is another difference from the situation where the charging operation is performed on the resonant capacitor.

In the power converter 100B, making the controller 51 perform the second control operation on a first switch when determining in advance that two-phase resonant currents should be going to flow simultaneously allows for shortening the overlap period between the two-phase resonant currents. In the power converter 100B, the controller 51 performs the second control operation on the first switch, thus reducing the degree of hard switching of a second switching element 2 corresponding to the first switch out of the two switches 8 and subjecting a second switching element 2 corresponding to another switch 8 different from the first switch to zero-voltage soft switching.

### (3) Advantages

The power converter 100B according to the fifth embodiment, as well as the power converter 100 according to the first embodiment, also allows for stopping performing zero-voltage soft switching without making pulse width modulation of the second control signal for each of the plurality of switches 8 provided for the purpose of making zero-voltage soft switching.

In addition, in the power converter 100B according to the fifth embodiment, when determining that resonant currents, respectively passing through two or more switches 8 belonging to the plurality of switches 8, should be going to flow simultaneously through the resonant inductor L1 upon application of a second control signal having a preset high-level period to each of the plurality of switches 8, the control system 50 performs the second control operation on a first switch belonging to the two or more switches 8.

This configuration allows, when determining that resonant currents, respectively passing through two or more switches 8 belonging to the plurality of switches 8, should be going to flow simultaneously through the resonant inductor L1, zero-voltage soft switching to be performed on a target switching element corresponding to the switch 8 on which the control system 50 performs the first control operation and also allows for stropping performing zero-voltage soft switching on a target switching element corresponding to a first switch on which the control system 50 performs the second control operation.

### (Sixth embodiment)

### (1) Configuration

A power converter 100A according to a sixth embodiment has the same configuration as the power converter 100A according to the third embodiment (refer to FIG. 5), and therefore, illustration and description thereof will be omitted herein.

### (2) Operation

In this embodiment, the control system 50A determines whether or not resonant currents, respectively passing through two or more switches 8 belonging to the plurality of switches 8, are going to flow simultaneously through the resonant inductor L1 when a second control signal having a preset high-level period is applied to each of the plurality of switches 8.

### (2.2) Second control operation

The control system 50A determines whether or not resonant currents, respectively passing through two or more switches 8 belonging to the plurality of switches 8, are going to flow simultaneously through the resonant inductor L1 when a second control signal having a preset high-level period is applied to each of the plurality of switches 8. When determining that the resonant currents, respectively passing through the two or more switches 8, should be going to flow simultaneously, the control system 50A performs the second control operation on a first switch which is one of the two or more switches 8. As used herein, the expression "when determining that resonant currents, respectively passing through two or more switches 8, should be going to flow simultaneously" refers to a situation where it has been presumed in advance that the resonant currents respectively passing through two or more switches 8 would flow simultaneously through the resonant inductor L1.

### (2.1.1) Determination whether resonant currents, respectively passing through two switches, flow simultaneously

In the following description, the length of a period, corresponding to the first period T01 (refer to FIG. 11) (hereinafter referred to as a "runup period"), of the high-level period of the second control signal SU6 is supposed to be Tau, the length of a period, corresponding to the second period T02 (refer to FIG. 11), of the high-level period of the second control signal SU6 is supposed to be Tres/2, and the length of a period, corresponding to the third period T03 (refer to FIG. 11), of the high-level period of the second control signal SU6 is supposed to be Tau. In this case, Tau is a value calculated by the controller 51A by the equation: Tau = iU × (L/V15) using either the detection result of the load current iU by a current sensor or a signal processing value thereof, or an estimated value of the load current iU, the inductance L of the resonant inductor L1 that has been stored in advance, and the detection result of the voltage V15 at the regenerative capacitor 15 (i.e., a potential V15 at the fourth end of the regenerative capacitor 15), for example.

In the following description, the length of a period, corresponding to the first period T01 (hereinafter referred to as a "runup period"), of the high-level period of the second control signal SV6 is supposed to be Tav, the length of a period, corresponding to the second period T02, of the high-level period of the second control signal SV6 is supposed to be Tres/2, and the length of a period, corresponding to the third period T03, of the high-level period of the second control signal SV6 is supposed to be Tav. In this case, Tav is a value calculated by the controller 51A by the equation: Tav = iV × (L/V15) using either the detection result of the load current iV by a current sensor or a signal processing value thereof, or an estimated value of the load current iV, the inductance L of the resonant inductor L1 that has been stored in advance, and the detection result of the voltage V15 at the regenerative capacitor 15 (i.e., a potential V15 at the fourth end of the regenerative capacitor 15), for example.

In the following description, the length of a period, corresponding to the first period T01 (hereinafter referred to as a "runup period"), of the high-level period of the second control signal SW6 is supposed to be Taw, the length of a period, corresponding to the second period T02, of the high-level period of the second control signal SW6 is supposed to be Tres/2, and the length of a period, corresponding to the third period T03, of the high-level period of the second control signal SW6 is supposed to be Taw. In this case, Taw is a value calculated by the controller 51A by the equation: Taw = iW × (L/V15) using either the detection result of the load current iW by a current sensor or a signal processing value thereof, or an estimated value of the load current iW, the inductance L of the resonant inductor L1 that has been stored in advance, and the detection result of the voltage V15 at the regenerative capacitor 15 (i.e., a potential V15 at the fourth end of the regenerative capacitor 15), for example.

Note that the ON period of the first switching element 1U corresponds one to one to the high-level period of the first control signal SU1. The ON period of the first switching element 1V corresponds one to one to the high-level period of the first control signal SV1. The ON period of the first switching element 1W corresponds one to one to the high-level period of the first control signal SW1. The ON period of the second switching element 2U corresponds one to one to the high-level period of the first control signal SU2. The ON period of the second switching element 2V corresponds one to one to the high-level period of the first control signal SV2. The ON period of the second switching element 2W corresponds one to one to the high-level period of the first control signal SW2.

The controller 51A determines, every cycle of a carrier signal, for example, whether or not resonant currents overlap with each other. This controller 51A makes this determination after having generated the first control signals SU1, SU2, SV1, SV2, SW1, and SW2 and before controlling the first switching element 1U, the second switching element 2U, the first switching element 1V, the second switching element 2V, the first switching element 1W, and the second switching element 2W.

### (2.1.1.1) When charging operation is performed on resonant capacitor

In the power converter 100A, if the time lag ΔTuv is equal to or greater than Tau + Tav + (Tres/2), then the U-phase current and the V-phase current do not overlap with each other. On the other hand, if the time lag ΔTuv is less than Tau + Tav + Tred/2), then the U-phase current and the V-phase current overlap with each other. The time lag ΔTuv is the time lag between the beginning time of the high-level period of the first control signal SU1 to be applied to the first switching element 1U of the switching circuit 10U and the beginning time of the high-level period of the first control signal SV1 to be applied to the first switching element 1V of the switching circuit 10V. Supposing the overlap time for which the U-phase current and the V-phase current overlap with each other is Tov_uv, the controller 51A calculates the overlap time Tov_uv by the equation: Tov_uv = Tau +Tav + (Tres/2) - ΔTuv. If Tov_uv > 0, then the controller 51A presumes that the U-phase current and the V-phase current would overlap with each other. On the other hand, if Tov_uv ≥ Tres/2, then the controller 51A presumes that the U-phase resonant current and the V-phase resonant current would overlap with each other. In addition, the above-described method for calculating the time lag ΔTuv is only an example. For example, a time lag between the end time of the high-level period of the first control signal SU2 to be applied to the second switching element 2U of the switching circuit 10U and the end time of the high-level period of the first control signal SV2 to be applied to the second switching element 2V of the switching circuit 10V may also be used.

Also, in the power converter 100A, if the time lag ΔTuw is equal to or greater than Tau + Taw + (Tres/2), then the U-phase current and the W-phase current do not overlap with each other. On the other hand, if the time lag ΔTuw is less than Tau + Taw + (Tred/2), then the U-phase current and the W-phase current overlap with each other. The time lag ΔTuw is the time lag between the beginning time of the high-level period of the first control signal SU1 and the beginning time of the high-level period of the first control signal SW1. Supposing the overlap time for which the U-phase current and the W-phase current overlap with each other is Tov_uw, the controller 51A calculates the overlap time Tov_uw by the equation: Tov_uw = Tau +Taw + (Tres/2) - ΔTuw. If Tov_uw > 0, then the controller 51A presumes that the U-phase current and the W-phase current would overlap with each other. On the other hand, if Tov_uw ≥ Tres/2, then the controller 51A presumes that the U-phase resonant current and the W-phase resonant current would overlap with each other. In addition, the above-described method for calculating the time lag ΔTuw is only an example. For example, a time lag between the end time of the high-level period of the first control signal SU2 and the end time of the high-level period of the first control signal SW2 may also be used.

Also, in the power converter 100A, if the time lag ΔTvw is equal to or greater than Tav + Taw + (Tres/2), then the V-phase current and the W-phase current do not overlap with each other. On the other hand, if the time lag ΔTvw is less than Tav + Taw + (Tred/2), then the V-phase current and the W-phase current overlap with each other. The time lag ΔTvw is the time lag between the beginning time of the high-level period of the first control signal SV1 to be applied to the first switching element 1V of the switching circuit 10V and the beginning time of the high-level period of the first control signal SW1 to be applied to the first switching element 1W of the switching circuit 10W. Supposing the overlap time for which the V-phase current and the W-phase current overlap with each other is Tov_vw, the controller 51A calculates the overlap time Tov_vw by the equation: Tov_vw = Tav +Taw + (Tres/2) - ΔTvw. If Tov_vw > 0, then the controller 51A presumes that the V-phase current and the W-phase current would overlap with each other. On the other hand, if Tov_vw ≥ Tres/2, then the controller 51A presumes that the V-phase resonant current and the W-phase resonant current would overlap with each other. In addition, the above-described method for calculating the time lag ΔTvw is only an example. For example, a time lag between the end time of the high-level period of the first control signal SV2 and the end time of the high-level period of the first control signal SW2 may also be used.

The control system 50A performs the second control operation on a first switch which is one of the two or more switches 8. The control system 50A performs the first control operation on a second switch different from the first switch which also belongs to the two or more switches 8. When the control system 50A performs the second control operation, the first switch is one of the two or more switches 8 and corresponds to one switching circuit 10 belonging to two or more switching circuits 10. The two or more switching circuits 10 are switching circuits respectively corresponding to the two or more switches 8 which belong to the plurality of switching circuits 10. The two or more switching circuits 10 respectively cause load currents having mutually different absolute values to flow therethrough. The one switching circuit 10 causes a load current, of which the absolute value is the largest among the two or more switching circuits 10, to flow therethrough.

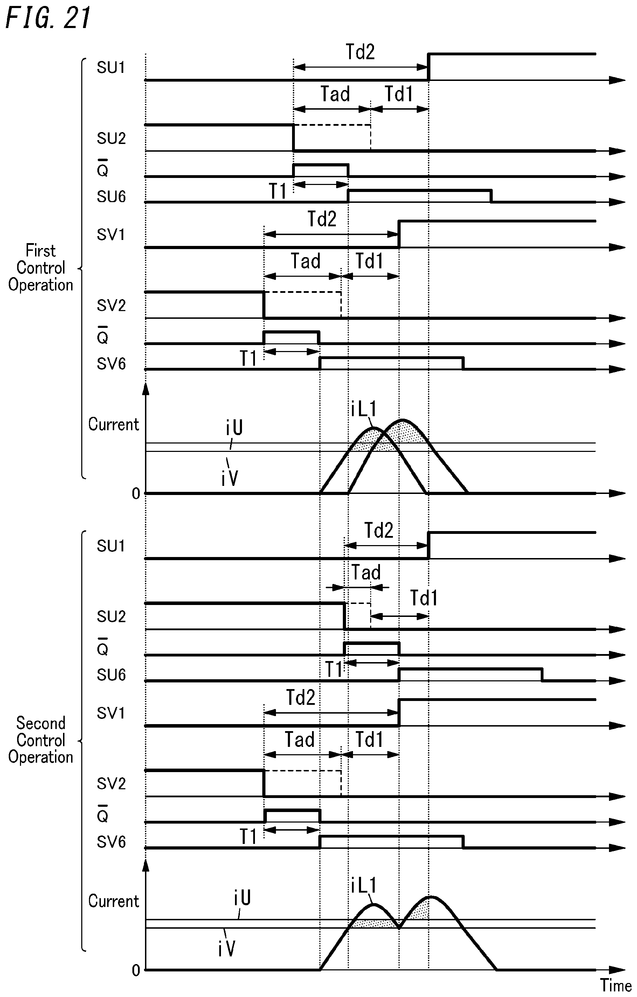

The upper part of FIG. 21 is a timing chart showing a situation where the control system 50A has determined that U- and V-phase resonant currents should be going to flow simultaneously. In this case, in the upper part of the timing chart of FIG. 21, shown are the respective waveforms of the first control signals SU1, SU2, SV1, and SV2, the second control signals SU6 and SV6, the load currents iU and iV, and the current iL1 before shifting is made by performing the second control operation. In the example shown in FIG. 21, the absolute value of the load current iU is larger than the absolute value of the load current iV. Thus, the first switch is a switch 8U.

On the other hand, the lower part of FIG. 21 is a timing chart showing a situation where the control system 50 has performed shifting as the second control operation. In this case, the lower part of FIG. 21 is a timing chart showing the respective waveforms of the first control signals SU1, SU2, SV1, and SV2, the second control signals SU6 and SV6, the load currents iU and iV, and the current iL1. Note that FIG. 21 shows a timing chart for a part of one cycle of the carrier signal.

In the power converter 100A, if the control system 50A does not perform the second control operation, then the resonant capacitor 9U, 9V has not been charged fully yet by a point in time when the first control signal SU1, SV1 makes a transition from the low-level period to the high-level period (i.e., the end time of the dead time period Td corresponding to each of the U-and V-phases). Thus, the voltage across each of the first switching elements 1U and 1V has not decreased to zero by the end time of the dead time period Td corresponding to each of the U- and V-phases. As a result, in the power converter 100A, the first switching element 1U, 1V is switched by hard switching.

In a situation where the charging operation is performed on the resonant capacitor 9, when determining that the U-phase resonant current and the V-phase resonant current should be going to flow simultaneously, the controller 51A sets the additional time Tad of the second dead time period Td2 for the U-phase (= Td1 + Tad) at a randomly selected time shorter than Tau + (Tres/2). This allows for shifting (postponing on the time axis) the high-level period of the second control signal SU6 for the U-phase third switching element 6U and shortening the overlap period between the high-level period of the second control signal SU6 and the dead time period (second dead time period Td2) just before the high-level period of the first control signal SU1 without having the controller 51A directly control the U-phase switch 8U. In the power converter 100A, having the control system 50A perform the second control operation not only reduces the degree of hard switching of the first switching element 1U but also allows the first switching element 1V to be subjected to zero-voltage soft switching. Since the voltage across the first switching circuit 10U is Vd, the sum of the voltage across the first switching element 1U and the voltage across the second switching element 2U is also Vd. As used herein, the expression "reducing the degree of hard switching of the first switching element 1U" means that the voltage across the first switching element 1U when the first switching element 1U turns ON is reduced to a value less than Vd. As can be seen from the waveform of the current iL1 in the upper part of FIG. 21 and the waveform of the current iL1 in the lower part thereof, in the power converter 100A, the control system 50A may shorten the overlap period between the U-phase and V-phase resonant currents by performing the second control operation on the (third switching element 6U of the) switch 8U when a determination has been made in advance that two-phase resonant currents, namely, the U-phase and V-phase resonant currents, should be going to flow simultaneously.

Alternatively, the control system 50A may set the second dead time period Td2 (= Td1 + Tad) corresponding to the V-phase, instead of the additional time Tad of the second dead time period Td2 (= Td1 + Tad) corresponding to the U-phase, at a randomly selected time shorter than Tav + (Tres/2). This allows the overlap period between the high-level period of the second control signal SV6 and the dead time period (second dead time period Td2) just before the high-level period of the first control signal SV1 to be shortened. This allows the power converter 100A to not only subject the first switching element 1U to zero-voltage soft switching but also reduce the degree of hard switching of the first switching element 1V as well.

In addition, in the power converter 100A, when determining in advance that two-phase resonant currents, namely, the U-phase resonant current and the W-phase resonant current, should be going to flow simultaneously, the control system 50A sets the additional time Tad of the second dead time period Td2 corresponding to the U-phase (= Td1 + Tad) at a randomly selected time shorter than Tau + (Tres/2). This allows for shifting (postponing on the time axis) the high-level period of the second control signal SU6 for the U-phase third switching element 6U and shortening the overlap period between the high-level period of the second control signal SU6 and the dead time period (second dead time period Td2) just before the high-level period of the first control signal SU1 without having the controller 51A directly control the U-phase switch 8U. In the power converter 100A, having the control system 50A perform the second control operation not only reduces the degree of hard switching of the first switching element 1U but also allows the first switching element 1W to be subjected to zero-voltage soft switching.

Alternatively, the control system 50A may set the second dead time period Td2 (= Td1 + Tad) corresponding to the W-phase, instead of the additional time Tad of the second dead time period Td2 (= Td1 + Tad) corresponding to the U-phase, at a randomly selected time shorter than Taw + (Tres/2). This allows the overlap period between the high-level period of the second control signal SW6 and the dead time period (second dead time period Td2) just before the high-level period of the first control signal SW1 to be shortened. This allows the power converter 100A to not only subject the first switching element 1U to zero-voltage soft switching but also reduce the degree of hard switching of the first switching element 1W.

In addition, in the power converter 100A, when determining in advance that the two-phase resonant currents, namely, the V-phase resonant current and the W-phase resonant current, should be going to flow simultaneously, the control system 50A sets the additional time Tad of the second dead time period Td2 (= Td1 + Tad) corresponding to the U-phase at a randomly selected time shorter than Tav + (Tres/2). This allows for shifting (postponing on the time axis) the high-level period of the second control signal SV6 for the third switching element 6V for the V-phase and shortening the overlap period between the high-level period of the second control signal SV6 and the dead time period (second dead time period Td2) just before the high-level period of the first control signal SV1 without having the controller 51A directly control the V-phase switch 8V. In the power converter 100A, having the control system 50A perform the second control operation not only reduces the degree of hard switching of the first switching element 1V but also allows the first switching element 1W to be subjected to zero-voltage soft switching.

Alternatively, the control system 50A may set the second dead time period Td2 (= Td1 + Tad) for the W-phase, instead of the additional time Tad of the second dead time period Td2 (= Td1 + Tad) for the V-phase, at a randomly selected time shorter than Taw + (Tres/2). This allows the overlap period between the high-level period of the second control signal SW6 and the dead time period (second dead time period Td2) just before the high-level period of the first control signal SW1 to be shortened. This allows the power converter 100A to not only subject the first switching element 1V to zero-voltage soft switching but also reduce the degree of hard switching of the first switching element 1W as well.

### (2.1.1.2) When discharging operation is performed on resonant capacitor

When the discharging operation is performed on the resonant capacitor 9, the polarity of the load current and the polarity of the current iL1 are negative, which is a difference from a situation where the charging operation is performed on the resonant capacitor 9. In addition, the overlap period between the high-level period of the second control signal for the fourth switching element 7, instead of the third switching element 6, and the dead time period (second dead time period Td2) just before the high-level period of the first control signal is shortened by shifting (postponing on the time axis) the fourth switching element 7, which is another difference from the situation where the charging operation is performed on the resonant capacitor.

In the power converter 100A, making the control system 50A perform the second control operation on a first switch when determining in advance that two-phase resonant currents should be going to flow simultaneously allows for shortening the overlap period between the two-phase resonant currents. In the power converter 100A, the control system 50A performs the second control operation on the first switch, thus reducing the degree of hard switching of a second switching element 2 corresponding to the first switch out of the two switches 8 and subjecting a second switching element 2 corresponding to another switch 8 different from the first switch to zero-voltage soft switching.

### (3) Advantages

The power converter 100A according to the sixth embodiment, as well as the power converter 100A according to the third embodiment, also allows for stopping performing zero-voltage soft switching without making pulse width modulation of the second control signal for each of the plurality of switches 8 provided for the purpose of making zero-voltage soft switching.

In addition, in the power converter 100A according to the sixth embodiment, as well as in the power converter 100A according to the third embodiment, the control system 50A also includes the controller 51A and the signal generator circuit 52. This configuration allows for performing zero-voltage soft switching with more reliability without having the controller 51A directly control a plurality of switches 8 provided for the purpose of making zero-voltage soft switching. More specifically, there is no need for the controller 51A to generate a second control signal in order to directly control the plurality of switches 8 provided for the purpose of making zero-voltage soft switching. This allows the controller 51A to make zero-voltage soft switching of each of the plurality of first switching elements 1 and the plurality of second switching elements 2 even without directly controlling the plurality of switches 8.

Furthermore, in the power converter 100A according to the sixth embodiment, when determining that the resonant currents respectively passing through two or more switches 8 belonging to the plurality of switches 8 should be going to flow simultaneously through the resonant inductor L1 when a second control signal having a preset high-level period is applied to each of the plurality of switches 8, the control system 50A performs the second control operation on a first switch which is one of the two or more switches 8.

This configuration allows, when determining that resonant currents respectively passing through two or more switches 8 belonging to the plurality of switches 8 should be going to flow simultaneously through the resonant inductor L1, the control system 50A to make zero-voltage soft switching of a target switching element corresponding to the switch 8 on which the control system 50A performs the first control operation. This allows the control system 50A to stop performing zero-voltage soft switching on the target switching element corresponding to the first switch on which the control system 50A performs the second control operation even without making pulse width modulation of the second control signal for each of the plurality of switches 8 provided for the purpose of making zero-voltage soft switching.

### (Seventh embodiment)

### (1) Configuration

A power converter 100B according to a seventh embodiment has the same configuration as the power converter 100B according to the fifth embodiment (refer to FIG. 17), and therefore, illustration and description thereof will be omitted herein.

### (2) Operation

The power converter 100B according to the seventh embodiment operates in substantially the same way as the power converter 100B according to the fifth embodiment. When performing the second control operation, the control system 50 according to this embodiment causes the entire high-level period of the second control signal for the first switch to overlap with a part of the high-level period of the first control signal for a target switching element corresponding to the first switch, which is a difference from the second control operation performed by the control system 50 according to the fifth embodiment.

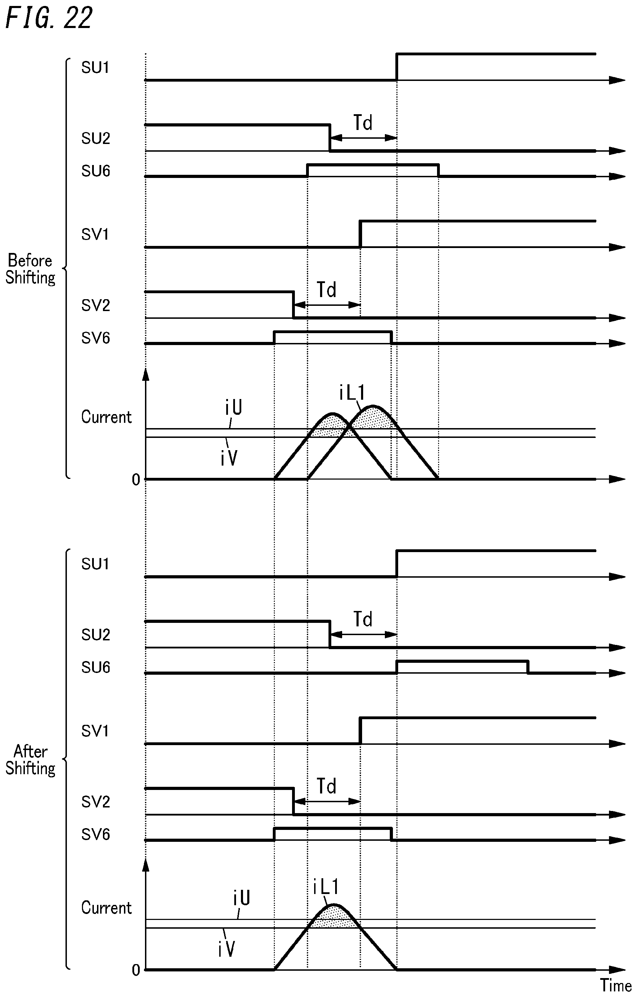

The upper part of FIG. 22 is a timing chart showing a situation where the controller 51 has determined that U- and V-phase resonant currents should be going to flow simultaneously. In this case, in the upper part of the timing chart of FIG. 22, shown are the respective waveforms of the first control signals SU1, SU2, SV1, and SV2, the second control signals SU6 and SV6, the load currents iU and iV, and the current iL1 before shifting is made by performing the second control operation. In the example shown in FIG. 22, the absolute value of the load current iU is larger than the absolute value of the load current iV. Note that although the controller 51 uses the switch 8U, through which a load current having the larger absolute value flows, as the first switch in this embodiment, the switch 8V, through which a load current having the smaller absolute value flows, may also be used as the first switch.

On the other hand, the lower part of FIG. 22 is a timing chart showing a situation where the controller 51 has performed shifting as the second control operation. In this case, the lower part of FIG. 22 is a timing chart showing the respective waveforms of the first control signals SU1, SU2, SV1, and SV2, the second control signals SU6 and SV6, the load currents iU and iV, and the current iL1. Note that FIG. 22 shows a timing chart for a part of one cycle of the carrier signal.

In the power converter 100B according to the seventh embodiment, if the controller 51 does not perform the second control operation, then the resonant capacitor 9U, 9V has not been charged fully yet by a point in time when the first control signal SU1, SV1 makes a transition from the low-level period to the high-level period (i.e., the end time of the dead time period Td corresponding to each of the U- and V-phases). Thus, the voltage across each of the first switching elements 1U, 1V has not decreased to zero by the end time of the dead time period Td corresponding to each of the U- and V-phases. As a result, in the power converter 100B, the first switching element 1U, 1V is switched by hard switching.

In a situation where the charging operation is performed on the resonant capacitor 9, when determining that the U-phase resonant current and the V-phase resonant current should be going to flow simultaneously, the controller 51 causes the entire high-level period of the second control signal SU6 to overlap with the high-level period of the first control signal SU1 by shifting (postponing on the time axis) the high-level period of the second control signal SU6 for the U-phase third switching element 6. The shifted time Ts set by the controller 51 is given by the equation: Ts = Tau + (Tres/2). In the power converter 100B, having the controller 51 perform the second control operation allows for not only stopping performing zero-voltage soft switching on the first switching element 1U without making pulse width modulation of the second control signal for each of the plurality of switches 8 provided for the purpose of making zero-voltage soft switching but also subjecting the first switching element 1V to zero-voltage soft switching as well.

Alternatively, the controller 51 may also cause the entire high-level period of the second control signal SV6 to overlap with the high-level period of the first control signal SV1 by shifting (postponing on the time axis) the high-level period of the second control signal SV6, instead of the high-level period of the second control signal SU6. In that case, the shifted time Ts set by the controller 51 is expressed by the equation: Ts = Tav + (Tres/2). In the power converter 100B, having the controller 51 perform the second control operation allows for subjecting the first switching element 1U to zero-voltage soft switching.

In the foregoing description, it has been described as an example how shifting is made by performing the second control operation in a situation where the controller 51 has determined that two-phase resonant currents, namely, the U-phase and V-phase resonant currents, should be going to flow simultaneously. Even when two-phase resonant currents, namely, the U-phase and W-phase resonant currents, are going to flow simultaneously or two-phase resonant currents, namely, the V-phase and W-phase resonant currents, are going to flow simultaneously, shifting may also be made by performing the second control operation based on the same idea (i.e., using the same algorithm) as in a situation where shifting is made by performing the second control operation when the controller 51 has determined that the two-phase resonant currents, namely, the U-phase and V-phase resonant currents, should be going to flow simultaneously.

### (3) Advantages

The power converter 100B according to the seventh embodiment, as well as the power converter 100B according to the fifth embodiment, also allows for stopping performing zero-voltage soft switching without making pulse width modulation of the second control signal for each of the plurality of switches 8 provided for the purpose of making zero-voltage soft switching.

In addition, in the power converter 100B according to the seventh embodiment, as well as in the power converter 100B according to the fifth embodiment, when determining that resonant currents respectively passing through two or more switches 8 belonging to the plurality of switches 8 should be going to flow simultaneously through the resonant inductor L1, the control system 50 may make zero-voltage soft switching of a target switching element corresponding to the switch 8 on which the control system 50 performs the first control operation. This allows the control system 50 to stop performing zero-voltage soft switching on the target switching element corresponding to the first switch on which the control system 50 performs the second control operation even without making pulse width modulation of the second control signal for each of the plurality of switches 8 provided for the purpose of making zero-voltage soft switching.

### (Eighth embodiment)

### (1) Configuration

A power converter 100A according to an eighth embodiment has the same configuration as the power converter 100A according to the third embodiment (refer to FIG. 5), and therefore, illustration and description thereof will be omitted herein.

### (2) Operation

The power converter 100A according to the eighth embodiment operates in substantially the same way as the power converter 100A according to the sixth embodiment. When performing the second control operation, the control system 50A according to this embodiment causes the entire high-level period of the second control signal for the first switch to overlap with the high-level period of the first control signal for a target switching element corresponding to the first switch, which is a difference from the second control operation performed by the control system 50A according to the sixth embodiment.

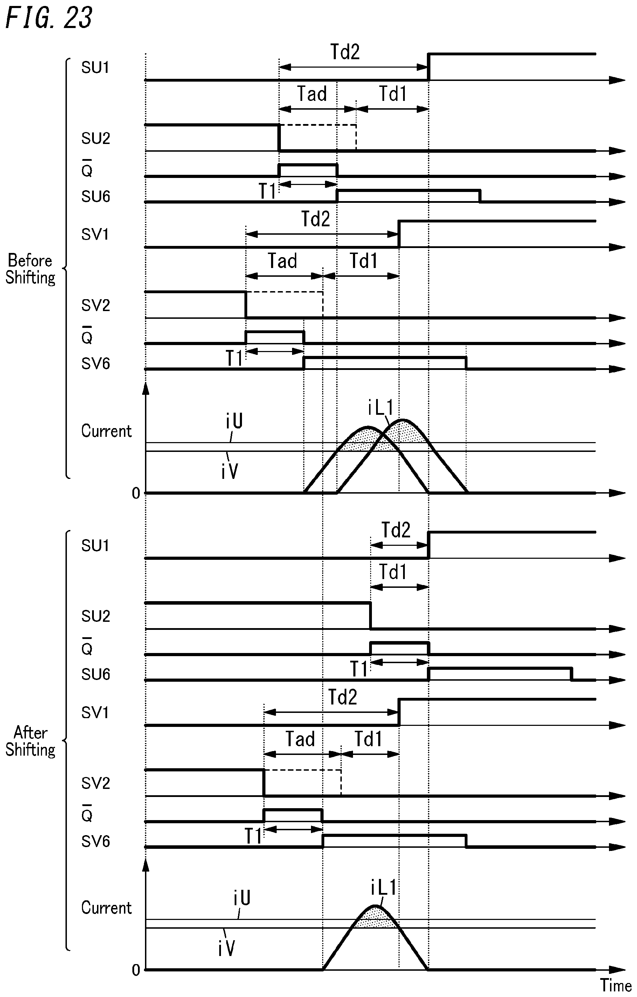

The upper part of FIG. 23 is a timing chart showing a situation where the control system 50A has determined that U- and V-phase resonant currents should be going to flow simultaneously. In this case, in the upper part of the timing chart of FIG. 23, shown are the respective waveforms of the first control signals SU1, SU2, SV1, and SV2, the second control signals SU6 and SV6, the load currents iU and iV, and the current iL1 before shifting is made by performing the second control operation. In the example shown in FIG. 23, the absolute value of the load current iU is larger than the absolute value of the load current iV. Note that although the control system 50A uses the switch 8U, through which a load current having the larger absolute value flows, as the first switch in this embodiment, the switch 8V, through which a load current having the smaller absolute value flows, may also be used as the first switch.

On the other hand, the lower part of FIG. 23 is a timing chart showing a situation where the control system 50A has performed shifting as the second control operation. In this case, the lower part of FIG. 23 is a timing chart showing the respective waveforms of the first control signals SU1, SU2, SV1, and SV2, the second control signals SU6 and SV6, the load currents iU and iV, and the current iL1. Note that FIG. 23 shows a timing chart for a part of one cycle of the carrier signal.

In the power converter 100A according to the eighth embodiment, if the control system 50A does not perform the second control operation, then the resonant capacitor 9U, 9V has not been charged fully yet by a point in time when the first control signal SU1, SV1 makes a transition from the low-level period to the high-level period (i.e., the end time of the dead time period Td corresponding to each of the U- and V-phases). Thus, the voltage across each of the first switching elements 1U, 1V has not decreased to zero by the end time of the dead time period Td corresponding to each of the U- and V-phases. As a result, in the power converter 100A, the first switching element 1U, 1V is switched by hard switching.

In a situation where the charging operation is performed on the resonant capacitor 9, when determining that the U-phase resonant current and the V-phase resonant current should be going to flow simultaneously, the control system 50A causes the entire high-level period of the second control signal SU6 to overlap with the high-level period of the first control signal SU1 by shifting (postponing on the time axis) the high-level period of the second control signal SU6 for the U-phase third switching element 6. The shifted time Ts set by the controller 51A of the control system 50A is given by the equation: Ts = Tau + (Tres/2). In the power converter 100A, having the control system 50A perform the second control operation allows for not only stopping performing zero-voltage soft switching on the first switching element 1U without making pulse width modulation of the second control signal for each of the plurality of switches 8 provided for the purpose of making zero-voltage soft switching but also subjecting the first switching element 1V to zero-voltage soft switching as well.

Alternatively, the control system 50A may also cause the entire high-level period of the second control signal SV6 to overlap with the high-level period of the first control signal SV1 by shifting (postponing on the time axis) the high-level period of the second control signal SV6, instead of the high-level period of the second control signal SU6. In that case, the shifted time Ts set by the controller 51A is expressed by the equation: Ts = Tav + (Tres/2). In the power converter 100A, having the control system 50A perform the second control operation allows for not only subjecting the first switching element 1U to zero-voltage soft switching but also reducing the degree of hard switching of the first switching element 1V as well.

In the foregoing description, it has been described, as an example, how shifting is made by performing the second control operation in a situation where the control system 50A has determined that two-phase resonant currents, namely, the U-phase and V-phase resonant currents, should be going to flow simultaneously (overlap with each other). Even when two-phase resonant currents, namely, the U-phase and W-phase resonant currents, are going to flow simultaneously or two-phase resonant currents, namely, the V-phase and W-phase resonant currents, are going to flow simultaneously, shifting may also be made by performing the second control operation based on the same idea (i.e., using the same algorithm) as in a situation where shifting is made by performing the second control operation when the control system 50A has determined that the two-phase resonant currents, namely, the U-phase and V-phase resonant currents, should be going to flow simultaneously.

### (3) Advantages

The power converter 100A according to the eighth embodiment, as well as the power converter 100A according to the third embodiment, also allows for stopping performing zero-voltage soft switching without making pulse width modulation of the second control signal for each of the plurality of switches 8 provided for the purpose of making zero-voltage soft switching.

In addition, in the power converter 100A according to the eighth embodiment, as well as in the power converter 100A according to the third embodiment, the control system 50A also includes the controller 51A and the signal generator circuit 52. This configuration allows for performing zero-voltage soft switching with more reliability without having the controller 51A directly control a plurality of switches 8 provided for the purpose of making zero-voltage soft switching. More specifically, there is no need for the controller 51A to generate a second control signal in order to directly control the plurality of switches 8 provided for the purpose of making zero-voltage soft switching. This allows the controller 51A to make zero-voltage soft switching of each of the plurality of first switching elements 1 and the plurality of second switching elements 2 even without directly controlling the plurality of switches 8.

In addition, in the power converter 100A according to the eighth embodiment, as well as in the power converter 100A according to the sixth embodiment, when determining that resonant currents respectively passing through two or more switches 8 belonging to the plurality of switches 8 should be going to flow simultaneously through the resonant inductor L1, the control system 50A may make zero-voltage soft switching of a target switching element corresponding to the switch 8 on which the control system 50A performs the first control operation. This allows the control system 50A to stop performing zero-voltage soft switching on the target switching element corresponding to the first switch on which the control system 50A performs the second control operation even without making pulse width modulation of the second control signal for each of the plurality of switches 8 provided for the purpose of making zero-voltage soft switching.

### (Ninth embodiment)

### (1) Configuration

A power converter 100B according to a ninth embodiment has the same configuration as the power converter 100B according to the fifth embodiment (refer to FIG. 17), and therefore, illustration and description thereof will be omitted herein.

### (2) Operation

The power converter 100B according to the ninth embodiment operates in substantially the same way as the power converter 100B according to the fifth embodiment.

In the power converter 100B according to the ninth embodiment, even when the control system 50 determines that resonant currents, respectively passing through three switches 8 belonging to the plurality of switches 8 should be going to flow simultaneously (i.e., even when the control system 50 determines in advance that three-phase resonant currents should be going to flow simultaneously), the control system 50 also performs the second control operation, which is a difference from the power converter 100B according to the fifth embodiment. As used herein, the expression "when determining that resonant currents, respectively passing through three switches 8 belonging to the plurality of switches 8, should be going to flow simultaneously" refers to a situation where it has been presumed in advance that the resonant currents respectively passing through three switches 8 would flow simultaneously through the resonant inductor L1. The controller 51 determines that the three-phase resonant currents should be going to flow simultaneously if, for example, the time lag between the beginning time of the high-level period of the second control signal SU6 corresponding to the U-phase and the beginning time of the high-level period of the first control signal SV1 corresponding to the V-phase, the time lag between the beginning time of the high-level period of the second control signal SV6 corresponding to the V-phase and the beginning time of the high-level period of the first control signal SW1 corresponding to the W-phase, and the time lag between the beginning time of the high-level period of the second control signal SW6 corresponding to the W-phase and the beginning time of the high-level period of the first control signal SU1 corresponding to the U-phase are all less than a threshold value.

Supposing the capacitance of each of the plurality of resonant capacitors 9U, 9V, and 9W is C, if a U-phase current, a V-phase current, and a W-phase current flow simultaneously through the resonant inductor L1, a capacitor having a combined capacitance (= 3 × C) of the resonant capacitor 9U, the resonant capacitor 9V, and the resonant capacitor 9W is connected to the resonant inductor L1 in series in an equivalent circuit. Thus, in the power converter 100B, if three-phase currents flow simultaneously through the resonant inductor L1, then the resonant frequency of a resonant circuit including the resonant inductor L1 changes compared to a situation where a singlephase current flows through the resonant inductor L1. Consequently, the power converter 100B may be unable to make zero-voltage soft switching. Note that unless the control system 50 performs the second control operation, such a phenomenon that three-phase resonant currents flow simultaneously is likely to occur when a servo motor serving as the AC load RA1 is rotating at low speeds.

When performing the second control operation, the control system 50 shortens the overlap period between a preset second control signal and the dead time period Td by shifting the second control signal by the shifted time Ts with respect to a first switch belonging to the three switches 8, and applies the preset second control signal to a second switch different from the first switch which belongs to the plurality of switches 8. Also, as for a third switch different from the first and second switches which belong to the three switches 8, the control system 50 shortens the overlap period between the preset second control signal and the dead time period Td by shifting the second control signal by the shifted time Ts. When the control system 50 performs the second control operation, the first switch is one of the three switches 8 and corresponds to a first switching circuit 10 belonging to three switching circuits 10. The three switching circuits 10 are switching circuits 10 respectively corresponding to the three switches 8 which belong to the plurality of switching circuits 10. The three switching circuits 10 respectively cause load currents having mutually different absolute values to flow therethrough. The first switching circuit 10 causes a load current, of which the absolute value is the largest in the three switching circuits 10, to flow therethrough. The third switch is one of the three switches 8 and corresponds to a second switching circuit 10 belonging to the three switching circuits 10. The three switching circuits 10 are switching circuits 10 respectively corresponding to the three switches 8 which belong to the plurality of switching circuits 10. The three switching circuits 10 respectively cause load currents having the mutually different absolute values to flow therethrough. The second switching circuit 10 causes a load current, of which the absolute value is the second largest in the three switching circuits 10, to flow therethrough.

### (2.1) When charging operation is performed on resonant capacitor

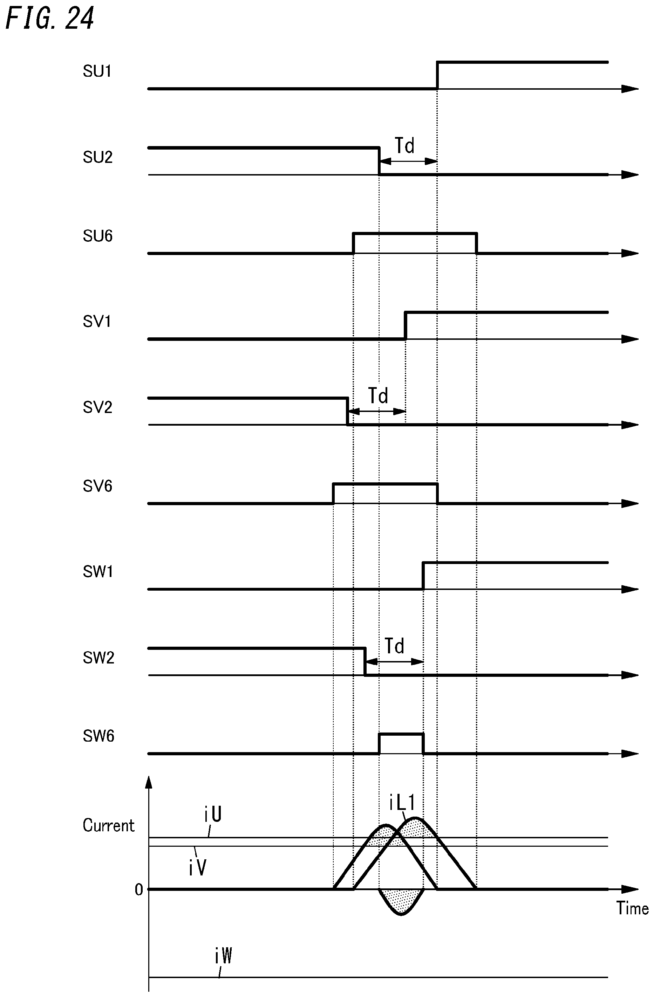

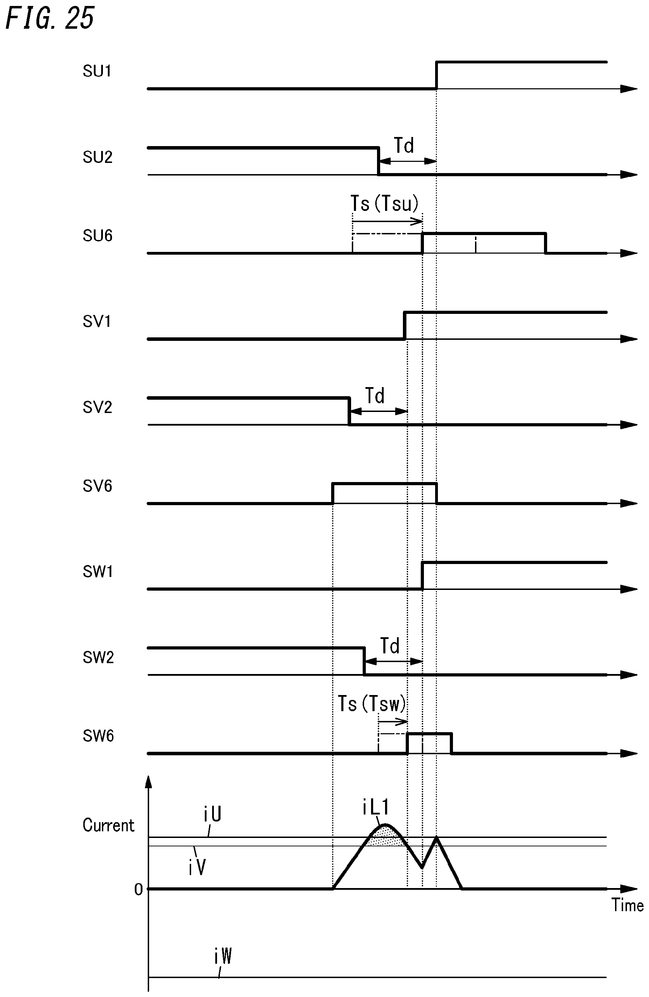

The second control operation to be performed when the control system 50 has determined in advance that three-phase resonant currents, namely, U-, V-, and W-phase resonant currents, should be going to flow simultaneously, will be described with reference to FIGS. 24 and 25.

FIG. 24 is a timing chart showing the respective waveforms of the first control signals SU1, SU2, SV1, SV2, SW1, and SW2, the second control signals SU6, SV6, and SW6, the load currents iU, iV, and iW, and the current iL1 as for a situation where the control system 50 has determined that three-phase resonant currents should be going to flow simultaneously but has not started performing the second control operation yet. On the other hand, FIG. 25 is a timing chart showing the respective waveforms of the first control signals SU1, SU2, SV1, SV2, SW1, and SW2, the second control signals SU6, SV6, and SW6, the load currents iU, iV, and iW, and the current iL1 as for a situation where the control system 50 has performed the second control operation. Note that FIGS. 24 and 25 are timing charts for a part of one cycle of the carrier signal.

In the power converter 100B, if the control system 50 does not perform the second control operation, then the resonant capacitor 9U, 9V, 9W has not been charged fully yet by the end time of the dead time period Td corresponding to each of the U-, V-, and W-phases. Thus, unless the control system 50 performs the second control operation, the voltage across each of the first switching elements 1U, 1V, and 1W has not decreased to zero by the end time of the dead time period Td corresponding to each of the U-, V-, and W-phases. As a result, in the power converter 100B, the first switching element 1U, 1V, 1W is switched by hard switching.

The control system 50 compares the respective absolute values of the load currents iU, iV, and iW with each other to shift, by a shifted time Ts (Tsw), the high-level period of the second control signal SW6 for the switch 8W, through which a load current having the largest absolute value flows, and also shift, by a shifted time Ts (Tsu), the high-level period of the second control signal SU6 for the switch 8U, through which a load current having the second largest absolute value flows. As can be seen from the waveform of the current iL1 shown in FIG. 25, this allows for subjecting the first switching element 1V to zero-voltage soft switching and reducing the degree of hard switching of the first switching element 1U and the first switching element 1W.

### (2.2) When discharging operation is performed on resonant capacitor

In the power converter 100B, if the control system 50 does not perform the second control operation in a situation where three-phase resonant currents overlap with each other, then the voltage V2u, V2v, V2w across each of the second switching elements 2U, 2V, and 2W has not decreased to zero by the point in time when each of the first control signals SU2, SV2, and SW2 makes a transition from the low-level period to the high-level period (i.e., by the end time of the dead time period corresponding to each of the U-, V-, and W-phases). That is to say, if the control system 50 does not perform the second control operation, electricity has not been discharged from any of the resonant capacitors 9U, 9V, and 9W yet by the end time of the dead time period corresponding to each of the U-, V-, and W-phases. As a result, in the power converter 100B, the second switching element 2U, 2V, 2W is switched by hard switching.

On the other hand, when determining that the three-phase resonant currents should overlap with each other, the control system 50 performs the second control operation on each of the first and third switches and performs the first control operation on the second switch. This allows the control system 50 to subject the second switching element 2 corresponding to the second switch to zero-voltage soft switching and stop performing zero-voltage soft switching on the second switching element 2 corresponding to the first switch and the second switching element 2 corresponding to the third switch.

### (3) Advantages

The power converter 100B according to the ninth embodiment, as well as the power converter 100B according to the fifth embodiment, also allows for stopping performing zero-voltage soft switching without making pulse width modulation of the second control signal for each of the plurality of switches 8 provided for the purpose of making zero-voltage soft switching.

In addition, in the power converter 100B according to the ninth embodiment, when determining that resonant currents respectively passing through three switches 8 belonging to the plurality of switches 8 should be going to flow simultaneously through the resonant inductor L1 when a second control signal having a preset high-level period is applied to each of the plurality of switches 8, the control system 50 performs the second control operation on the first and third switches belonging to the three switches 8.

This configuration allows, when determining that resonant currents respectively passing through three switches 8 belonging to the plurality of switches 8 should be going to flow simultaneously through the resonant inductor L1, the control system 50 to make zero-voltage soft switching of a target switching element corresponding to the switch 8 on which the control system 50 performs the first control operation. This allows the control system 50 to reduce the degree of hard switching of the target switching elements respectively corresponding to the first and third switches on which the control system 50 performs the second control operation even without making pulse width modulation of the second control signal for each of the plurality of switches 8 provided for the purpose of making zero-voltage soft switching.

Optionally, the control system 50 may be configured to stop performing zero-voltage soft switching on randomly selected first and third switches irrespective of the relation in magnitude between the respective absolute values of the load currents.

### (Tenth embodiment)

### (1) Configuration

A power converter 100A according to a tenth embodiment has the same configuration as the power converter 100A according to the third embodiment (refer to FIG. 5), and therefore, illustration and description thereof will be omitted herein.

### (2) Operation

The power converter 100A according to the tenth embodiment operates in substantially the same way as the power converter 100A according to the sixth embodiment.

In the power converter 100A according to the tenth embodiment, even when the control system 50A determines that resonant currents, respectively passing through three switches 8 belonging to the plurality of switches 8 should be going to flow simultaneously (i.e., even when the control system 50A determines in advance that three-phase resonant currents should be going to flow simultaneously), the control system 50A also performs the second control operation, which is a difference from the power converter 100A according to the sixth embodiment. As used herein, the expression "when determining that resonant currents, respectively passing through three switches 8 belonging to the plurality of switches 8, should be going to flow simultaneously" refers to a situation where it has been presumed in advance that the resonant currents respectively passing through three switches 8 would flow simultaneously through the resonant inductor L1. The controller 51 determines that the three-phase resonant currents should be going to flow simultaneously if, for example, the time lag between the beginning time of the high-level period of the second control signal SU6 corresponding to the U-phase and the beginning time of the high-level period of the first control signal SV1 corresponding to the V-phase, the time lag between the beginning time of the high-level period of the second control signal SV6 corresponding to the V-phase and the beginning time of the high-level period of the first control signal SW1 corresponding to the W-phase, and the time lag between the beginning time of the high-level period of the second control signal SW6 corresponding to the W-phase and the beginning time of the high-level period of the first control signal SU1 corresponding to the U-phase are all less than a threshold value.

When performing the second control operation, the control system 50A shortens, with respect to a first switch which is one of the three switches 8, the additional time Tad of the dead time period for the switching circuit 10 corresponding to the first switch to synchronize the beginning time of the high-level period of the second control signal for the first switch with the beginning time of the high-level period of a target switching element of a switching circuit 10 corresponding to a second switch. In addition, the control system 50A also shortens, with respect to a third switch different from the first and second switches which belongs to the three switches 8, the additional time Tad of the dead time period for the switching circuit 10 corresponding to the third switch to synchronize the beginning time of the high-level period of the second control signal for the third switch with the beginning time of the high-level period of a target switching element of a switching circuit 10 corresponding to the first switch. When the control system 50A performs the second control operation, the first switch is one of the three switches 8 and corresponds to a first switching circuit 10 belonging to three switching circuits 10. The three switching circuits 10 are switching circuits 10 respectively corresponding to the three switches 8 which belong to the plurality of switching circuits 10. The three switching circuits 10 respectively cause load currents having mutually different absolute values to flow therethrough. The first switching circuit 10 causes a load current, of which the absolute value is the largest in the three switching circuits 10, to flow therethrough. The third switch is one of the three switches 8 and corresponds to a second switching circuit belonging to the three switching circuits 10. The three switching circuits 10 are switching circuits 10 respectively corresponding to the three switches 8 which belong to the plurality of switching circuits 10. The three switching circuits 10 respectively cause load currents having the mutually different absolute values to flow therethrough. The second switching circuit 10 causes a load current, of which the absolute value is the second largest in the three switching circuits 10, to flow therethrough.

### (2.1) When charging operation is performed on resonant capacitor

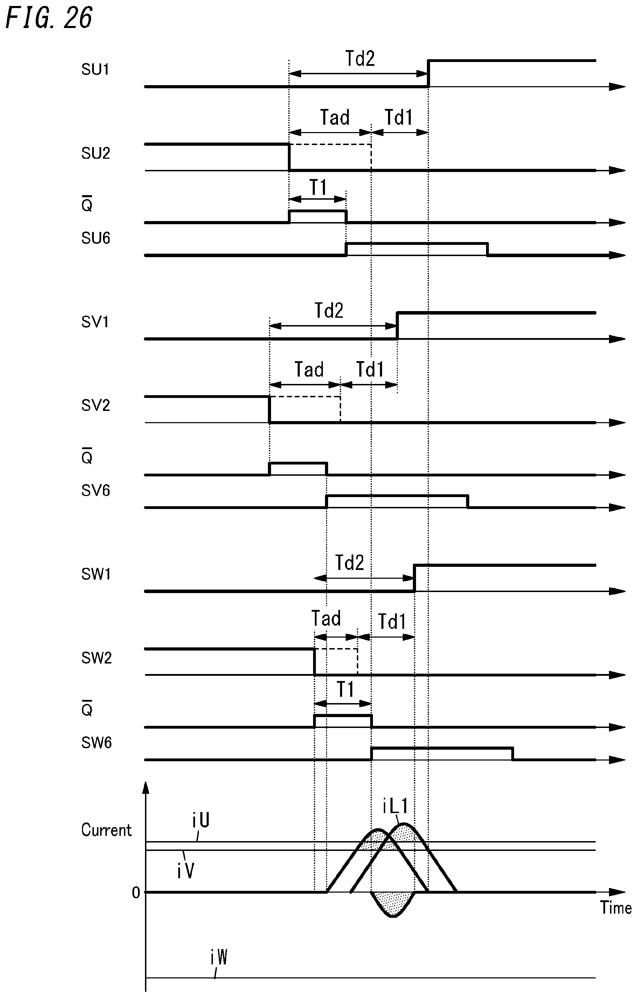

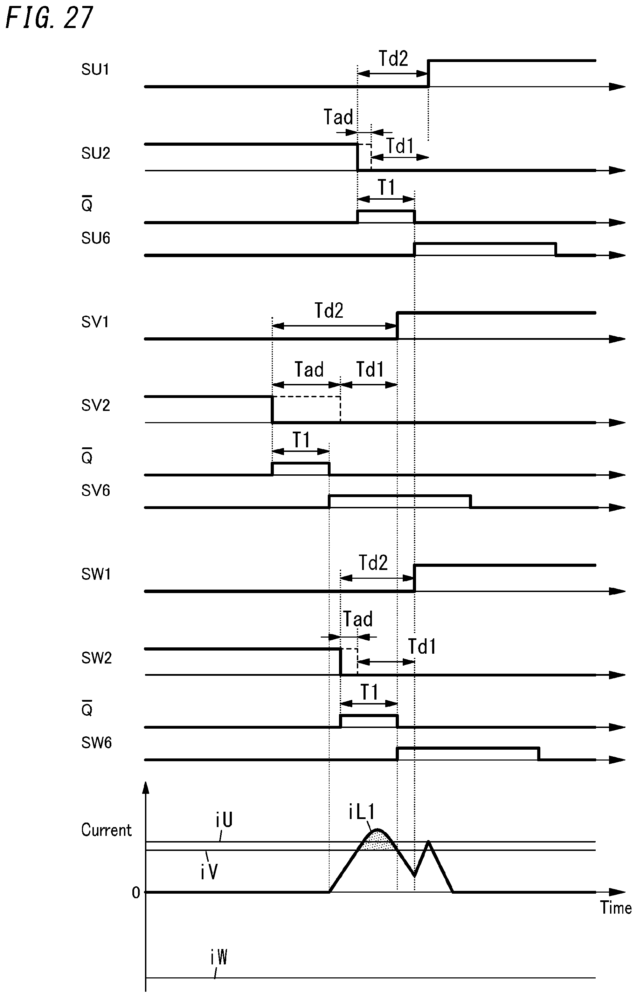

The second control operation to be performed when the control system 50A has determined in advance that three-phase resonant currents, namely, U-, V-, and W-phase resonant currents, should be going to flow simultaneously will be described with reference to FIGS. 26 and 27.

FIG. 26 is a timing chart showing the respective waveforms of the first control signals SU1, SU2, SV1, SV2, SW1, and SW2, the second control signals SU6, SV6, and SW6, the load currents iU, iV, and iW, and the current iL1 as for a situation where the control system 50A has determined that three-phase resonant currents should be going to flow simultaneously but has not started performing the second control operation yet. On the other hand, FIG. 27 is a timing chart showing the respective waveforms of the first control signals SU1, SU2, SV1, SV2, SW1, and SW2, the second control signals SU6, SV6, and SW6, the load currents iU, iV, and iW, and the current iL1 as for a situation where the control system 50A has performed the second control operation. Note that FIGS. 26 and 27 are timing charts for a part of one cycle of the carrier signal.

In the power converter 100A, if the control system 50A does not perform the second control operation, then the resonant capacitor 9U, 9V, 9W has not been charged fully yet by the end time of the dead time period Td corresponding to each of the U-, V-, and W-phases. Thus, unless the control system 50A performs the second control operation, the voltage across each of the first switching elements 1U, 1V, and 1W has not decreased to zero by the end time of the dead time period Td corresponding to each of the U-, V-, and W-phases. As a result, in the power converter 100A, the first switching element 1U, 1V, 1W is switched by hard switching.

The control system 50A compares the respective absolute values of the load currents iU, iV, iW with each other to shorten the high-level period of the second control signal SW6 for the first switch (switch 8W), through which a load current having the largest absolute value flows, and also shorten the high-level period of the second control signal SU6 for the third switch (switch 8U), through which a load current having the second largest absolute value flows. As can be seen from the waveform of the current iL1 shown in FIG. 27, this allows for subjecting the first switching element 1V to zero-voltage soft switching and reducing the degree of hard switching of the first switching element 1U and the first switching element 1W.

### (2.2) When discharging operation is performed on resonant capacitor

In the power converter 100A, if the control system 50A does not perform the second control operation in a situation where three-phase resonant currents overlap with each other, then the voltage V2u, V2v, V2w across each of the second switching elements 2U, 2V, and 2W has not decreased to zero by the point in time when each of the first control signals SU2, SV2, and SW2 makes a transition from the low-level period to the high-level period (i.e., by the end time of the dead time period corresponding to each of the U-, V-, and W-phases). That is to say, if the control system 50A does not perform the second control operation, electricity has not been discharged from any of the resonant capacitors 9U, 9V, and 9W yet by the end time of the dead time period corresponding to each of the U-, V-, and W-phases. As a result, in the power converter 100A, the second switching element 2U, 2V, 2W is switched by hard switching.

On the other hand, when determining that the three-phase resonant currents should overlap with each other, the control system 50A performs the second control operation on each of the first and third switches and performs the first control operation on the second switch. This allows the control system 50A to subject the second switching element 2 corresponding to the second switch to zero-voltage soft switching and reduce the degree of hard switching of the second switching element 2 corresponding to the first switch and the second switching element 2 corresponding to the third switch.

### (3) Advantages

The power converter 100A according to the tenth embodiment, as well as the power converter 100A according to the third embodiment, also allows for stopping performing zero-voltage soft switching without making pulse width modulation of the second control signal for each of the plurality of switches 8 provided for the purpose of making zero-voltage soft switching.

In addition, in the power converter 100A according to the tenth embodiment, as well as in the power converter 100A according to the third embodiment, the control system 50A also includes the controller 51A and the signal generator circuit 52. This configuration allows for performing zero-voltage soft switching with more reliability without having the controller 51A directly control a plurality of switches 8 provided for the purpose of making zero-voltage soft switching. More specifically, there is no need for the controller 51A to generate a second control signal in order to directly control the plurality of switches 8 provided for the purpose of making zero-voltage soft switching. This allows the controller 51A to make zero-voltage soft switching of each of the plurality of first switching elements 1 and the plurality of second switching elements 2 even without directly controlling the plurality of switches 8.

Furthermore, in the power converter 100A according to the tenth embodiment, when determining that resonant currents respectively passing through three switches 8 belonging to the plurality of switches 8 should be going to flow simultaneously through the resonant inductor L1 when a second control signal having a preset high-level period is applied to each of the plurality of switches 8, the control system 50A performs the second control operation on the first and third switches belonging to the three switches 8.

This configuration allows, when determining that resonant currents respectively passing through three switches 8 belonging to the plurality of switches 8 should be going to flow simultaneously through the resonant inductor L1, the control system 50A to make zero-voltage soft switching of a target switching element corresponding to the switch 8 on which the first control operation is to be performed. This allows the control system 50A to stop performing zero-voltage soft switching on the target switching elements respectively corresponding to the first and third switches on which the control system 50A performs the second control operation even without making pulse width modulation of the second control signal for each of the plurality of switches 8 provided for the purpose of making zero-voltage soft switching.

Alternatively, the control system 50A may be configured to stop performing zero-voltage soft switching on randomly selected first and third switches irrespective of the relation in magnitude between the respective absolute values of the load currents.

### (Eleventh embodiment)

### (1) Configuration

A power converter 100B according to an eleventh embodiment has the same configuration as the power converter 100B according to the fifth embodiment (refer to FIG. 17), and therefore, illustration and description thereof will be omitted herein.

### (2) Operation

The power converter 100B according to the eleventh embodiment operates in substantially the same way as the power converter 100B according to the ninth embodiment. When performing the second control operation, the control system 50 according to this embodiment causes the entire high-level period of the first switch to overlap with a part of the high-level period of the first control signal for a target switching element corresponding to the first switch and also causes the entire high-level period of the third switch to overlap with a part of the high-level period of the first control signal for a target switching element corresponding to the third switch, which is a difference from the second control operation performed by the control system 50 according to the ninth embodiment.

The timing chart illustrating a situation where the controller 51 has determined that the three-phase resonant currents should be going to flow simultaneously and has not performed shifting as the second control operation yet is the same as FIG. 24 to which reference has already been made for the ninth embodiment. Thus, illustration and description thereof will be omitted herein.

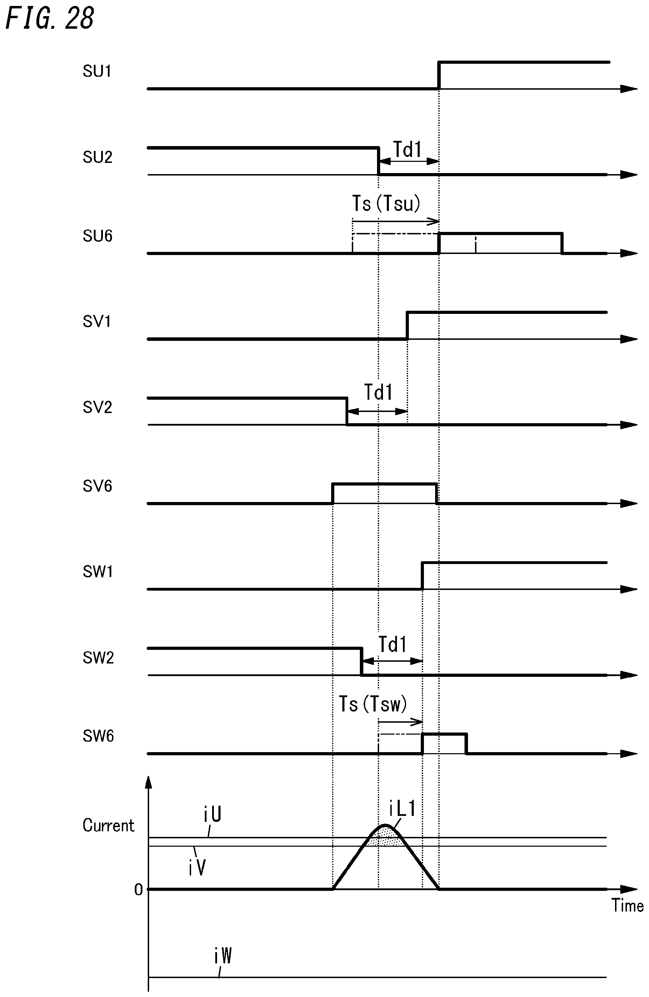

FIG. 28 is a timing chart showing the respective waveforms of the first control signals SU1, SU2, SV1, and SV2, the second control signals SU6 and SV6, the load currents iU and iV, and the current iL1 in a situation where the controller 51 has made shifting by performing the second control operation. Note that FIG. 28 shows a timing chart for a part of one cycle of the carrier signal.

In the power converter 100B according to the eleventh embodiment, if the controller 51 does not perform the second control operation when determining that the three-phase resonant currents should be going to flow simultaneously, then each of the first switching elements 1U, 1V, and 1W is switched by hard switching.

In a situation where the charging operation is performed on the resonant capacitor 9, when determining that three-phase resonant currents should be going to flow simultaneously, the controller 51 causes the entire high-level period of the second control signal SW6 to overlap with a part of the high-level period of the first control signal SW1 by shifting (i.e., postponing on the time axis), by the shifted time Ts, the high-level period of the second control signal SW6 for the third switching element 6W for the W phase. In this case, the controller 51 sets the shifted time Ts (Tsw) at the time lag between the beginning time of the high-level period of the second control signal SW6 that has not been shifted yet (indicated by the two-dot chain in FIG. 26) and the beginning time of the first control signal SW1.

In addition, the controller 51 also causes the entire high-level period of the second control signal SU6 to overlap with a part of the high-level period of the first control signal SU1 by shifting (i.e., postponing on the time axis), by the shifted time Ts (Tsu), the high-level period of the second control signal SU6 for the U-phase third switching element 6U. In this case, the controller 51 sets the shifted time Ts at the time lag between the beginning time of the high-level period of the second control signal SU6 that has not been shifted yet (indicated by the two-dot chain in FIG. 28) and the beginning time of the first control signal SU1.

In the power converter 100B, making the controller 51 perform the second control operation causes the first switching element 1U and the first switching element 1W to be subjected to hard switching and causes the first switching element 1V to be subjected to zero-voltage soft switching.

### (3) Advantages

The power converter 100B according to the eleventh embodiment, as well as the power converter 100B according to the fifth embodiment, also allows for stopping performing zero-voltage soft switching without making pulse width modulation of the second control signal for each of the plurality of switches 8 provided for the purpose of making zero-voltage soft switching.

In the power converter 100B according to the eleventh embodiment, when determining that resonant currents respectively passing through three switches 8 belonging to the plurality of switches 8 should be going to flow simultaneously through the resonant inductor L1 when a second control signal having a preset high-level period is applied to each of the plurality of switches 8, the control system 50 performs the second control operation on the first and third switches belonging to the three switches 8.

This configuration allows, when determining that resonant currents respectively passing through three switches 8 belonging to the plurality of switches 8 should be going to flow simultaneously through the resonant inductor L1, the control system 50 to make zero-voltage soft switching of a target switching element corresponding to the switch 8 on which the control system 50 performs the first control operation. This allows the control system 50 to stop performing zero-voltage soft switching on the target switching elements respectively corresponding to the first and third switches on which the control system 50 performs the second control operation even without making pulse width modulation of the second control signal for each of the plurality of switches 8 provided for the purpose of making zero-voltage soft switching.

Alternatively, the control system 50 may be configured to stop performing zero-voltage soft switching on randomly selected first and third switches irrespective of the relation in magnitude between the respective absolute values of the load currents.

### (Twelfth embodiment)

### (1) Configuration

A power converter 100A according to a twelfth embodiment has the same configuration as the power converter 100A according to the third embodiment (refer to FIG. 5), and therefore, illustration and description thereof will be omitted herein.

### (2) Operation

The power converter 100A according to the twelfth embodiment operates in substantially the same way as the power converter 100A according to the tenth embodiment. When performing the second control operation, the control system 50A according to this embodiment causes the entire high-level period of the second control signal for the first switch to overlap with a part of the high-level period of the first control signal for a target switching element corresponding to the first switch and also causes the entire high-level period of the second control signal for the third switch to overlap with a part of the high-level period of the first control signal for a target switching element corresponding to the third switch, which is a difference from the second control operation performed by the control system 50A according to the tenth embodiment.

The timing chart illustrating a situation where the control system 50A has determined that the three-phase resonant currents should be going to flow simultaneously and has not performed shifting as the second control operation yet is the same as FIG. 26 to which reference has already been made for the ninth embodiment. Thus, illustration and description thereof will be omitted herein.

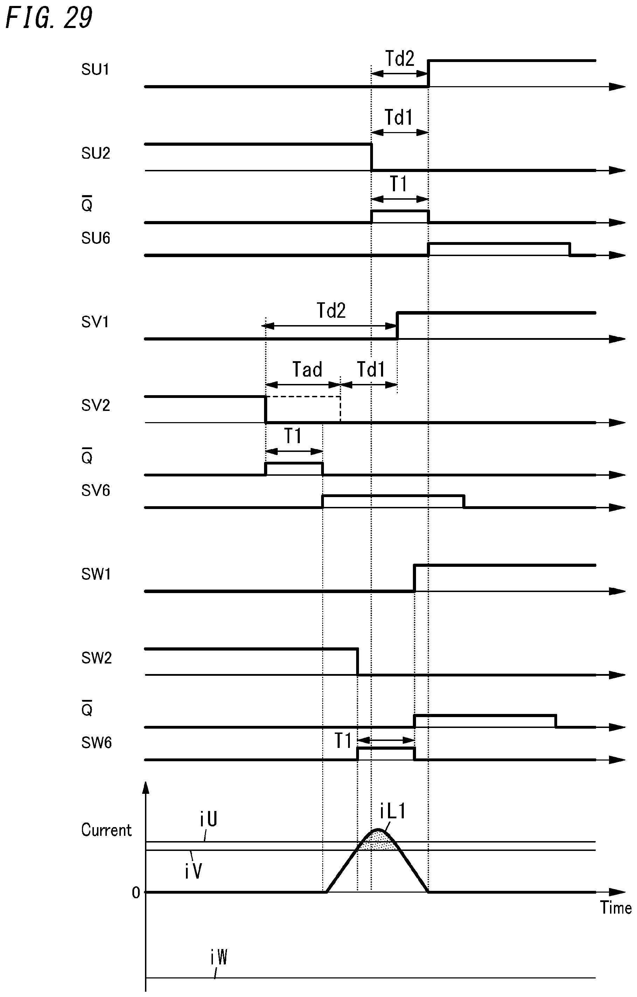

FIG. 29 is a timing chart showing the respective waveforms of the first control signals SU1, SU2, SV1, SV2, the second control signals SU6 and SV6, the load currents iU and iV, and the current iL1 in a situation where the control system 50A has made shifting by performing the second control operation. Note that FIG. 29 shows a timing chart for a part of one cycle of the carrier signal.

In the power converter 100A according to the twelfth embodiment, if the control system 50A does not perform the second control operation when determining that the three-phase resonant currents should be going to flow simultaneously, then each of the first switching elements 1U, 1V, and 1W is switched by hard switching.

In a situation where the charging operation is performed on the resonant capacitor 9, when determining that three-phase resonant currents should be going to flow simultaneously, the control system 50A causes the entire high-level period of the second control signal SW6 to overlap with a part of the high-level period of the first control signal SW1 by setting the additional time Tad of the second dead time period Td2 for the switching circuit 10W corresponding to the third switching element 6W for the W phase at zero.

In addition, the control system 50A also causes the entire high-level period of the second control signal SU6 to overlap with a part of the high-level period of the first control signal SU1 by setting the additional time Tad of the second dead time period Td2 for the switching circuit 10U corresponding to the third switching element 6U for the U phase at zero.

In the power converter 100A, making the control system 50A perform the second control operation causes the first switching element 1U and the first switching element 1W to be subjected to hard switching and causes the first switching element 1V to be subjected to zero-voltage soft switching.

### (3) Advantages

The power converter 100A according to the twelfth embodiment, as well as the power converter 100A according to the third embodiment, also allows for stopping performing zero-voltage soft switching without making pulse width modulation of the second control signal for each of the plurality of switches 8 provided for the purpose of making zero-voltage soft switching.

In addition, in the power converter 100A according to the twelfth embodiment, as well as in the power converter 100A according to the third embodiment, the control system 50A also includes the controller 51A and the signal generator circuit 52. This configuration allows for performing zero-voltage soft switching with more reliability without having the controller 51A directly control a plurality of switches 8 provided for the purpose of making zero-voltage soft switching. More specifically, there is no need for the controller 51A to generate a second control signal in order to directly control the plurality of switches 8 provided for the purpose of making zero-voltage soft switching. This allows the controller 51A to make zero-voltage soft switching of each of the plurality of first switching elements 1 and the plurality of second switching elements 2 even without directly controlling the plurality of switches 8.

Furthermore, in the power converter 100A according to the twelfth embodiment, when determining that resonant currents respectively passing through three switches 8 belonging to the plurality of switches 8 should be going to flow simultaneously through the resonant inductor L1 when a second control signal having a preset high-level period is applied to each of the plurality of switches 8, the control system 50A performs the second control operation on the first and third switches belonging to the three switches 8.

This configuration allows, when determining that resonant currents respectively passing through three switches 8 belonging to the plurality of switches 8 should be going to flow simultaneously through the resonant inductor L1, the control system 50A to make zero-voltage soft switching of a target switching element corresponding to the switch 8 on which the first control operation is to be performed. This allows the control system 50A to stop performing zero-voltage soft switching on the target switching elements respectively corresponding to the first and third switches on which the control system 50A performs the second control operation even without making pulse width modulation of the second control signal for each of the plurality of switches 8 provided for the purpose of making zero-voltage soft switching.

Alternatively, the control system 50A may be configured to stop performing zero-voltage soft switching on randomly selected first and third switches irrespective of the relation in magnitude between the respective absolute values of the load currents.

### (Thirteenth embodiment)

### (1) Configuration

A power converter 100B according to a thirteenth embodiment has the same configuration as the power converter 100B according to the fifth embodiment (refer to FIG. 17), and therefore, illustration and description thereof will be omitted herein.

### (2) Operation

The power converter 100B according to the thirteenth embodiment operates in substantially the same way as the power converter 100B according to the seventh embodiment. The control system 50 according to this embodiment uses a switch 8, corresponding to a phase in which a load current having the smallest absolute value flows, out of the plurality of switches 8 as the first switch and uses another switch 8, corresponding to a phase in which a load current having the largest absolute value flows, as the second switch, which is a difference from the second control operation performed by the control system 50 according to the seventh embodiment.

When performing the second control operation, the control system 50 according to this embodiment extends the overlap period between the high-level period of the second control signal and the high-level period of the first control signal for the target switching element by shifting (i.e., postponing on the time axis) the high-level period of the second control signal for the first switch to shorten the overlap period between the high-level period of the first switch and the dead time period just before the high-level period of the target switching element corresponding to the first switch, which is a difference from the second control operation performed by the control system 50 according to the seventh embodiment.

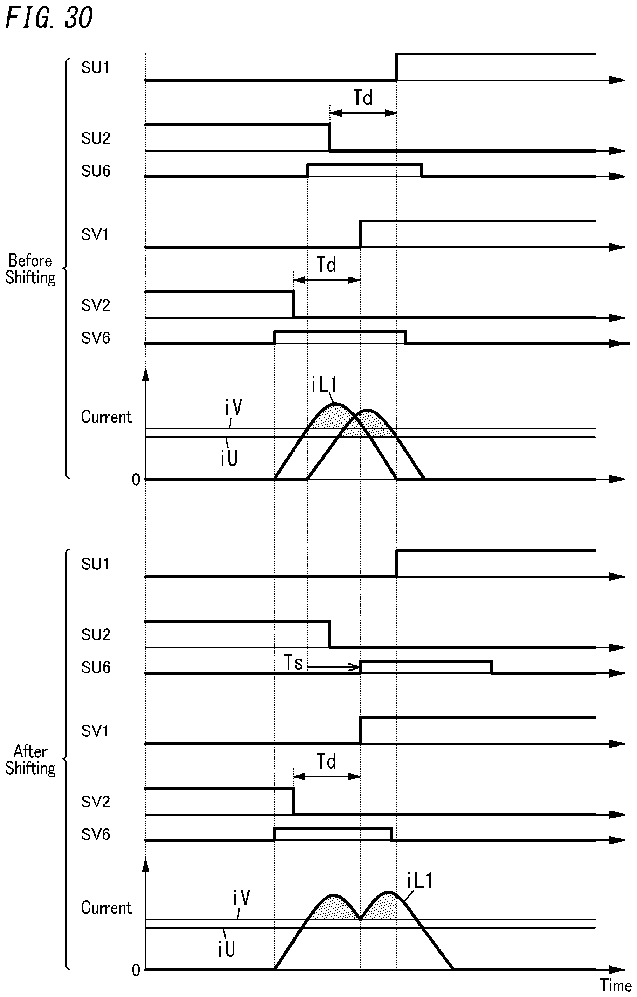

The upper part of FIG. 30 is a timing chart showing a situation where the controller 51 has determined that U- and V-phase resonant currents should be going to flow simultaneously. In this case, in the upper part of the timing chart of FIG. 30, shown are the respective waveforms of the first control signals SU1, SU2, SV1, and SV2, the second control signals SU6 and SV6, the load currents iU and iV, and the current iL1 before shifting is made by performing the second control operation. In the example shown in FIG. 30, the absolute value of the load current iV is larger than the absolute value of the load current iU. Note that in this embodiment, the controller 51 uses a switch 8U, through which a load current having the smaller absolute value flows, as the first switch.

On the other hand, the lower part of FIG. 30 is a timing chart showing a situation where the controller 51 has performed shifting as the second control operation. In this case, the lower part of FIG. 30 is a timing chart showing the respective waveforms of the first control signals SU1, SU2, SV1, and SV2, the second control signals SU6 and SV6, the load currents iU, iV, and the current iL1. Note that FIG. 30 shows a timing chart for a part of one cycle of the carrier signal.

In the power converter 100B according to the thirteenth embodiment, if the controller 51 does not perform the second control operation, then the resonant capacitor 9U, 9V has not been charged fully yet by a point in time when the first control signal SU1, SV1 makes a transition from the low-level period to the high-level period (i.e., the end time of the dead time period Td corresponding to each of the U- and V-phases). Thus, the voltage across each of the first switching elements 1U and 1V has not decreased to zero by the end time of the dead time period Td corresponding to each of the U- and V-phases. As a result, in the power converter 100B, the first switching element 1U, 1V is switched by hard switching.

In a situation where the charging operation is performed on the resonant capacitor 9, when determining that the U-phase resonant current and the V-phase resonant current should be going to flow simultaneously, the controller 51 causes the entire high-level period of the second control signal SU6 to overlap with a part of the high-level period of the first control signal SU1 by shifting (postponing on the time axis) the high-level period of the second control signal SU6 for the U-phase third switching element 6. The shifted time Ts set by the controller 51 is expressed by the inequality: Ts < Tau + (Tres/2). In the power converter 100B, having the controller 51 perform the second control operation allows for not only reducing the degree of hard switching of the first switching element 1U but also subjecting the first switching element 1V to zero-voltage soft switching.

Alternatively, the controller 51 may also cause the entire high-level period of the second control signal SU6 to overlap with the high-level period of the first control signal SU1. In that case, the shifted time Ts set by the controller 51 is expressed by the equation: Ts = Tau + (Tres/2). In the power converter 100B, having the controller 51 perform the second control operation causes the first switching element 1U to be subjected to zero-voltage soft switching and causes the first switching element 1V to be subjected to hard switching.

In the foregoing description, it has been described as an example how shifting is made by performing the second control operation in a situation where the controller 51 has determined that two-phase resonant currents, namely, the U-phase and V-phase resonant currents, should be going to flow simultaneously. Even when two-phase resonant currents, namely, the U-phase and W-phase resonant currents, are going to flow simultaneously or two-phase resonant currents, namely, the V-phase and W-phase resonant currents, are going to flow simultaneously, shifting may also be made by performing the second control operation based on the same idea (i.e., using the same algorithm) as in a situation where shifting is made by performing the second control operation when the controller 51 has determined that the two-phase resonant currents, namely, the U-phase and V-phase resonant currents, should be going to flow simultaneously.

### (3) Advantages

The power converter 100B according to the thirteenth embodiment, as well as the power converter 100B according to the fifth embodiment, also allows for stopping performing zero-voltage soft switching without making pulse width modulation of the second control signal for each of the plurality of switches 8 provided for the purpose of making zero-voltage soft switching.

Furthermore, in the power converter 100B according to the thirteenth embodiment, when determining that the resonant currents respectively passing through the two or more switches 8 belonging to the plurality of switches 8 should be going to flow simultaneously through the resonant inductor L1 when a second control signal having a preset high-level period is applied to each of the plurality of switches 8, the control system 50 performs the second control operation on a first switch which is one of the two or more switches 8.

This configuration allows, when determining that resonant currents respectively passing through two or more switches 8 belonging to the plurality of switches 8 should be going to flow simultaneously through the resonant inductor L1, the control system 50 to make zero-voltage soft switching of a target switching element corresponding to the switch 8 on which the control system 50 performs the first control operation. This allows the control system 50 to stop performing zero-voltage soft switching on the target switching element corresponding to the first switch on which the control system 50 performs the second control operation even without making pulse width modulation of the second control signal for each of the plurality of switches 8 provided for the purpose of making zero-voltage soft switching. Furthermore, this configuration may make zero-voltage soft switching even more effective by making zero-voltage soft switching of a target switching element of the phase in which the load current has a large absolute value.

### (Fourteenth embodiment)

### (1) Configuration

A power converter 100A according to a fourteenth embodiment has the same configuration as the power converter 100A according to the sixth embodiment (refer to FIG. 5), and therefore, illustration and description thereof will be omitted herein.

### (2) Operation

The power converter 100A according to the fourteenth embodiment operates in substantially the same way as the power converter 100A according to the eighth embodiment. The control system 50A according to this embodiment uses a switch 8, corresponding to a phase in which a load current having the smallest absolute value flows, out of the plurality of switches 8 as the first switch and uses another switch 8, corresponding to a phase in which a load current having the largest absolute value flows, as the second switch, which is a difference from the second control operation performed by the control system 50A according to the eighth embodiment.

When performing the second control operation, the control system 50A according to this embodiment sets the additional time Tad of the second dead time period Td2 just before the high-level period of the first control signal for the target switching element corresponding to the first switch at a randomly selected time, which is shorter than the total time of a runup period and the length of a resonant half-cycle to shorten the overlap period between the high-level period of the first switch and the dead time period just before the high-level period of the target switching element corresponding to the first switch. This allows the control system 50A to shift (i.e., postpone on the time axis) the high-level period of the second control signal for the first switch.

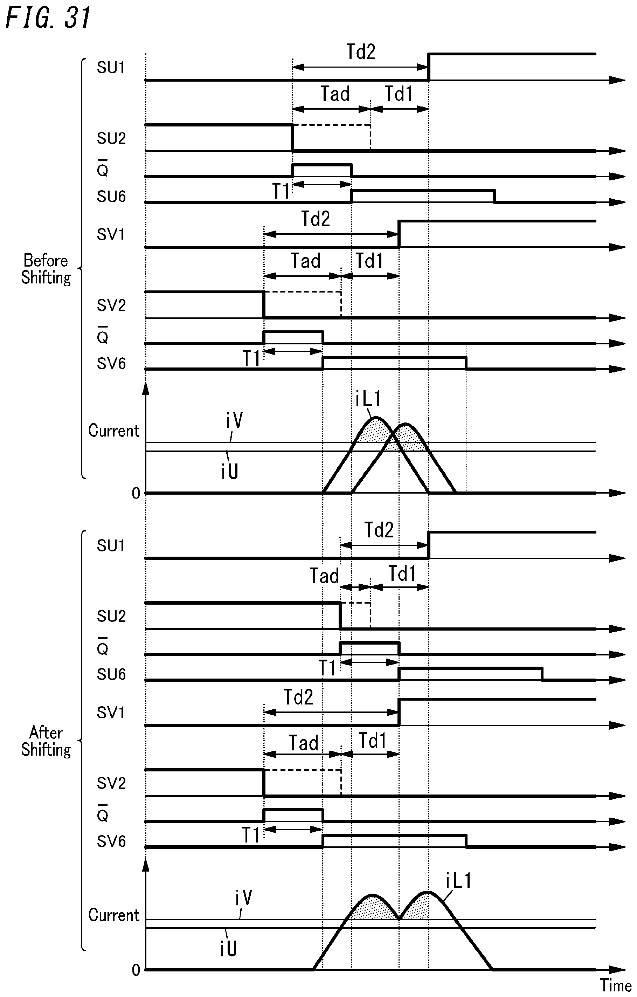

The upper part of FIG. 31 is a timing chart showing a situation where the control system 50A has determined that U- and V-phase resonant currents should be going to flow simultaneously. In this case, in the upper part of the timing chart of FIG. 31, shown are the respective waveforms of the first control signals SU1, SU2, SV1, and SV2, the second control signals SU6 and SV6, the load currents iU and iV, and the current iL1 before shifting is made by performing the second control operation. In the example shown in FIG. 31, the absolute value of the load current iV is larger than the absolute value of the load current iU. Note that in this embodiment, the control system 50A uses a switch 8U, through which a load current having the smaller absolute value flows, as the first switch.

On the other hand, the lower part of FIG. 31 is a timing chart showing a situation where the control system 50A has performed shifting as the second control operation. In this case, the lower part of FIG. 31 is a timing chart showing the respective waveforms of the first control signals SU1, SU2, SV1, and SV2, the second control signals SU6 and SV6, the load currents iU and iV, and the current iL1. Note that FIG. 31 shows a timing chart for a part of one cycle of the carrier signal.

In the power converter 100A according to the fourteenth embodiment, if the control system 50A does not perform the second control operation, then the first switching element 1U, 1V is switched by hard switching.

When determining that the U-phase resonant current and the V-phase resonant current should be going to flow simultaneously, the control system 50A shortens the overlap period between the high-level period of the second control signal SU6 and the second dead time period Td2 by shifting (postponing on the time axis) the high-level period of the second control signal SU6 for the U-phase third switching element 6U. Thus, in the power converter 100A, having the control system 50A perform the second control operation allows for not only reducing the degree of hard switching of the first switching element 1U but also subjecting the first switching element 1V to zero-voltage soft switching.

Alternatively, the control system 50A may also cause the entire high-level period of the second control signal SU6 to overlap with a part of the high-level period of the first control signal SU1 by reducing the additional time Tad of the second dead time period Td2 at zero. In that case, in the power converter 100A, the first switching element 1U is subjected to hard switching and the first switching element 1V to be subjected to zero-voltage soft switching.

In the foregoing description, it has been described as an example how shifting is made by performing the second control operation in a situation where the controller 51A has determined that two-phase resonant currents, namely, the U-phase and V-phase resonant currents, should be going to flow simultaneously (i.e., overlap with each other). Even when two-phase resonant currents, namely, the U-phase and W-phase resonant currents, are going to flow simultaneously or two-phase resonant currents, namely, the V-phase and W-phase resonant currents, are going to flow simultaneously, shifting may also be made by performing the second control operation based on the same idea (i.e., using the same algorithm) as in a situation where shifting is made by performing the second control operation when the controller 51 has determined that the two-phase resonant currents, namely, the U-phase and V-phase resonant currents, should be going to flow simultaneously.

### (3) Advantages

The power converter 100A according to the fourteenth embodiment, as well as the power converter 100A according to the eighth embodiment, also allows for stopping performing zero-voltage soft switching without making pulse width modulation of the second control signal for each of the plurality of switches 8 provided for the purpose of making zero-voltage soft switching.

In addition, in the power converter 100A according to the fourteenth embodiment, as well as in the power converter 100A according to the eighth embodiment, the control system 50A also includes the controller 51A and the signal generator circuit 52. This configuration allows for performing zero-voltage soft switching with more reliability without having the controller 51A directly control a plurality of switches 8 provided for the purpose of making zero-voltage soft switching. More specifically, there is no need for the controller 51A to generate a second control signal in order to directly control the plurality of switches 8 provided for the purpose of making zero-voltage soft switching. This allows the controller 51A to make zero-voltage soft switching of each of the plurality of first switching elements 1 and the plurality of second switching elements 2 even without directly controlling the plurality of switches 8.

Furthermore, in the power converter 100A according to the fourteenth embodiment, when determining that the resonant currents respectively passing through the two or more switches 8 belonging to the plurality of switches 8 should be going to flow simultaneously through the resonant inductor L1 when a second control signal having a preset high-level period is applied to each of the plurality of switches 8, the control system 50A performs the second control operation on a first switch which is one of the two or more switches 8.

This configuration allows, when determining that resonant currents respectively passing through two or more switches 8 belonging to the plurality of switches 8 should be going to flow simultaneously through the resonant inductor L1, the control system 50A to make zero-voltage soft switching of a target switching element corresponding to the switch 8 on which the control system 50A performs the first control operation. This allows the control system 50A to stop performing zero-voltage soft switching on the target switching element corresponding to the first switch on which the control system 50A performs the second control operation even without making pulse width modulation of the second control signal for each of the plurality of switches 8 provided for the purpose of making zero-voltage soft switching. Furthermore, this configuration may make zero-voltage soft switching even more effective by making zero-voltage soft switching of a target switching element of the phase in which the load current has a large absolute value.

### (Fifteenth embodiment)

### (1) Configuration

A power converter 100A according to a fifteenth embodiment has the same configuration as the power converter 100A according to the sixth embodiment (refer to FIG. 5), and therefore, illustration and description thereof will be omitted herein.

### (2) Operation

The power converter 100A according to the fifteenth embodiment operates in substantially the same way as the power converter 100A according to the eighth embodiment. The control system 50A according to this embodiment uses a switch 8, corresponding to a phase in which a load current having the smallest absolute value flows, out of the plurality of switches 8 as the first switch, another switch 8, corresponding to a phase in which a load current having the largest absolute value flows, as the second switch, and still another switch 8, corresponding to a phase in which a load current having the second smallest absolute value flows, as the third switch, which is a difference from the second control operation performed by the control system 50A according to the eighth embodiment.

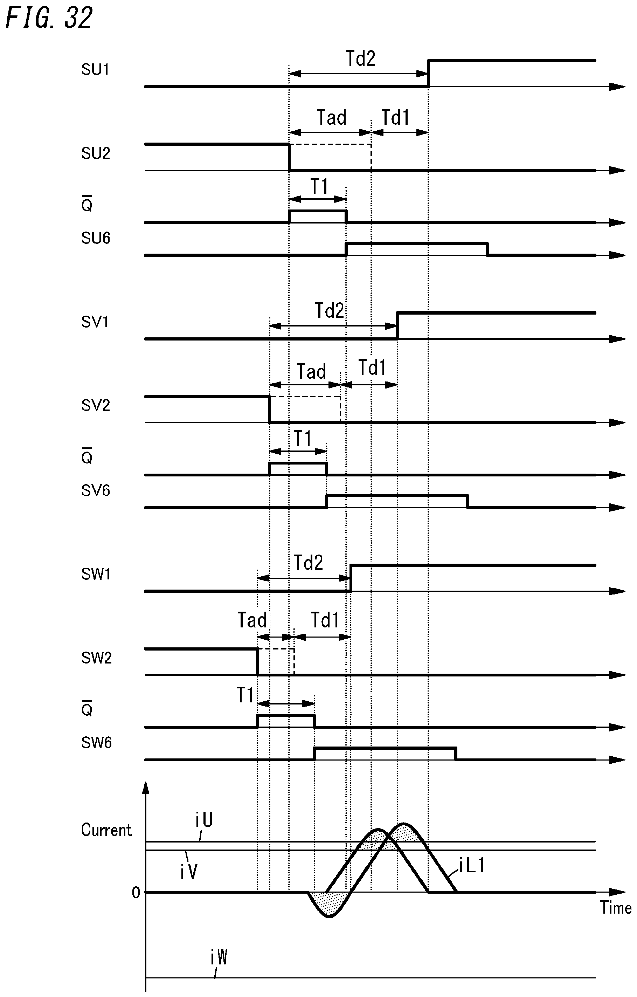

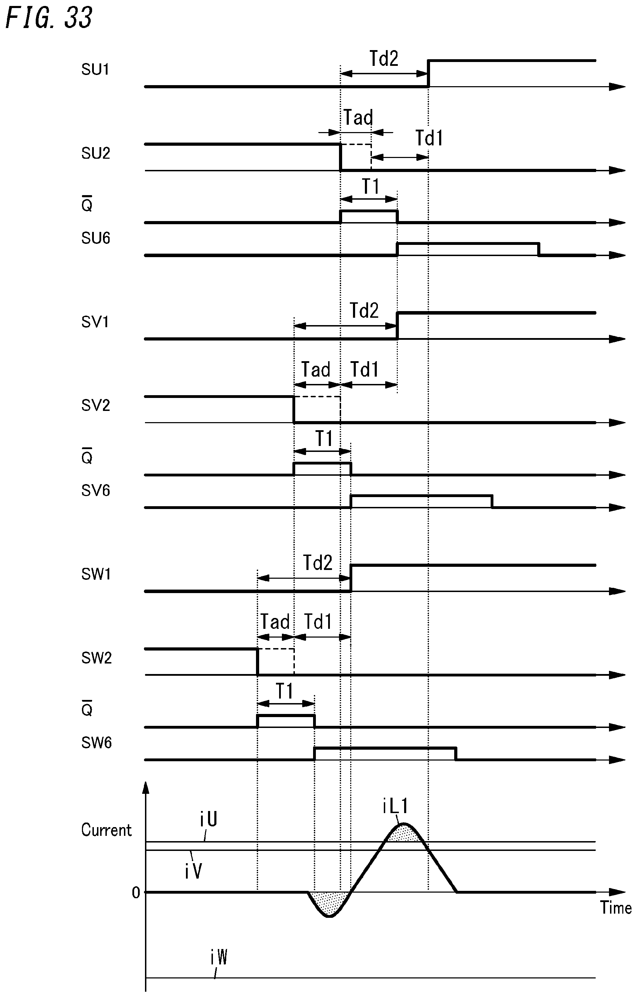

If two-phase resonant currents overlap with each other when |load current iW | > |load current iU| > |load current iV | is satisfied as shown in FIG. 32, for example, the control system 50A performs the second control operation on a switch 8V as the first switch, performs the first control operation on (the third switching element 6W of) a switch 8W as the second switch, and performs the second control operation on (the third switching element 6U of) a switch 8U as the third switch as shown in FIG. 33.

In FIG. 32, the additional time Tad of the second dead time period Td2 corresponding to each of the U-, V-, and W-phases is the total time of a runup period and the length of a resonant half-cycle.

In contrast, the control system 50A sets the additional time Tad of the second dead time period Td2 corresponding to the U-phase to synchronize the beginning time of the high-level period of the second control signal SU6 with the beginning time of the high-level period of the first control signal SV1 as shown in FIG. 33, for example. In addition, the control system 50A also sets the additional time Tad of the second dead time period Td2 corresponding to the V-phase to synchronize the beginning time of the second control signal SV6 with the beginning time of the high-level period of the first control signal SW1 as shown in FIG. 33, for example.

Alternatively, the control system 50A may also perform the second control operation by causing the entire high-level period of the second control signal SV6 to overlap with a part of the high-level period of the first control signal SV1 with the additional time Tad of the second dead time period Td2 corresponding to the V-phase reduced to zero. Still alternatively, the control system 50A may also perform the second control operation by causing the entire high-level period of the second control signal SU6 to overlap with a part of the high-level period of the first control signal SU1 with the additional time Tad of the second dead time period Td2 corresponding to the U-phase reduced to zero.

### (3) Advantages

The power converter 100A according to the fifteenth embodiment, as well as the power converter 100A according to the eighth embodiment, also allows for stopping performing zero-voltage soft switching without making pulse width modulation of the second control signal for each of the plurality of switches 8 provided for the purpose of making zero-voltage soft switching.

In addition, in the power converter 100A according to the fifteenth embodiment, as well as in the power converter 100A according to the eighth embodiment, the control system 50A also includes the controller 51A and the signal generator circuit 52. This configuration allows for performing zero-voltage soft switching with more reliability without having the controller 51A directly control a plurality of switches 8 provided for the purpose of making zero-voltage soft switching. More specifically, there is no need for the controller 51A to generate a second control signal in order to directly control the plurality of switches 8 provided for the purpose of making zero-voltage soft switching. This allows the controller 51A to make zero-voltage soft switching of each of the plurality of first switching elements 1 and the plurality of second switching elements 2 even without directly controlling the plurality of switches 8.

In addition, in the power converter 100A according to the fifteenth embodiment, as well as in the power converter 100 according to the eighth embodiment, when determining that resonant currents respectively passing through two or more switches 8 belonging to the plurality of switches 8 should be going to flow simultaneously through the resonant inductor L1, the control system 50A may make zero-voltage soft switching of a target switching element corresponding to the switch 8 on which the control system 50A performs the first control operation. This allows the control system 50A to stop performing zero-voltage soft switching on the target switching element corresponding to the first switch on which the control system 50A performs the second control operation even without making pulse width modulation of the second control signal for each of the plurality of switches 8 provided for the purpose of making zero-voltage soft switching. Furthermore, this configuration may make zero-voltage soft switching even more effective by making zero-voltage soft switching of a target switching element of the phase in which the load current has a large absolute value.

### (Sixteenth embodiment)

### (1) Configuration

A power converter 100B according to a sixteenth embodiment has the same configuration as the power converter 100B according to the fifth embodiment (refer to FIG. 17), and therefore, illustration and description thereof will be omitted herein.

### (2) Operation

The power converter 100B according to the sixteenth embodiment operates in substantially the same way as the power converter 100B according to the ninth embodiment. When performing the second control operation, the control system 50 according to this embodiment causes a part of the second control signal for the first switch to overlap with a part of the high-level period of the first control signal for a target switching element corresponding to the first switch by shifting the high-level period of the second control signal for the first switch and also causes the entire second control signal for the third switch to overlap with a part of the high-level period of the first control signal for a target switching element corresponding to the third switch by shifting the high-level period of the second control signal for the third switch, which is a difference from the second control operation performed by the control system 50 according to the ninth embodiment.

The timing chart illustrating a situation where the controller 51 has determined that the three-phase resonant currents should be going to flow simultaneously and has not performed shifting as the second control operation yet is the same as FIG. 24 to which reference has already been made for the ninth embodiment. Thus, illustration and description thereof will be omitted herein.

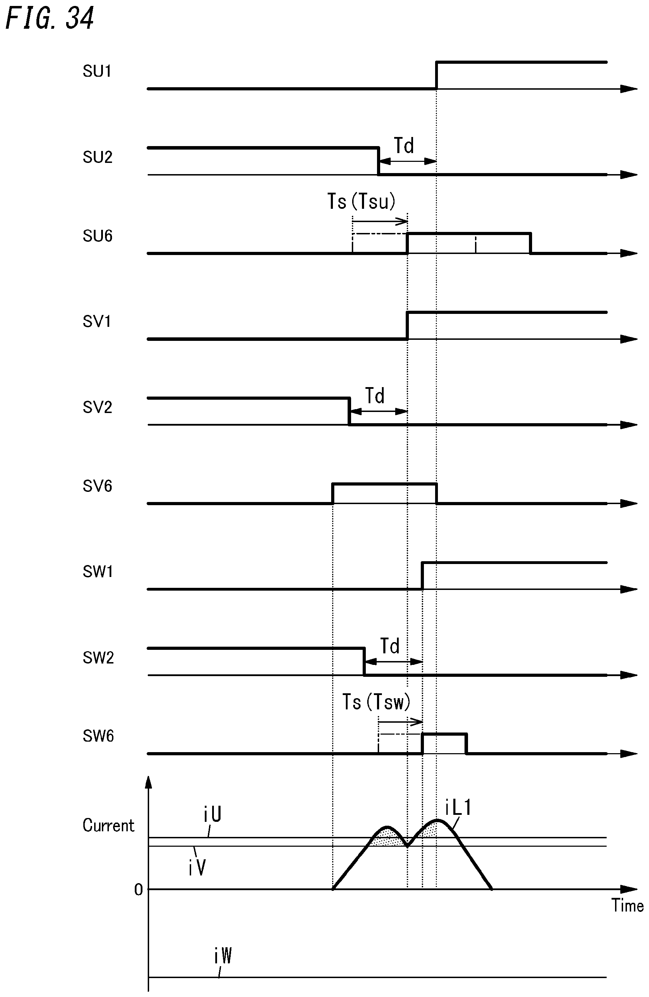

FIG. 34 is a timing chart illustrating a situation where the controller 51 has made shifting by performing the second control operation.

In the power converter 100B according to the sixteenth embodiment, if the controller 51 does not perform the second control operation when determining that the three-phase resonant currents should be going to flow simultaneously, then each of the first switching elements 1U, 1V, and 1W is switched by hard switching.

In a situation where the charging operation is performed on the resonant capacitor 9, when determining that three-phase resonant currents should be going to flow simultaneously, the controller 51 causes the entire high-level period of the second control signal SW6 to overlap with a part of the high-level period of the first control signal SW1 by shifting (i.e., postponing on the time axis), by the shifted time Ts, the high-level period of the second control signal SW6 for the W-phase third switching element 6W. In this case, the controller 51 sets the shifted time Ts (Tsw) at the time lag between the beginning time of the high-level period of the second control signal SW6 that has not been shifted yet (indicated by the two-dot chain in FIG. 34) and the beginning time of the high-level period of the first control signal SW1 that has not been shifted yet.

In addition, the controller 51 also causes a part of the high-level period of the second control signal SU6 to overlap with the high-level period of the first control signal SU1 by shifting (i.e., postponing on the time axis), by the shifted time Ts (Tsu), the high-level period of the second control signal SU6 for the U-phase third switching element 6W. In this case, the controller 51 sets the shifted time Ts at the time lag between the beginning time of the high-level period of the second control signal SU6 that has not been shifted yet (indicated by the two-dot chain in FIG. 34) and the beginning time of the high-level period of the first control signal SW1.

In the power converter 100B, making the controller 51 perform the second control operation allows for stopping performing zero-voltage soft switching on each of the first switching element 1U and the first switching element 1W and subjecting the first switching element 1V to zero-voltage soft switching. The first switching element 1W is hard-switched and the first switching element 1U is hard-switched to a lesser degree.

### (3) Advantages

The power converter 100B according to the sixteenth embodiment, as well as the power converter 100B according to the fifth embodiment, also allows for stopping performing zero-voltage soft switching without making pulse width modulation of the second control signal for each of the plurality of switches 8 provided for the purpose of making zero-voltage soft switching.

In addition, in the power converter 100B according to the sixteenth embodiment, when determining that resonant currents respectively passing through three switches 8 belonging to the plurality of switches 8 should be going to flow simultaneously through the resonant inductor L1 when a second control signal having a preset high-level period is applied to each of the plurality of switches 8, the control system 50 performs the second control operation on the first and third switches belonging to the three switches 8.

This configuration allows, when determining that resonant currents respectively passing through three switches 8 belonging to the plurality of switches 8 should be going to flow simultaneously through the resonant inductor L1, the control system 50 to make zero-voltage soft switching of a target switching element corresponding to the switch 8 on which the first control operation is performed. This allows the control system 50 to stop performing zero-voltage soft switching on the target switching elements respectively corresponding to the first and third switches on which the control system 50 performs the second control operation even without making pulse width modulation of the second control signal for each of the plurality of switches 8 provided for the purpose of making zero-voltage soft switching.

Alternatively, the control system 50 may be configured to either shorten the overlap period between the high-level period of the second control signal for each of the randomly selected first and third switches and its corresponding to dead time period Td2 to a randomly selected period or reduce the overlap period to zero, irrespective of the relation in magnitude between the respective absolute values of the load currents.

### (Seventeenth embodiment)

### (1) Configuration

A power converter 100A according to a seventeenth embodiment has the same configuration as the power converter 100A according to the third embodiment (refer to FIG. 5), and therefore, illustration and description thereof will be omitted herein.

### (2) Operation

The power converter 100A according to the seventeenth embodiment operates in substantially the same way as the power converter 100A according to the tenth embodiment. When performing the second control operation, the control system 50A according to this embodiment causes a part of the high-level period of the second control signal for the first switch to overlap with the high-level period of the first control signal for a target switching element corresponding to the first switch by shifting the high-level period of the second control signal for the first switch and also causes the entire high-level period of the second control signal for the third switch to overlap with the high-level period of the first control signal for a target switching element corresponding to the third switch, which is a difference from the second control operation performed by the control system 50A according to the tenth embodiment.

The timing chart illustrating a situation where the control system 50A has determined that the three-phase resonant currents should be going to flow simultaneously and has not performed shifting as the second control operation yet is the same as FIG. 26 to which reference has already been made for the ninth embodiment. Thus, illustration and description thereof will be omitted herein.

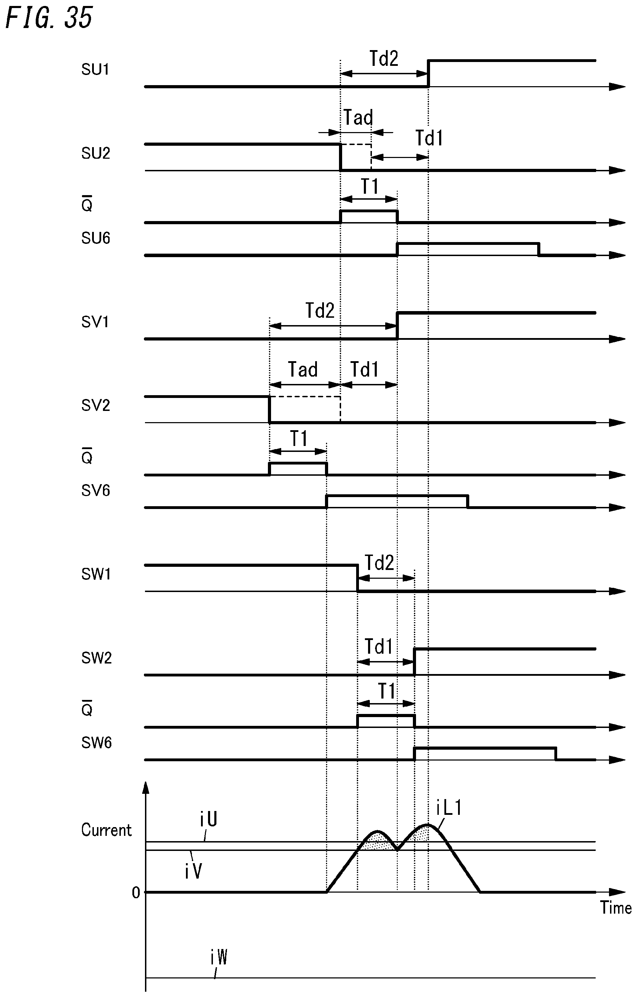

FIG. 35 is a timing chart illustrating a situation where the controller 51A has made shifting by performing the second control operation.

In the power converter 100A according to the seventeenth embodiment, if the controller 51A does not perform the second control operation when determining that the three-phase resonant currents should be going to flow simultaneously, then each of the first switching elements 1U, 1V, and 1W is switched by hard switching.

In a situation where the charging operation is performed on the resonant capacitor 9, when determining that three-phase resonant currents should be going to flow simultaneously, the controller 51A sets the additional time Tad at zero to shorten the overlap period between the high-level period of the second control signal SW6 for the W-phase third switching element 6W and the second dead time period Td2 to zero.

In addition, in the situation where the charging operation is performed on the resonant capacitor 9, when determining that three-phase resonant currents should be going to flow simultaneously, the controller 51A sets the additional time Tad to shorten the overlap period between the high-level period of the second control signal SU6 for the U-phase third switching element 6U and the second dead time period Td2, for example. In this case, the controller 51A sets the additional time Tad such that the beginning time of the high-level period of the second control signal SU6 is synchronized with the beginning time of the high-level period of the first control signal SW1.

In the power converter 100A, making the controller 51A perform the second control operation allows for not only reducing the degree of hard switching of the first switching element 1U and stopping performing zero-voltage soft switching on the first switching element 1W but also subjecting the first switching element 1V to zero-voltage soft switching as well.

### (3) Advantages

The power converter 100A according to the seventeenth embodiment, as well as the power converter 100A according to the tenth embodiment, also allows for stopping performing zero-voltage soft switching without making pulse width modulation of the second control signal for each of the plurality of switches 8 provided for the purpose of making zero-voltage soft switching.

In addition, in the power converter 100A according to the seventeenth embodiment, as well as in the power converter 100A according to the tenth embodiment, the control system 50A also includes the controller 51A and the signal generator circuit 52. This configuration allows for performing zero-voltage soft switching with more reliability without having the controller 51A directly control a plurality of switches 8 provided for the purpose of making zero-voltage soft switching. More specifically, there is no need for the controller 51A to generate a second control signal in order to directly control the plurality of switches 8 provided for the purpose of making zero-voltage soft switching. This allows the controller 51A to make zero-voltage soft switching of each of the plurality of first switching elements 1 and the plurality of second switching elements 2 even without directly controlling the plurality of switches 8.

In addition, in the power converter 100A according to the seventeenth embodiment, when determining that resonant currents respectively passing through three switches 8 belonging to the plurality of switches 8 should be going to flow simultaneously through the resonant inductor L1 when a second control signal having a preset high-level period is applied to each of the plurality of switches 8, the control system 50A performs the second control operation on the first and third switches belonging to the three switches 8.

This configuration allows, when determining that resonant currents respectively passing through three switches 8 belonging to the plurality of switches 8 should be going to flow simultaneously through the resonant inductor L1, the control system 50A to make zero-voltage soft switching of a target switching element corresponding to the switch 8 on which the control system 50A performs the first control operation. This allows the control system 50A to stop performing zero-voltage soft switching on the target switching elements respectively corresponding to the first and third switches on which the control system 50A performs the second control operation even without making pulse width modulation of the second control signal for each of the plurality of switches 8 provided for the purpose of making zero-voltage soft switching.

The control system 50A may use the U-phase switch 8U as the first switch and the W-phase switch 8W as the third switch. In addition, the control system 50A may adopt, as the combination of the first and third switches, either a combination of the U-phase switch 8U and the V-phase switch 8V or a combination of the V-phase switch 8V and the W-phase switch 8W, whichever is appropriate.

### (Eighteenth embodiment)

### (1) Configuration

A power converter 100A according to an eighteenth embodiment has the same configuration as the power converter 100A according to the third embodiment (refer to FIG. 5), and therefore, illustration and description thereof will be omitted herein.

### (2) Operation

The power converter 100A according to the eighteenth embodiment operates in substantially the same way as the power converter 100A according to the fifteenth embodiment. The control system 50A according to this embodiment uses a switch 8, corresponding to a phase in which a load current having the smallest absolute value flows, out of the plurality of switches 8 as the first switch, another switch 8, corresponding to a phase in which a load current having the largest absolute value flows, as the second switch, and still another switch 8, corresponding to a phase in which a load current having the second smallest absolute value flows, as the third switch.

If two-phase resonant currents overlap with each other when |load current iW | > |load current iU| > |load current iV | is satisfied as shown in FIG. 32, for example, the control system 50A performs the second control operation on a switch 8V as the first switch, performs the first control operation on (the third switching element 6W of) a switch 8W as the second switch, and performs the second control operation on (the third switching element 6U of) a switch 8U as the third switch.

In FIG. 32, the additional time Tad of the second dead time period Td2 corresponding to each of the U-, V-, and W-phases is the total time of a runup period and the length of a resonant half-cycle.

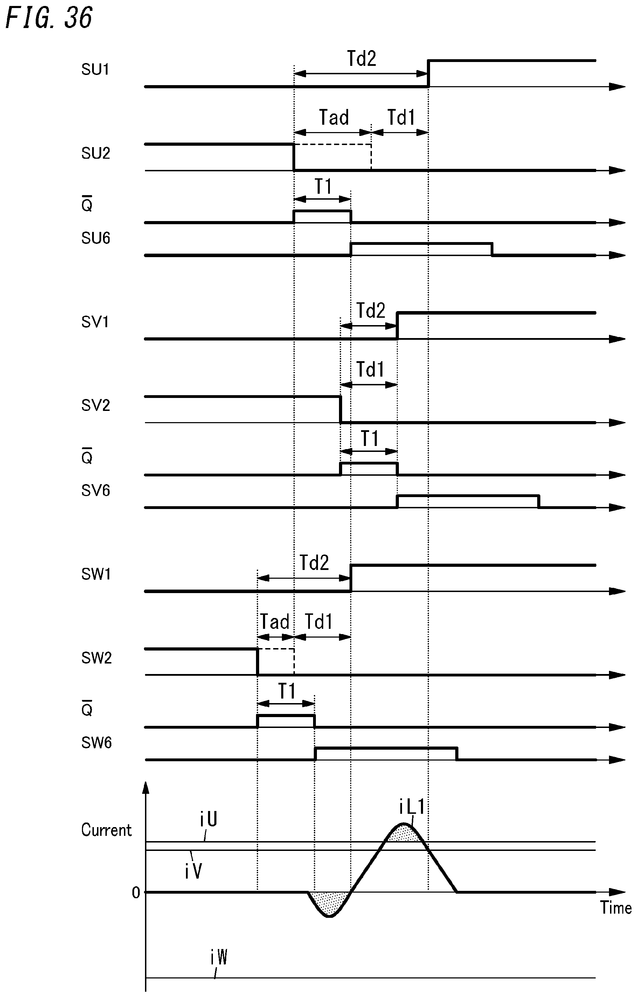

On the other hand, in this embodiment, the control system 50A sets the additional time Tad of the second dead time period Td2 corresponding to the V-phase at zero as shown in FIG. 36, for example, thus allowing the beginning time of the high-level period of the second control signal SV6 to be synchronized with the beginning time of the high-level period of the first control signal SV1. In addition, the control system 50A also sets the additional time Tad of the second dead time period Td2 corresponding to the U-phase such that the beginning time of the high-level period of the second control signal SU6 is synchronized with the beginning time of the high-level period of the first control signal SW1 as shown in FIG. 36, for example.

### (3) Advantages

The power converter 100A according to the eighteenth embodiment, as well as the power converter 100A according to the fifteenth embodiment, also allows for stopping performing zero-voltage soft switching without making pulse width modulation of the second control signal for each of the plurality of switches 8 provided for the purpose of making zero-voltage soft switching.

In addition, in the power converter 100A according to the eighteenth embodiment, as well as in the power converter 100A according to the fifteenth embodiment, the control system 50A also includes the controller 51A and the signal generator circuit 52. This configuration allows for performing zero-voltage soft switching with more reliability without having the controller 51A directly control a plurality of switches 8 provided for the purpose of making zero-voltage soft switching. More specifically, there is no need for the controller 51A to generate a second control signal in order to directly control the plurality of switches 8 provided for the purpose of making zero-voltage soft switching. This allows the controller 51A to make zero-voltage soft switching of each of the plurality of first switching elements 1 and the plurality of second switching elements 2 even without directly controlling the plurality of switches 8.

In addition, in the power converter 100A according to the eighteenth embodiment, as well as in the power converter 100A according to the fifteenth embodiment, when determining that resonant currents respectively passing through two or more switches 8 belonging to the plurality of switches 8 should be going to flow simultaneously through the resonant inductor L1, the control system 50A may make zero-voltage soft switching of a target switching element corresponding to the switch 8 on which the control system 50A performs the first control operation. This allows the control system 50A to stop performing zero-voltage soft switching on the target switching element corresponding to the first switch on which the control system 50A performs the second control operation even without making pulse width modulation of the second control signal for each of the plurality of switches 8 provided for the purpose of making zero-voltage soft switching. Furthermore, this configuration may make zero-voltage soft switching even more effective by making zero-voltage soft switching of a target switching element of the phase in which the load current has a large absolute value.

Note that the same idea as that of this embodiment is also applicable to a known configuration for making zero-volt switching in which a plurality of switches provided for zero-volt soft switching are directly controlled by a microcomputer.

### (Nineteenth embodiment)

### (1) Configuration

A power converter 100A according to a nineteenth embodiment has the same configuration as the power converter 100A according to the third embodiment (refer to FIG. 5), and therefore, illustration and description thereof will be omitted herein.

### (2) Operation

The power converter 100A according to the nineteenth embodiment operates in substantially the same way as the power converter 100A according to the fifteenth embodiment. The control system 50A according to this embodiment uses a switch 8, corresponding to a phase in which a load current having the smallest absolute value flows, out of the plurality of switches 8 as the first switch, another switch 8, corresponding to a phase in which a load current having the largest absolute value flows, as the second switch, and still another switch 8, corresponding to a phase in which a load current having the second smallest absolute value flows, as the third switch.

In the fifteenth embodiment, if two-phase resonant currents overlap with each other when |load current iW | > |load current iU| > |load current iV | is satisfied as shown in FIG. 32, for example, the control system 50A performs the second control operation on a switch 8V as the first switch, performs the first control operation on (the third switching element 6W of) a switch 8W as the second switch, and performs the second control operation on (the third switching element 6U of) a switch 8U as the third switch.

In FIG. 32, the additional time Tad of the second dead time period Td2 corresponding to each of the U-, V-, and W-phases is the total time of a runup period and the length of a resonant half-cycle.

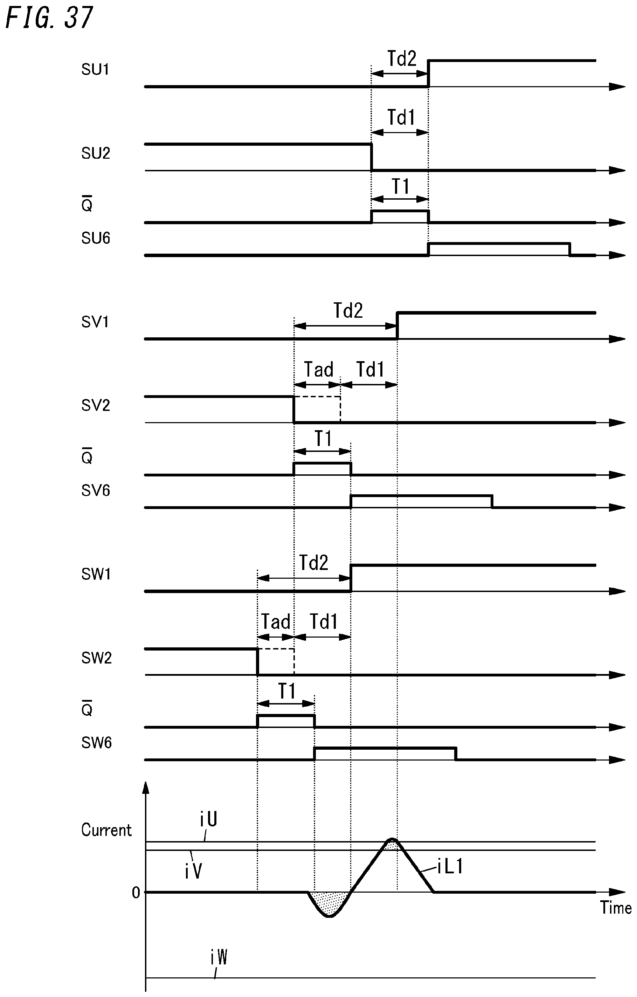

On the other hand, in this embodiment, the control system 50A sets the additional time Tad of the second dead time period Td2 corresponding to the U-phase at zero as shown in FIG. 37, for example, thus allowing the beginning time of the high-level period of the second control signal SU6 to be synchronized with the beginning time of the high-level period of the first control signal SU1. In addition, the control system 50A also sets the additional time Tad of the second dead time period Td2 corresponding to the V-phase such that the beginning time of the high-level period of the second control signal SV6 is synchronized with the beginning time of the high-level period of the first control signal SW1 as shown in FIG. 37, for example.

### (3) Advantages

The power converter 100A according to the nineteenth embodiment, as well as the power converter 100A according to the fifteenth embodiment, also allows for stopping performing zero-voltage soft switching without making pulse width modulation of the second control signal for each of the plurality of switches 8 provided for the purpose of making zero-voltage soft switching.

In addition, in the power converter 100A according to the nineteenth embodiment, as well as in the power converter 100A according to the fifteenth embodiment, the control system 50A also includes the controller 51A and the signal generator circuit 52. This configuration allows for performing zero-voltage soft switching with more reliability without having the controller 51A directly control a plurality of switches 8 provided for the purpose of making zero-voltage soft switching. More specifically, there is no need for the controller 51A to generate a second control signal in order to directly control the plurality of switches 8 provided for the purpose of making zero-voltage soft switching. This allows the controller 51A to make zero-voltage soft switching of each of the plurality of first switching elements 1 and the plurality of second switching elements 2 even without directly controlling the plurality of switches 8.

In addition, in the power converter 100A according to the nineteenth embodiment, as well as in the power converter 100A according to the fifteenth embodiment, when determining that resonant currents respectively passing through two or more switches 8 belonging to the plurality of switches 8 should be going to flow simultaneously through the resonant inductor L1, the control system 50A may make zero-voltage soft switching of a target switching element corresponding to the switch 8 on which the control system 50A performs the first control operation. This allows the control system 50A to stop performing zero-voltage soft switching on the target switching element corresponding to the first switch on which the control system 50A performs the second control operation even without making pulse width modulation of the second control signal for each of the plurality of switches 8 provided for the purpose of making zero-voltage soft switching. Furthermore, this configuration may make zero-voltage soft switching even more effective by making zero-voltage soft switching of a target switching element of the phase in which the load current has a large absolute value.

Note that the same idea as that of this embodiment is also applicable to a known configuration for making zero-volt switching in which a plurality of switches provided for zero-volt soft switching are directly controlled by a microcomputer.

### (Twentieth embodiment)

### (1) Configuration

A power converter 100B according to a twentieth embodiment has the same configuration as the power converter 100B according to the fifth embodiment (refer to FIG. 17), and therefore, illustration and description thereof will be omitted herein.

### (2) Operation

The power converter 100B according to the twentieth embodiment operates in substantially the same way as the power converter 100B according to the fifth embodiment.

When performing the second control operation, the control system 50 according to this embodiment not only shifts the high-level period of the second control signal for the first switch but also shifts (postpones on the time axis) the high-level period of a target switching element corresponding to the first switch, which is a difference from the second control operation performed by the control system 50 according to the fifth embodiment.

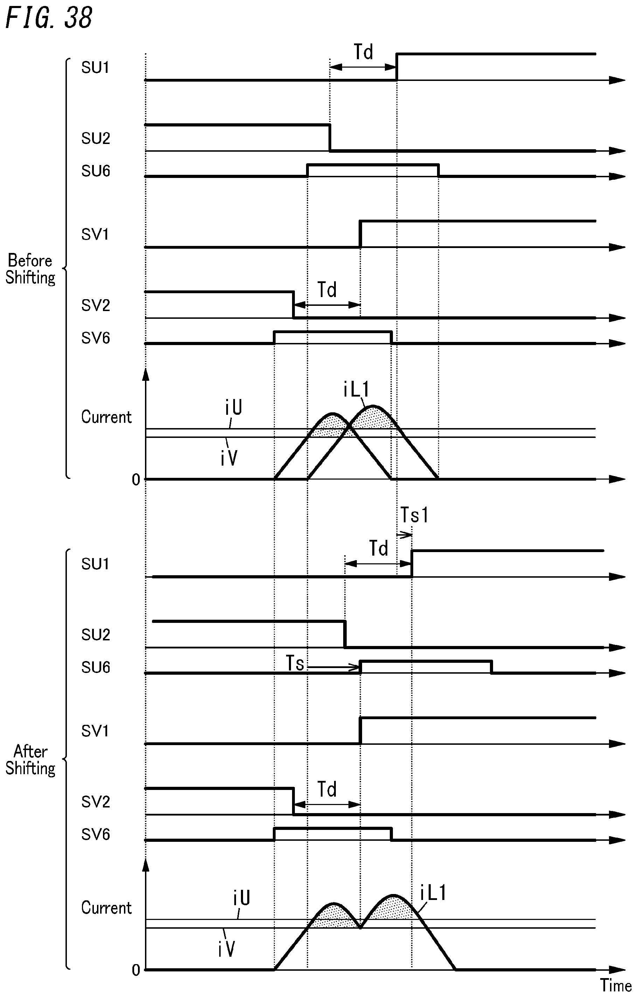

The upper part of FIG. 38 is a timing chart showing a situation where the controller 51 has determined that U- and V-phase resonant currents should be going to flow simultaneously. In this case, in the upper part of the timing chart of FIG. 38, shown are the respective waveforms of the first control signals SU1, SU2, SV1, and SV2, the second control signals SU6 and SV6, the load currents iU and iV, and the current iL1 before shifting is made by performing the second control operation. In the example shown in FIG. 38, the absolute value of the load current iU is larger than the absolute value of the load current iV. Note that in the example shown in FIG. 38, the controller 51 uses a switch 8U, through which a load current having the larger absolute value flows, as the first switch.

On the other hand, the lower part of FIG. 38 is a timing chart showing a situation where the controller 51 has shifted the second control signal and the first control signal by performing the second control operation. In this case, the lower part of FIG. 38 is a timing chart showing the respective waveforms of the first control signals SU1, SU2, SV1, and SV2, the second control signals SU6 and SV6, the load currents iU and iV, and the current iL1. Note that FIG. 38 shows a timing chart for a part of one cycle of the carrier signal.

In a situation where the charging operation is performed on the resonant capacitor 9, when determining that the U-phase and V-phase resonant currents should be going to flow simultaneously, the controller 51 shifts (postpones on the time axis), by a shifted time Ts, the high-level period of the second control signal SU6 for the U-phase third switching element 6U and shifts (postpones on the time axis), by a shifted time Ts1, the high-level period of the first control signal SU1 for the U-phase first switching element 1U. The shifted time Ts set by the controller 51 satisfies the inequality: Ts < Tau + (Tres/2). The shifted time Ts1 may have a randomly selected length.

In the foregoing description, it has been described how shifting is made by performing the second control operation in a situation where the controller 51 has determined that two-phase resonant currents, namely, the U-phase and V-phase resonant currents, should be going to flow simultaneously. Even when two-phase resonant currents, namely, the U-phase and W-phase resonant currents, are going to flow simultaneously or two-phase resonant currents, namely, the V-phase and W-phase resonant currents, are going to flow simultaneously, shifting may also be made by performing the second control operation based on the same idea (i.e., using the same algorithm) as in a situation where shifting is made by performing the second control operation when the controller 51 has determined that the two-phase resonant currents, namely, the U-phase and V-phase resonant currents, should be going to flow simultaneously.

### (3) Advantages

The power converter 100B according to the twentieth embodiment, as well as the power converter 100B according to the fifth embodiment, also allows for stopping performing zero-voltage soft switching without making pulse width modulation of the second control signal for each of the plurality of switches 8 provided for the purpose of making zero-voltage soft switching.

In the power converter 100B according to the twentieth embodiment, as well as in the power converter 100B according to the fifth embodiment, when determining that resonant currents, respectively passing through two or more switches 8 belonging to the plurality of switches 8, should be going to flow simultaneously through the resonant inductor L1, the control system 50 may make zero-voltage soft switching of a target switching element corresponding to the switch 8 on which the control system 50 performs the first control operation and also allows for stropping performing zero-voltage soft switching on a target switching element corresponding to a first switch on which the control system 50 performs the second control operation.

Not just the control system 50 of the power converter 100B according to this embodiment but also the control system 50, 50A of the power converter 100, 100A according to any other embodiment may be configured to shift the first control signal for the target switching element by the shifted time Ts1.

### (Twenty-first embodiment)

### (1) Configuration

A power converter 100A according to a twenty-first embodiment has the same configuration as the power converter 100A according to the third embodiment (refer to FIG. 5), and therefore, illustration and description thereof will be omitted herein.

### (2) Operation

The power converter 100A according to the twenty-first embodiment operates in substantially the same way as the power converter 100A according to the sixth embodiment.

When performing the second control operation, the control system 50A according to this embodiment not only shifts the high-level period of the second control signal for the first switch but also shifts (postpones on the time axis) the high-level period of a target switching element corresponding to the first switch, which is a difference from the second control operation performed by the control system 50A according to the sixth embodiment.

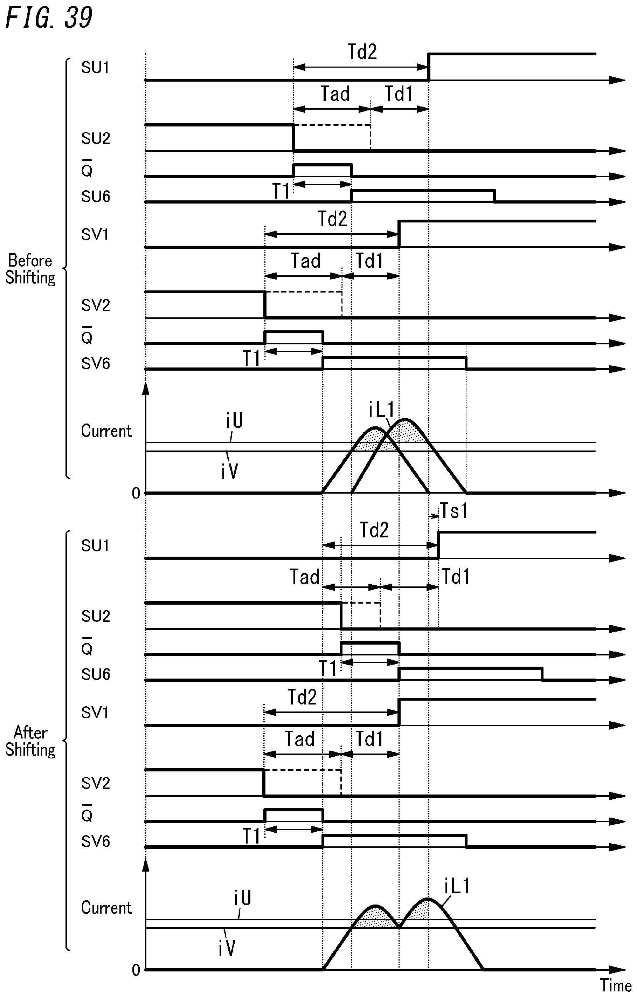

The upper part of FIG. 39 is a timing chart showing a situation where the controller 51A has determined that U- and V-phase resonant currents should be going to flow simultaneously. In this case, in the upper part of the timing chart of FIG. 39, shown are the respective waveforms of the first control signals SU1, SU2, SV1, and SV2, the second control signals SU6 and SV6, the load currents iU and iV, and the current iL1 before shifting is made by performing the second control operation. In the example shown in FIG. 39, the additional time Tad of the second dead time period Td2 between the high-level period of the first control signal SU2 and the high-level period of the first control signal SU1 is calculated by the equation: Tad = Tau + (Tres/2). On the other hand, the additional time Tad of the second dead time period Td2 between the high-level period of the first control signal SV2 and the high-level period of the first control signal SV1 is calculated by the equation: Tad = Tav + (Tres/2). Note that FIG. 39 shows a timing chart for a part of one cycle of the carrier signal. In the example shown in FIG. 39, the absolute value of the load current iU is larger than the absolute value of the load current iV. Also, in the example shown in FIG. 39, the controller 51A uses the switch 8U, through which a load current having the larger absolute value flows, as the first switch.

On the other hand, the lower part of FIG. 39 is a timing chart showing a situation where the controller 51A has shifted the second control signal and the first control signal by performing the second control operation. In this case, the lower part of FIG. 39 is a timing chart showing the respective waveforms of the first control signals SU1, SU2, SV1, and SV2, the second control signals SU6 and SV6, the load currents iU and iV, and the current iL1.

In a situation where the charging operation is performed on the resonant capacitor 9, when determining that the U-phase and V-phase resonant currents should be going to flow simultaneously, the controller 51A shifts (postpones on the time axis) the high-level period of the second control signal SU6 for the U-phase third switching element 6U and shifts (postpones on the time axis), by a shifted time Ts1, the high-level period of the first control signal SU1 for the U-phase first switching element 1U. The controller 51A shifts the high-level period of the second control signal SU6 by setting the additional time Tad of the second dead time period Td2 such that the additional time Tad satisfies Tad < Tau + (Tres/2). The additional time Tad has a randomly selected length shorter than Tau + (Tres/2). The shifted time Ts1 may have a randomly selected length.

In the foregoing description, it has been described as an example how shifting is made by performing the second control operation in a situation where the controller 51A has determined that two-phase resonant currents, namely, the U-phase and V-phase resonant currents, should be going to flow simultaneously (i.e., overlap with each other). Even when two-phase resonant currents, namely, the U-phase and W-phase resonant currents, are going to flow simultaneously or two-phase resonant currents, namely, the V-phase and W-phase resonant currents, are going to flow simultaneously, shifting may also be made by performing the second control operation based on the same idea (i.e., using the same algorithm) as in a situation where shifting is made by performing the second control operation when the controller 51A has determined that the two-phase resonant currents, namely, the U-phase and V-phase resonant currents, should be going to flow simultaneously.

### (3) Advantages

The power converter 100A according to the twenty-first embodiment, as well as the power converter 100A according to the sixth embodiment, also allows for stopping performing zero-voltage soft switching without making pulse width modulation of the second control signal for each of the plurality of switches 8 provided for the purpose of making zero-voltage soft switching.

In addition, in the power converter 100A according to the twenty-first embodiment, as well as in the power converter 100A according to the sixth embodiment, the control system 50A also includes the controller 51A and the signal generator circuit 52. This configuration allows for performing zero-voltage soft switching with more reliability without having the controller 51A directly control a plurality of switches 8 provided for the purpose of making zero-voltage soft switching. More specifically, there is no need for the controller 51A to generate a second control signal in order to directly control the plurality of switches 8 provided for the purpose of making zero-voltage soft switching. This allows the controller 51A to make zero-voltage soft switching of each of the plurality of first switching elements 1 and the plurality of second switching elements 2 even without directly controlling the plurality of switches 8.

In the power converter 100A according to the twenty- first embodiment, as well as in the power converter 100A according to the sixth embodiment, when determining that resonant currents, respectively passing through two or more switches 8 belonging to the plurality of switches 8, should be going to flow simultaneously through the resonant inductor L1, the control system 50A may make zero-voltage soft switching of a target switching element corresponding to the switch 8 on which the control system 50A performs the first control operation and also allows for stropping performing zero-voltage soft switching on a target switching element corresponding to a first switch on which the control system 50A performs the second control operation.

Not just the control system 50A of the power converter 100A according to this embodiment but also the control system 50A of the power converter 100A according to any other embodiment may be configured to shift the second control signal for the first switch and shift the first control signal for the target switching element by the shifted time Ts1.

### (Twenty-second embodiment)

### (1) Configuration

A power converter 100B according to a twenty-second embodiment has the same configuration as the power converter 100B according to the fifth embodiment (refer to FIG. 17), and therefore, illustration and description thereof will be omitted herein.

### (2) Operation

The power converter 100B according to the twenty-second embodiment operates in substantially the same way as the power converter 100B according to the fifth embodiment.

When performing the second control operation, the control system 50 according to this embodiment not only shifts the high-level period of the second control signal for the first switch but also shifts (postpones on the time axis) the high-level period of a target switching element corresponding to the first switch, which is a difference from the second control operation performed by the control system 50 according to the fifth embodiment.

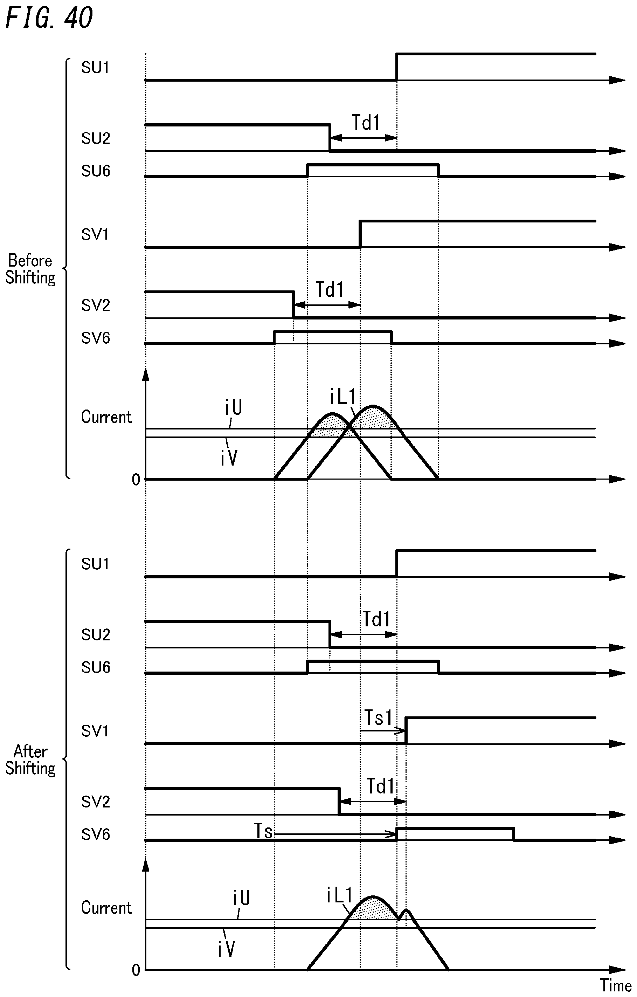

The upper part of FIG. 40 is a timing chart showing a situation where the controller 51 has determined that U- and V-phase resonant currents should be going to flow simultaneously. In this case, in the upper part of the timing chart of FIG. 40, shown are the respective waveforms of the first control signals SU1, SU2, SV1, and SV2, the second control signals SU6 and SV6, the load currents iU and iV, and the current iL1 before shifting is made by performing the second control operation. In the example shown in FIG. 40, the absolute value of the load current iU is larger than the absolute value of the load current iV. Note that in this embodiment, the controller 51 uses a switch 8V, through which a load current having the smaller absolute value flows, as the first switch.

On the other hand, the lower part of FIG. 40 is a timing chart showing a situation where the controller 51 has shifted the second control signal and the first control signal by performing the second control operation. In this case, the lower part of FIG. 40 is a timing chart showing the respective waveforms of the first control signals SU1, SU2, SV1, and SV2, the second control signals SU6 and SV6, the load currents iU and iV, and the current iL1. Note that FIG. 40 shows a timing chart for a part of one cycle of the carrier signal.

In a situation where the charging operation is performed on the resonant capacitor 9, when determining that the U-phase and V-phase resonant currents should be going to flow simultaneously, the controller 51 shifts (postpones on the time axis), by the shifted time Ts, the high-level period of the second control signal SV6 for the V-phase third switching element 6V and shifts (postpones on the time axis), by a shifted time Ts1, the high-level period of the first control signal SV1 for the V-phase first switching element 1V. The shifted time Ts set by the controller 51 satisfies the inequality: Ts < Tau + (Tres/2). The shifted time Ts1 may have a randomly selected length.

In the foregoing description, it has been described as an example how shifting is made by performing the second control operation in a situation where the controller 51 has determined that two-phase resonant currents, namely, the U-phase and V-phase resonant currents, should be going to flow simultaneously (i.e., overlap with each other). Even when two-phase resonant currents, namely, the U-phase and W-phase resonant currents, are going to flow simultaneously or two-phase resonant currents, namely, the V-phase and W-phase resonant currents, are going to flow simultaneously, shifting may also be made by performing the second control operation based on the same idea (i.e., using the same algorithm) as in a situation where shifting is made by performing the second control operation when the controller 51 has determined that the two-phase resonant currents, namely, the U-phase and V-phase resonant currents, should be going to flow simultaneously.

### (3) Advantages

The power converter 100B according to the twenty-second embodiment, as well as the power converter 100B according to the fifth embodiment, also allows for stopping performing zero-voltage soft switching without making pulse width modulation of the second control signal for each of the plurality of switches 8 provided for the purpose of making zero-voltage soft switching.

In the power converter 100B according to the twenty- second embodiment, as well as in the power converter 100B according to the fifth embodiment, when determining that resonant currents, respectively passing through two or more switches 8 belonging to the plurality of switches 8, should be going to flow simultaneously through the resonant inductor L1, the control system 50 may make zero-voltage soft switching of a target switching element corresponding to the switch 8 on which the control system 50 performs the first control operation and also allows for stropping performing zero-voltage soft switching on a target switching element corresponding to a first switch on which the control system 50 performs the second control operation.

### (Twenty-third embodiment)

### (1) Configuration

A power converter 100A according to a twenty-third embodiment has the same configuration as the power converter 100A according to the third embodiment (refer to FIG. 5), and therefore, illustration and description thereof will be omitted herein.

### (2) Operation

The power converter 100A according to the twenty-third embodiment operates in substantially the same way as the power converter 100A according to the sixth embodiment.

When performing the second control operation, the control system 50A according to this embodiment not only shifts the high-level period of the second control signal for the first switch but also shifts (postpones on the time axis) the high-level period of a target switching element corresponding to the first switch, which is a difference from the second control operation performed by the control system 50A according to the sixth embodiment.

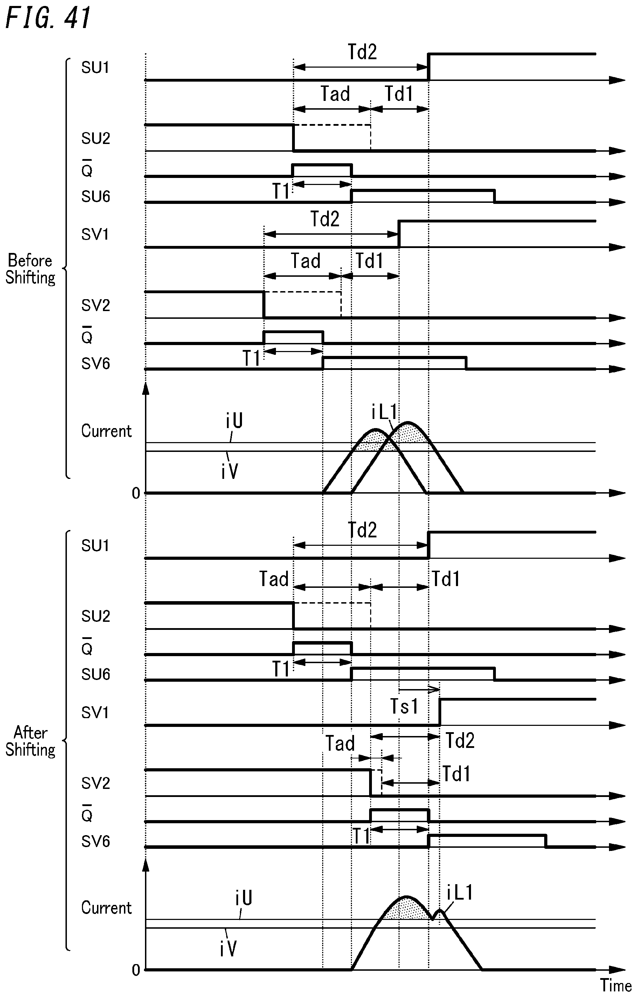

The upper part of FIG. 41 is a timing chart showing a situation where the controller 51A has determined that U- and V-phase resonant currents should be going to flow simultaneously. In this case, in the upper part of the timing chart of FIG. 41, shown are the respective waveforms of the first control signals SU1, SU2, SV1, and SV2, the second control signals SU6 and SV6, the load currents iU and iV, and the current iL1 before shifting is made by performing the second control operation. In the upper part of FIG. 41, the additional time Tad of the second dead time period Td2 between the high-level period of the first control signal SU2 and the high-level period of the first control signal SU1 is calculated by the equation: Tad = Tau + (Tres/2). On the other hand, the additional time Tad of the second dead time period Td2 between the high-level period of the first control signal SV2 and the high-level period of the first control signal SV1 is calculated by the equation: Tad = Tav + (Tres/2). Note that FIG. 41 shows a timing chart for a part of one cycle of the carrier signal. In the example shown in FIG. 41, the absolute value of the load current iU is larger than the absolute value of the load current iV. Also, in the example shown in FIG. 41, the controller 51A uses the switch 8V, through which a load current having the smaller absolute value flows, as the first switch.

On the other hand, the lower part of FIG. 41 is a timing chart showing a situation where the controller 51A has shifted the second control signal and the first control signal by performing the second control operation. In this case, the lower part of FIG. 41 is a timing chart showing the respective waveforms of the first control signals SU1, SU2, SV1, and SV2, the second control signals SU6 and SV6, the load currents iU and iV, and the current iL1.

In a situation where the charging operation is performed on the resonant capacitor 9, when determining that the U-phase and V-phase resonant currents should be going to flow simultaneously, the controller 51A shifts (postpones on the time axis) the high-level period of the second control signal SV6 for the V-phase third switching element 6V and shifts (postpones on the time axis), by a shifted time Ts1, the high-level period of the first control signal SV1 for V-phase the first switching element 1V. The controller 51A shifts the high-level period of the second control signal SV6 by setting the additional time Tad of the second dead time period Td2 such that the additional time Tad satisfies Tad < Tav + (Tres/2). The additional time Tad has a randomly selected length shorter than Tav + (Tres/2). The shifted time Ts1 may have a randomly selected length.

In the foregoing description, it has been described as an example how shifting is made by performing the second control operation in a situation where the controller 51A has determined that two-phase resonant currents, namely, the U-phase and V-phase resonant currents, should be going to flow simultaneously (i.e., overlap with each other). Even when two-phase resonant currents, namely, the U-phase and W-phase resonant currents, are going to flow simultaneously or two-phase resonant currents, namely, the V-phase and W-phase resonant currents, are going to flow simultaneously, shifting may also be made by performing the second control operation based on the same idea (i.e., using the same algorithm) as in a situation where shifting is made by performing the second control operation when the controller 51A has determined that the two-phase resonant currents, namely, the U-phase and V-phase resonant currents, should be going to flow simultaneously.

### (3) Advantages

The power converter 100A according to the twenty-third embodiment, as well as the power converter 100A according to the sixth embodiment, also allows for stopping performing zero-voltage soft switching without making pulse width modulation of the second control signal for each of the plurality of switches 8 provided for the purpose of making zero-voltage soft switching.

In addition, in the power converter 100A according to the twenty-third embodiment, as well as in the power converter 100A according to the sixth embodiment, the control system 50A also includes the controller 51A and the signal generator circuit 52. This configuration allows for performing zero-voltage soft switching with more reliability without having the controller 51A directly control a plurality of switches 8 provided for the purpose of making zero-voltage soft switching. More specifically, there is no need for the controller 51A to generate a second control signal in order to directly control the plurality of switches 8 provided for the purpose of making zero-voltage soft switching. This allows the controller 51A to make zero-voltage soft switching of each of the plurality of first switching elements 1 and the plurality of second switching elements 2 even without directly controlling the plurality of switches 8.

In the power converter 100A according to the twenty-third embodiment, as well as in the power converter 100A according to the sixth embodiment, when determining that resonant currents, respectively passing through two or more switches 8 belonging to the plurality of switches 8, should be going to flow simultaneously through the resonant inductor L1, the control system 50A may make zero-voltage soft switching of a target switching element corresponding to the switch 8 on which the control system 50A performs the first control operation and also allows for stropping performing zero-voltage soft switching on a target switching element corresponding to a first switch on which the control system 50A performs the second control operation.

Not just the control system 50A of the power converter 100A according to this embodiment but also the control system 50A of the power converter 100A according to any other embodiment may be configured to shift the second control signal for the first switch and shift the first control signal for the target switching element by the shifted time Ts1.

### (Twenty-fourth embodiment)

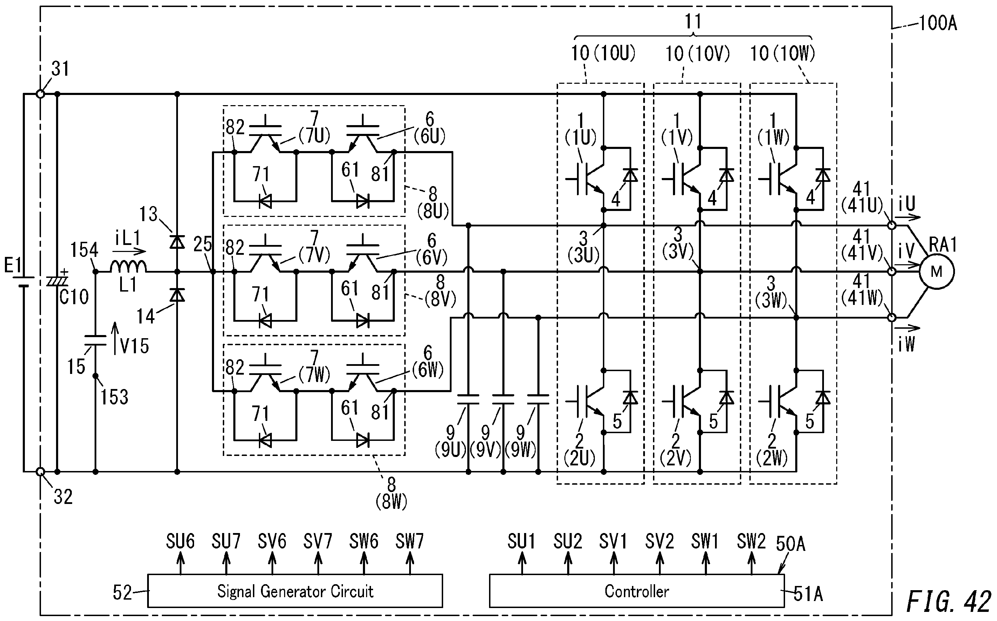

A power converter 100A according to a twenty-fourth embodiment will be described with reference to FIG. 42. In the following description, any constituent element of the power converter 100A according to the twenty-fourth embodiment, having the same function as a counterpart of the power converter 100A according to the third embodiment (refer to FIG. 5), will be designated by the same reference numeral as that counterpart's, and description thereof will be omitted herein.

In the power converter 100A according to the twenty-fourth embodiment, in each of the plurality of switches 8, a third switching element 6 and a fourth switching element 7 are connected in anti-series. In the power converter 100A according to the twenty-fourth embodiment, in each of the plurality of switches 8, the second main terminal (emitter terminal) of the third switching element 6 and the second main terminal (emitter terminal) of the fourth switching element 7 are connected to each other, the first main terminal (collector terminal) of the third switching element 6 is connected to the connection node 3 of a corresponding one of the plurality of switching circuits 10, and a first terminal (collector terminal) of the fourth switching element 7 is connected to the resonant inductor L1. In addition, each of the plurality of switches 8 further includes a diode 61 connected to the third switching element 6 in antiparallel and a diode 71 connected to the fourth switching element 7 in antiparallel.

The power converter 100A according to the twenty-fourth embodiment achieves the same advantages as the power converter 100A according to the third embodiment.

In the power converter 100A according to the twenty-fourth embodiment, each of the third switching element 6 and the fourth switching element 7 may be replaced with either a MOSFET or a bipolar transistor. In that case, the diode 61 and diode 71 shown in FIG. 42 may each be replaced with, for example, either a parasitic diode of the replacement element or an element built in one chip of the replacement element. Also, in the power converter 100A according to the twenty-fourth embodiment, the diode 61 and the diode 71 do not have to be provided as external elements for the third switching element 6 and the fourth switching element 7, respectively, but may also be elements built in one chip.

### (Twenty-fifth embodiment)

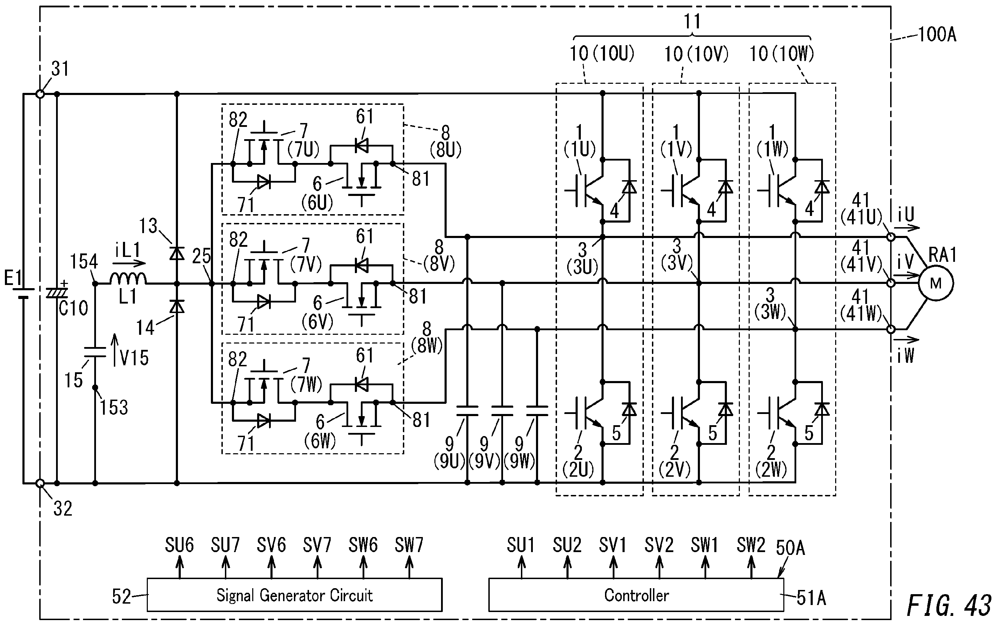

A power converter 100A according to a twenty-fifth embodiment will be described with reference to FIG. 43. In the following description, any constituent element of the power converter 100A according to the twenty-fifth embodiment, having the same function as a counterpart of the power converter 100A according to the third embodiment described above (refer to FIG. 5), will be designated by the same reference numeral as that counterpart's, and description thereof will be omitted herein.

In the power converter 100A according to the twenty-fifth embodiment, in each of the plurality of switches 8, each of the third switching element 6 and the fourth switching element 7 is implemented as a MOSFET and the third switching element 6 and the fourth switching element 7 are connected in anti-series. In the power converter 100A according to the twenty-fifth embodiment, in each of the plurality of switches 8, the first main terminal (drain terminal) of the third switching element 6 and the first main terminal (drain terminal) of the fourth switching element 7 are connected to each other. In addition, each of the plurality of switches 8 further includes a diode 61 connected to the third switching element 6 in antiparallel and a diode 71 connected to the fourth switching element 7 in antiparallel. In each of the plurality of switches 8, the second main terminal (source terminal) of the fourth switching element 7 is connected to the resonant inductor L1. In each of the plurality of switches 8, the second main terminal (source terminal) of the third switching element 6 is connected to the connection node 3 of a switching circuit 10 corresponding to the switch 8 including the third switching element 6.

The power converter 100A according to the twenty-fifth embodiment achieves the same advantages as the power converter 100A according to the third embodiment.

### (Twenty-sixth embodiment)

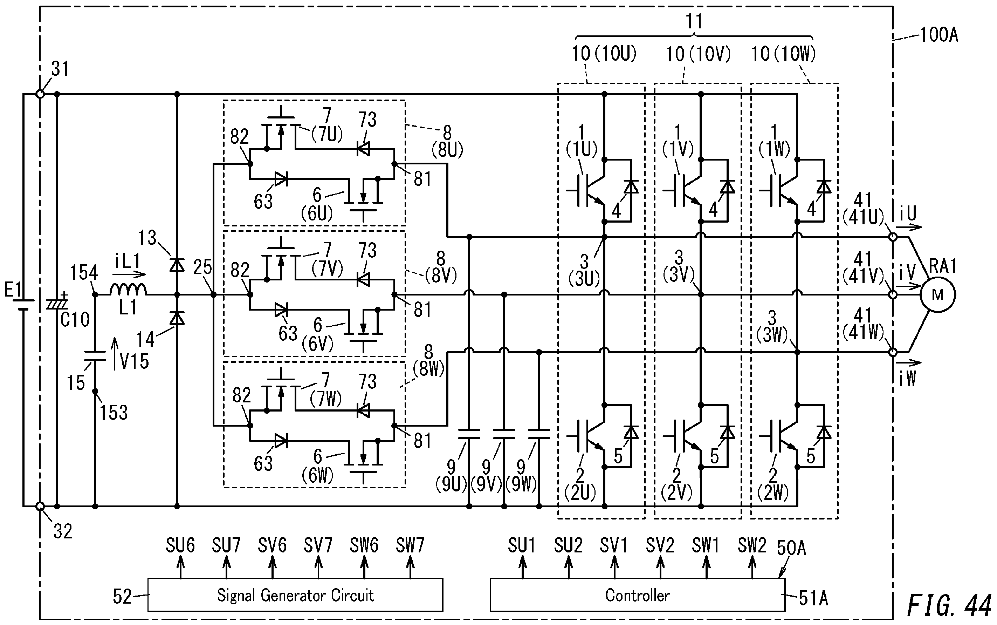

A power converter 100A according to a twenty-sixth embodiment will be described with reference to FIG. 44. In the following description, any constituent element of the power converter 100A according to the twenty-sixth embodiment, having the same function as a counterpart of the power converter 100A according to the third embodiment described above (refer to FIG. 5), will be designated by the same reference numeral as that counterpart's, and description thereof will be omitted herein.

In the power converter 100A according to the twenty-sixth embodiment, in each of the plurality of switches 8, each of the third switching element 6 and the fourth switching element 7 is implemented as a MOSFET, a diode 63 is connected to the third switching element 6 in series and a diode 73 is connected to the fourth switching element 7 in series. In the power converter 100A according to the twenty-sixth embodiment, a series circuit of the third switching element 6 and the diode 63 and a series circuit of the fourth switching element 7 and the diode 73 are connected to each other in antiparallel in each of the plurality of switches 8.

The power converter 100A according to the twenty-sixth embodiment achieves the same advantages as the power converter 100A according to the third embodiment.

### (Twenty-seventh embodiment)

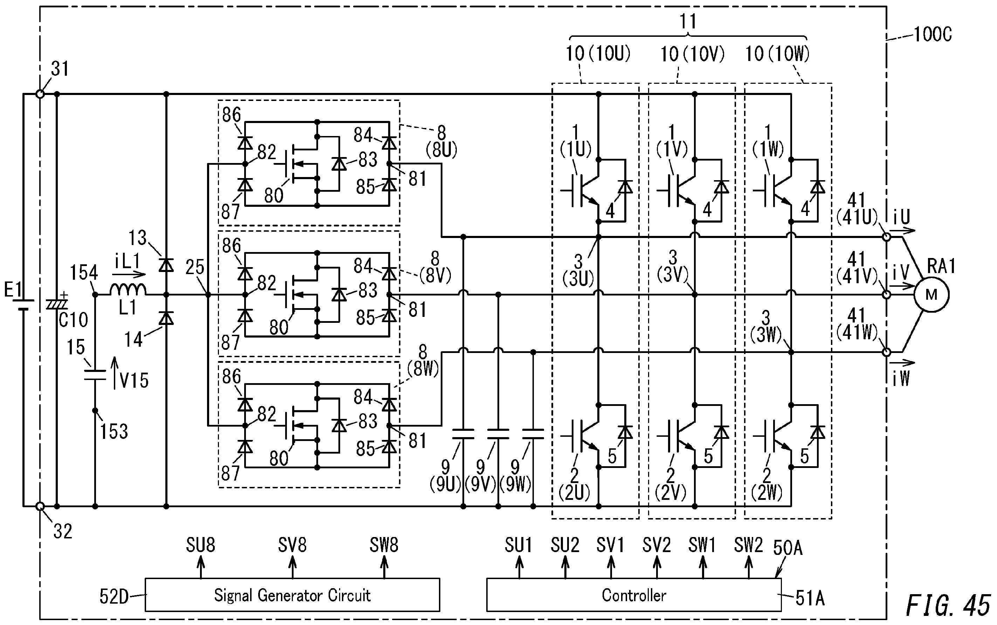

A power converter 100C according to a twenty-seventh embodiment will be described with reference to FIG. 45. In the following description, any constituent element of the power converter 100C according to the twenty-seventh embodiment, having the same function as a counterpart of the power converter 100A according to the third embodiment described above (refer to FIG. 5), will be designated by the same reference numeral as that counterpart's, and description thereof will be omitted herein.

In the power converter 100C according to the twenty-seventh embodiment, each of the plurality of switches 8 includes: a single MOSFET 80; a diode 83 connected to the MOSFET 80 in antiparallel; a series circuit of two diodes 84 and 85 connected to the MOSFET 80 in antiparallel; and a series circuit of two diodes 86 and 87 connected to the MOSFET 80 in antiparallel. In each of the plurality of switches 8, a connection node between the diodes 84 and 85 in the switch 8 (i.e., a first end 81 of the switch 8) is connected to the connection node 3 of a corresponding one of the plurality of switching circuits 10, and a connection node between the diodes 86 and 87 (i.e., a second end 82 of the switch 8) is connected to the common connection node 25. In each of the switches 8, when the MOSFET 80 is in ON state, the switch 8 is in ON state. On the other hand, when the MOSFET 80 is in OFF state, the switch 8 is in OFF state.

The power converter 100C according to the twenty-seventh embodiment includes a signal generator circuit 52D instead of the signal generator circuit 52 (refer to FIG. 5) of the power converter 100A according to the third embodiment.

The MOSFETs 80 of the plurality of switches 8 are controlled by the signal generator circuit 52D. The signal generator circuit 52D outputs a second control signal SU8 for controlling the ON/OFF states of the MOSFET 80 of the switch 8U, a second control signal SV8 for controlling the ON/OFF states of the MOSFET 80 of the switch 8V, and a second control signal SW8 for controlling the ON/OFF states of the MOSFET 80 of the switch 8W. The signal generator circuit 52D generates the second control signal SU8 using the first control signal SU1 and the first control signal SU2. In addition, the signal generator circuit 52D generates the second control signal SV8 using the first control signal SV1 and the first control signal SV2. The signal generator circuit 52D generates the second control signal SW8 using the first control signal SW1 and the first control signal SW2.

In each of the switches 8, when its MOSFET 80 is in ON state, a resonant current produced by a resonant circuit including the resonant inductor L1 and a corresponding one of the resonant capacitors 9 flows. In the power converter 100C according to the twenty-seventh embodiment, a charging current including the resonant current flows, when one of the plurality of switches 8 is in ON state, along the path passing through the regenerative capacitor 15, the resonant inductor L1, the diode 86, the MOSFET 80, the diode 85, and the resonant capacitor 9 in this order. Also, in the power converter 100C according to the twenty-seventh embodiment, a discharging current including the resonant current flows, when one of the plurality of switches 8 is in ON state, along the path passing through the resonant capacitor 9, the diode 84, the MOSFET 80, the diode 87, the resonant inductor L1, and regenerative capacitor 15 in this order.

The power converter 100C according to the twenty-seventh embodiment achieves the same advantages as the power converter 100A according to the third embodiment.

In the power converter 100C according to the twenty-seventh embodiment, each of the plurality of MOSFETs 80 may be replaced with an IGBT. Also, in the power converter 100C according to the twenty-seventh embodiment, each of the plurality of switches 8 may include, for example, a bipolar transistor or a GaN-based gate injection transistor (GIT) instead of the MOSFET 80.

### (Twenty-eighth embodiment)

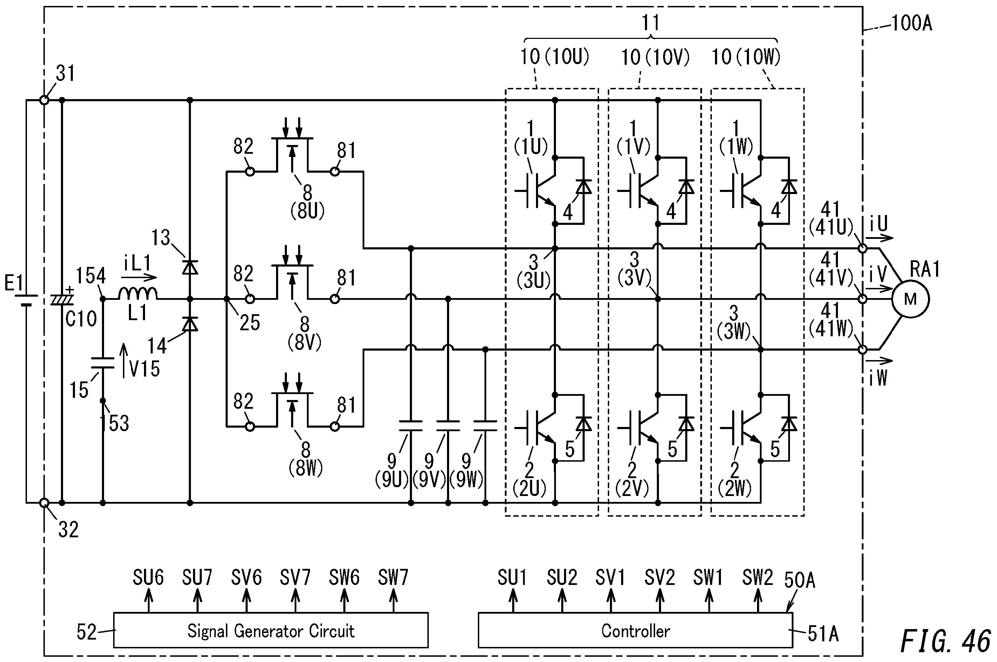

A power converter 100A according to a twenty-eighth embodiment will be described with reference to FIG. 46. In the following description, any constituent element of the power converter 100 according to the twenty-eighth embodiment, having the same function as a counterpart of the power converter 100A according to the third embodiment described above (refer to FIG. 5), will be designated by the same reference numeral as that counterpart's, and description thereof will be omitted herein.

In the power converter 100A according to the twenty-eighth embodiment, each of the plurality of switches 8 is a dual-gate GaN-based GIT including a first source terminal, a first gate terminal, a second gate terminal, and a second source terminal. In the power converter 100A according to the twenty-eighth embodiment, a second control signal SU6 is applied to between the first gate terminal and first source terminal of a dual-gate GaN-based GIT serving as the switch 8U, and a second control signal SU7 is applied to between the second gate terminal and the second source terminal thereof. In addition, a second control signal SV6 is applied to between the first gate terminal and first source terminal of a dual-gate GaN-based GIT serving as the switch 8V, and a second control signal SV7 is applied to between the second gate terminal and the second source terminal thereof. Furthermore, a second control signal SW6 is applied to between the first gate terminal and first source terminal of a dual-gate GaN-based GIT serving as the switch 8W, and a second control signal SW7 is applied to between the second gate terminal and the second source terminal thereof.

The power converter 100A according to the twenty-eighth embodiment achieves the same advantages as the power converter 100A according to the third embodiment.

### (Twenty-ninth embodiment)

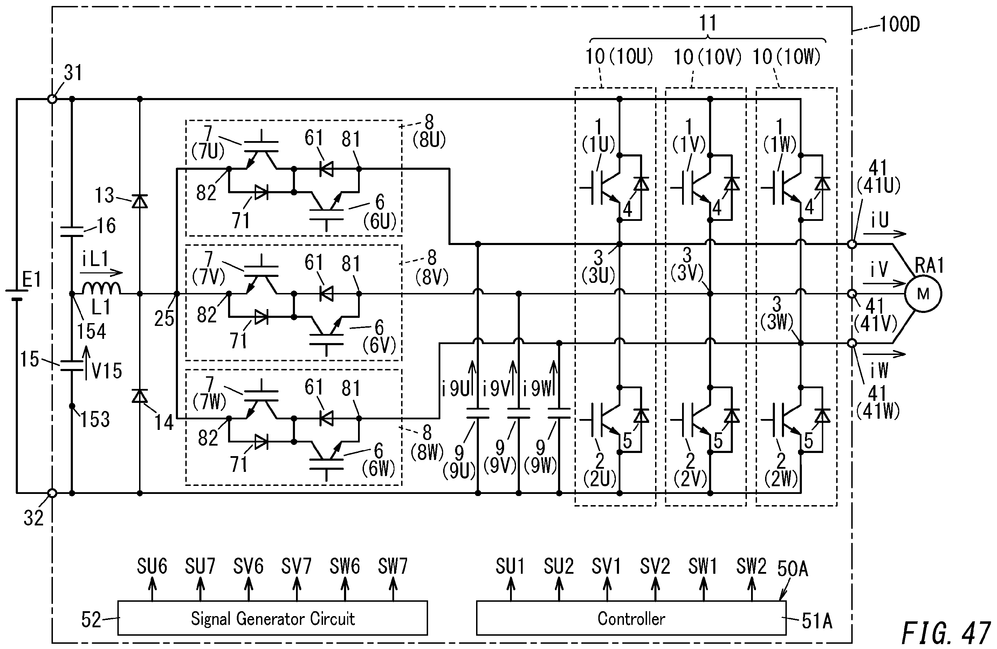

A power converter 100D according to a twenty-ninth embodiment will be described with reference to FIG. 47. In the following description, any constituent element of the power converter 100D according to the twenty-ninth embodiment, having the same function as a counterpart of the power converter 100A according to the third embodiment described above (refer to FIG. 5), will be designated by the same reference numeral as that counterpart's, and description thereof will be omitted herein.

### (1) Configuration

The power converter 100D further includes another regenerative capacitor 16 (hereinafter referred to as a "second regenerative capacitor 16") connected between the sixth end 154 of the regenerative capacitor 15 (hereinafter referred to as a "first regenerative capacitor 15") and the first DC terminal 31, which is a difference from the power converter 100A.

The second regenerative capacitor 16 is connected to the first regenerative capacitor 15 in series. Thus, in this power converter 100D, a series circuit of the second regenerative capacitor 16 and the first regenerative capacitor 15 is connected between the first DC terminal 31 and the second DC terminal 32. In this power converter 100D, the respective fourth ends of the plurality of resonant inductors L1 are connected to the path between the first regenerative capacitor 15 and the second regenerative capacitor 16. The capacitance of the second regenerative capacitor 16 is equal to the capacitance of the first regenerative capacitor 15. As used herein, the expression "the capacitance of the second regenerative capacitor 16 is equal to the capacitance of the first regenerative capacitor 15" refers to not only a situation where the capacitance of the second regenerative capacitor 16 is exactly equal to the capacitance of the first regenerative capacitor 15 but also a situation where the capacitance of the second regenerative capacitor 16 is equal to or greater than 95% and equal to or less than 105% of the capacitance of the first regenerative capacitor 15 as well.

In the power converter 100D according to the twenty-ninth embodiment, the voltage V15 across the first regenerative capacitor 15 (i.e., the potential at the sixth end 154 of the first regenerative capacitor 15) has a value calculated by dividing the voltage value Vd of the DC power supply E1 by two that is the number of the capacitors, namely, the second regenerative capacitor 16 and the first regenerative capacitor 15. Thus, the voltage V15 across the first regenerative capacitor 15 is approximately equal to Vd/2. In the power converter 100D according to the twenty-ninth embodiment, the controller 51A may store in advance the value of the voltage V15 across the first regenerative capacitor 15.

### (2) Advantages

The controller 51A and signal generator circuit 52 of the power converter 100D according to the twenty-ninth embodiment operate in substantially the same way as the controller 51 and signal generator circuit 52 of the power converter 100A according to the third embodiment. This allows the power converter 100D according to the twenty-ninth embodiment, as well as the power converter 100A according to the third embodiment, to perform zero-voltage soft switching with more reliability even without having the controller 51A directly control the plurality of switches 8 provided for the purpose of making zero-voltage soft switching.

### (Thirtieth embodiment)

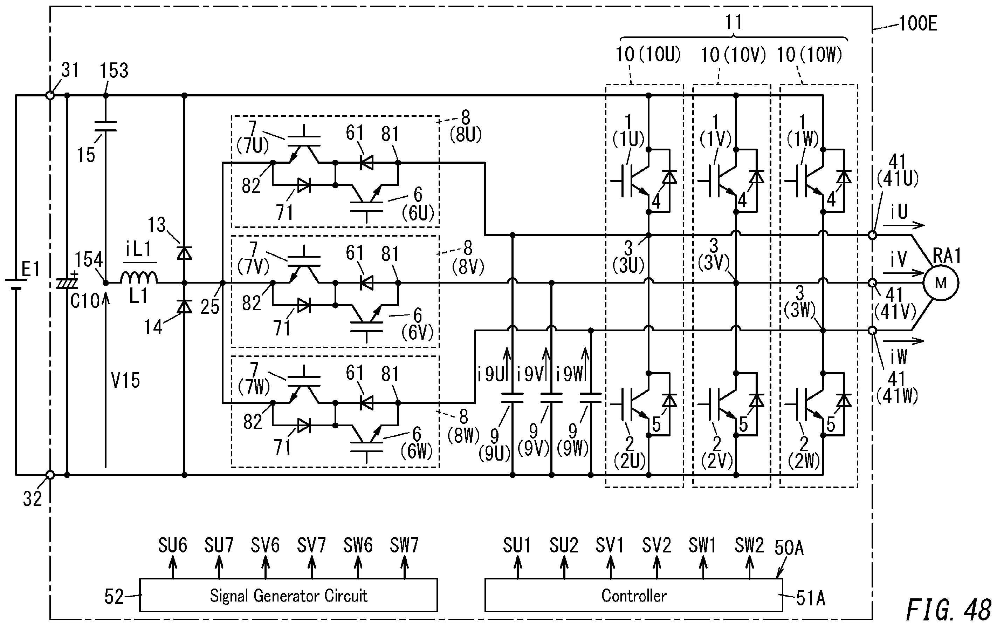

A power converter 100E according to a thirtieth embodiment will be described with reference to FIG. 48. In the following description, any constituent element of the power converter 100E according to the thirtieth embodiment, having the same function as a counterpart of the power converter 100A according to the third embodiment described above (refer to FIG. 5), will be designated by the same reference numeral as that counterpart's, and description thereof will be omitted herein.

### (1) Configuration

In the power converter 100E, the fifth end 153 of the regenerative capacitor 15 is connected to the first DC terminal 31, which is a difference from the power converter 100.

### (2) Operation

The controller 51A and signal generator circuit 52 of the power converter 100E according to the thirtieth embodiment operate in substantially the same way as the controller 51A and signal generator circuit 52 of the power converter 100A according to the third embodiment.

### (3) Advantages

The power converter 100E according to the thirtieth embodiment, as well as the power converter 100A according to the third embodiment, may perform zero-voltage soft switching with more reliability even without having the controller 51A directly control the plurality of switches 8 provided for the purpose of making zero-voltage soft switching.

### (Thirty-first embodiment)

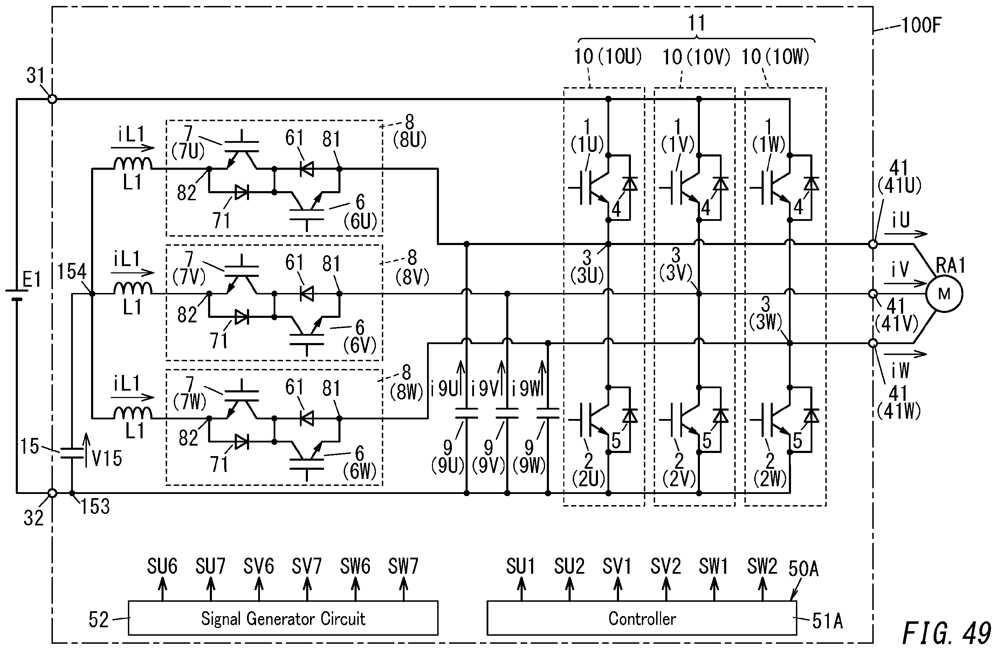

A power converter 100F according to a thirty-first embodiment will be described with reference to FIG. 49. In the following description, any constituent element of the power converter 100F according to the thirty-first embodiment, having the same function as a counterpart of the power converter 100A according to the third embodiment described above (refer to FIG. 5), will be designated by the same reference numeral as that counterpart's, and description thereof will be omitted herein.

The power converter 100F includes three resonant inductors L1, which is a difference from the power converter 100A. Note that in the example shown in FIG. 49, the power converter 100F includes neither the three first clamping diodes 13 nor the three second clamping diodes 14 shown in FIG. 1.

### (Thirty-second embodiment)

### (1) Configuration

A power converter 100 according to a thirty-second embodiment includes a programmable logic device (PLD) instead of the plurality of logic circuits 521-526 (refer to FIG. 2) of the signal generator circuit 52 of the power converter 100 according to the first embodiment. The power converter 100 according to the thirty-second embodiment has the same circuit configuration as the power converter 100 according to the first embodiment (refer to FIG. 1), and therefore, will be described with reference to FIG. 1.

The signal generator circuit 52 according to this embodiment, as well as the signal generator circuit 52 according to the first embodiment, generates a second control signal, of which the potential alternates between high level and low level, with respect to each of the plurality of switches 8. The signal generator circuit according to this embodiment generates, with respect to each of the plurality of switches 8, a second control signal having a high-level period corresponding to the second dead time period Td2 for a corresponding one of the plurality of switching circuits 10.

The signal generator circuit 52 according to this embodiment, as well as the signal generator circuit 52 according to the first embodiment, causes, with respect to each of the plurality of switches 8, the beginning time of the high-level period of the second control signal generated to follow the beginning timing of the second dead time period Td2. In this embodiment, the signal generator circuit 52 synchronizes the beginning time of the high-level period of the second control signal for each of the plurality of switches 8 with the beginning time of the second dead time period Td2, In this embodiment, the high-level period of the second control signal for each of the plurality of switches 8 is longer than the second dead time period Td2.

In the signal generator circuit 52 according to this embodiment, the PLD generates, with respect to each of the plurality of switches 8, a second control signal using the first control signal for the first switching element 1 of a corresponding one of the plurality of switching circuits 10 and the first control signal for the second switching element 2 thereof. The PLD also generates, with respect to each of the plurality of switches 8, a second control signal having a high-level period corresponding to the second dead time period Td2 for a corresponding one of the plurality of switching circuits 10.

In the signal generator circuit 52 according to this embodiment, the PLD causes, with respect to each of the plurality of switches 8, the beginning time of the high-level period of the second control signal generated to follow the beginning timing of the second dead time period Td2. In the signal generator circuit 52 according to this embodiment, the PLD is configured to synchronize the beginning time of the high-level period of the second control signal for each of the plurality of switches 8 with the beginning time of the second dead time period Td2, In this embodiment, the high-level period of the second control signal for each of the plurality of switches 8 is longer than the second dead time period Td2.

### (2) Operation of power converter

The controller 51 operates in the same way as the controller 51 according to the first embodiment described above, and therefore, description thereof will be omitted herein.

In addition, the signal generator circuit 52 according to this embodiment operates in the same way as the signal generator circuit 52 according to the first embodiment as far as the relation between the input and output of the signal generator circuit 52 is concerned, and therefore, description thereof will be omitted herein.

### (3) Advantages

The power converter 100 according to the thirty-second embodiment achieves the same advantages as the power converter 100 according to the first embodiment.

### (Other variations)

Note that the first to thirty-second embodiments and their variations described above are only exemplary ones of various embodiments of the present disclosure and their variations and should not be construed as limiting. Rather, the first to thirty-second exemplary embodiments and their variations may be readily modified in various manners depending on a design choice or any other factor without departing from the scope of the present disclosure.

For example, the signal generator circuit 52 may be configured to generate a second control signal using either the first control signal for the first switching element 1 of a corresponding one of the plurality of switching circuits 10 or the first control signal for the second switching element 2 thereof with respect to each of the plurality of switches 8.

Also, in the fifth through twenty-third embodiments described above, either the control system 50 or the control system 50A determines the first switch and second switch to be selected from the plurality of switches 8 based on the relation in magnitude between the respective absolute values of the load currents associated with the plurality of switches 8. Alternatively, the first and second switches to be selected from the plurality of switches 8 may also be determined based on the relation in magnitude between the respective absolute values of the voltage instruction values, instead of the relation in magnitude between the respective absolute values of the load currents. Still alternatively, the first and second switches to be selected from the plurality of switches 8 may also be determined based on the relation in magnitude between the respective duties, instead of the relation in magnitude between the respective absolute values of the load currents. Furthermore, in the fifth through twenty-third embodiments described above, either the control system 50 or the control system 50A determines the first switch, second switch, and third switch to be selected from the plurality of switches 8 based on the relation in magnitude between the respective absolute values of the load currents associated with the plurality of switches 8. Alternatively, the first, second, and third switches to be selected from the plurality of switches 8 may also be determined based on the relation in magnitude between the respective absolute values of the voltage instruction values, instead of the relation in magnitude between the respective absolute values of the load currents. Still alternatively, the first, second, and third switches to be selected from the plurality of switches 8 may also be determined based on the relation in magnitude between the respective duties, instead of the relation in magnitude between the respective absolute values of the load currents.

Furthermore, when determining that resonant currents respectively passing through two or more switches 8 belonging to the plurality of switches 8 should be going to flow simultaneously through the resonant inductor L1 upon the application of a second control signal having a preset high-level period to each of the plurality of switches 8, the control system 50A performs the second control operation on a first switch which is one of the two or more switches 8 and performs the first control operation on a second switch different from the first switch which also belong to the two or more switches 8. However, this is only an example and should not be construed as limiting. Alternatively, the control system 50A may also be configured to perform either the first control operation or the second control operation on at least one switch belonging to the two or more switches.

In the power converter 100 according to the first embodiment, the diodes 61 and 71 do not have to be provided as external elements for the third switching element 6 and the fourth switching element 7, respectively, but may also be elements built in one chip.

Also, in the power converters 100, 100A, and 100B according to the second through twenty-third embodiments, the switches 8 have the same configuration as the switches 8 of the power converter 100 according to the first embodiment, but may also have the same configuration as the switches 8 according to any one of the twenty-fourth through thirtieth embodiments.

Furthermore, the power converters 100 and 100A-100E may have a configuration including no first clamping diodes 13 or second clamping diodes 14.

Optionally, in the power converters 100 and 100A-100F, if each of the plurality of resonant capacitors 9 has a relatively small capacitance, then the parasitic capacitors across the plurality of second switching elements 2 may also serve as the plurality of resonant capacitors 9 instead of providing the plurality of resonant capacitors 9 as separate elements.

Furthermore, the length of the resonant half cycle is set to be equal to the length of the first dead time period Td1 in the embodiments described above but may also be different from the length of the first dead time period Td1. In any case, however, the end point of the resonant half cycle is preferably synchronized with the end point of the first dead time period Td1.

Furthermore, the power converters 100 and 100A-100F do not have to be configured to output three-phase AC power but may also be configured to output multi-phase AC power in more than three phases.

### (Aspects)

The foregoing description provides specific implementations for the following aspects of the present disclosure.

A power converter (100; 100A; 100B; 100C; 100D; 100E; 100F) according to a first aspect includes: a first DC terminal (31) and a second DC terminal (32); a power converter circuit (11); a plurality of AC terminals (41); a plurality of switches (8); a plurality of resonant capacitors (9); at least one resonant inductor (L1); a regenerative capacitor (15); and a control system (50; 50A). The power converter circuit (11) includes a plurality of first switching elements (1) and a plurality of second switching elements (2). In the power converter circuit (11), a plurality of switching circuits (10) in each of which one of the plurality of first switching elements (1) and a corresponding one of the plurality of second switching elements (2) are connected one to one in series, are connected to each other in parallel. In the power converter circuit (11), the plurality of first switching elements (1) are connected to the first DC terminal (31). In the power converter circuit (11), the plurality of second switching elements (2) are connected to the second DC terminal (32). The plurality of AC terminals (41) are provided one to one for the plurality of switching circuits (10). Each of the plurality of AC terminals (41) is connected to a connection node (3) between the first switching element (1) and the second switching element (2) of a corresponding one of the plurality of switching circuits (10). A load current flows through each of the plurality of AC terminals (41). The plurality of switches (8) are provided one to one for the plurality of switching circuits (10). Each of the plurality of switches (8) has a first end (81) thereof connected to the connection node (3) between the first switching element (1) and the second switching element (2) of a corresponding one of the plurality of switching circuits (10). The plurality of resonant capacitors (9) are provided one to one for the plurality of switches (8). Each of the plurality of resonant capacitors (9) is connected between the first end (81) of a corresponding one of the plurality of switches (8) and the second DC terminal (32). The at least one resonant inductor (L1) has a third end and a fourth end. The third end of the at least one resonant inductor (L1) is connected to a second end (82) of a corresponding one of the plurality of switches (8). The regenerative capacitor (15) has a fifth end (153) and a sixth end (154). The fifth end (153) of the regenerative capacitor (15) is connected to the second DC terminal (32). The sixth end (154) of the regenerative capacitor (15) is connected to the fourth end of the at least one resonant inductor (L1). The control system (50; 50A) applies a first control signal, having a potential alternating between a high level and a low level, to each of the plurality of first switching elements (1) and the plurality of second switching elements (2) and applies a second control signal, having a potential alternating between the high level and the low level, to each of the plurality of switches (8). The control system (50; 50A) may perform a first control operation and a second control operation when changing, in each of the plurality of switching circuits (10), the first control signal for a target switching element from the low level to the high level. The target switching element is one of the first and second switching elements (1, 2) that is going to be turned ON in the switching circuit (10). When performing the first control operation, the control system (50; 50A) allows, with respect to each of the plurality of switching circuits (10), at least a part of a high-level period of the second control signal for one of the plurality of switches (8) which corresponds to the switching circuit (10), to overlap with a dead time period provided between a high-level period of the first control signal for the first switching element (1) and a high-level period of the first control signal for the second switching element (2). When performing the second control operation, the control system (50; 50A) allows at least a part of the high-level period of the second control signal to overlap with the high-level period of the first control signal for the target switching element by shifting the high-level period of the second control signal to shorten an overlap period between the high-level period of the second control signal to be applied to each of the plurality of switches (8) and the dead time period (Td) compared to a situation where the first control operation is performed.

This aspect allows for stopping performing zero-voltage soft switching without making pulse width modulation of the second control signal for each of a plurality of switches (8) to be subjected to zero-voltage soft switching.

In a power converter (100; 100A; 100B; 100C; 100D; 100E; 100F) according to a second aspect, which may be implemented in conjunction with the first aspect, the control system (50; 50A) includes a controller (51) and a signal generator circuit (52). The controller (51) applies the first control signal to each of the plurality of first switching elements (1) and the plurality of second switching elements (2). The signal generator circuit (52) applies the second control signal to each of the plurality of switches (8). The controller (51) sets a second dead time period (Td2) as the dead time period. The second dead time period (Td2) is the sum of a first dead time period (Td1) and a predetermined amount of time (additional time Tad). The first dead time period (Td1) has been set in advance to prevent respective ON periods of the first switching element (1) and the second switching element (2) from overlapping with each other. The predetermined amount of time (additional time Tad) is determined in accordance with a current value of the load current, inductance of the resonant inductor (L1), and a voltage value of the regenerative capacitor (15). The signal generator circuit (52) generates, with respect to each of the plurality of switches (8), the second control signal, of which the high-level period is determined in accordance with the second dead time period (Td2) for a corresponding one of the plurality of switching circuits (10).

This aspect allows for realizing zero-voltage soft switching with more reliability without having the controller (51) directly control a plurality of switches (8) to be subjected to zero-voltage soft switching.

In a power converter (100A) according to a third aspect, which may be implemented in conjunction with the second aspect, the signal generator circuit (52) generates, with respect to each of the plurality of switches (8), the second control signal using at least one of the first control signal for the first switching element (1) of a corresponding one of the plurality of switching circuits (10) or the first control signal for the second switching element (2) of the corresponding one of the plurality of switching circuits (10).

This aspect allows for contributing to simplifying the signal generator circuit (52).

In a power converter (100A) according to a fourth aspect, which may be implemented in conjunction with the third aspect, the signal generator circuit (52) includes a plurality of logic circuits (521-526) but includes no microcontrollers.

This aspect allows for contributing to simplifying the signal generator circuit (52).

In a power converter (100A; 100B; 100C; 100D; 100E; 100F) according to a fifth aspect, which may be implemented in conjunction with any one of the first to fourth aspects, the at least one resonant inductor (L1) is a single resonant inductor (L1), and the respective second ends (82) of the plurality of switches (8) are connected in common to the single resonant inductor (L1).

This aspect allows for contributing to downsizing.

In a power converter (100A; 100B; 100C; 100D; 100E; 100F) according to a sixth aspect, which may be implemented in conjunction with the fifth aspect, when determining that resonant currents, respectively passing through two or more switches (8) belonging to the plurality of switches (8), should be going to flow simultaneously through the single resonant inductor (L1) upon application of a second control signal having a preset high-level period to each of the plurality of switches (8), the control system (50; 50A) performs the second control operation on a first switch belonging to the two or more switches (8) and performs the first control operation on a second switch belonging to the two or more switches (8) which is different from the first switch.

This aspect allows, when determining that resonant currents, respectively passing through two or more switches (8) belonging to the plurality of switches (8), should be going to flow simultaneously through the resonant inductor (L1), zero-voltage soft switching to be performed on a target switching element corresponding to the switch on which the control system (50A) performs the first control operation and also allows for stropping performing zero-voltage soft switching on a target switching element corresponding to a first switch on which the control system (50A) performs the second control operation.

In a power converter (100; 100A; 100B; 100C; 100D; 100E; 100F) according to a seventh aspect, which may be implemented in conjunction with the sixth aspect, the first switch is one of the two or more switches (8) and corresponds to one switching circuit (10) belonging to two or more switching circuits (10). The two or more switching circuits (10) are switching circuits (10) respectively corresponding to the two or more switches (8) which belong to the plurality of switching circuits (10). The two or more switching circuits (10) respectively cause load currents having mutually different absolute values to flow therethrough. The one switching circuit (10) causes a load current, of which the absolute value is the smallest among the two or more switching circuits (10), to flow therethrough.

This aspect allows the switching loss to be further cut down.

In a power converter (100; 100A; 100B; 100C; 100D; 100E; 100F) according to an eighth aspect, which may be implemented in conjunction with the sixth aspect, the first switch is one of the two or more switches (8) and corresponds to one switching circuit (10) belonging to two or more switching circuits (10). The two or more switching circuits (10) are switching circuits (10) respectively corresponding to the two or more switches (8) which belong to the plurality of switching circuits (10). Voltage instruction values for the two or more switching circuits (10) have mutually different absolute values. The voltage instruction value for the one switching circuit (10) has the smallest absolute value among the voltage instruction values for the two or more switching circuits (10).

This aspect allows for uniformizing switches (8), of which hard switching is to be relieved, among the plurality of switches (8).

In a power converter (100; 100A; 100B; 100C; 100D; 100E) according to a ninth aspect, which may be implemented in conjunction with the sixth aspect, the first switch is one of the two or more switches (8) and corresponds to one switching circuit (10) belonging to two or more switching circuits (10). The two or more switching circuits (10) are switching circuits (10) respectively corresponding to the two or more switches (8) which belong to the plurality of switching circuits (10). Voltage instruction values for the two or more switching circuits (10) have mutually different absolute values. The voltage instruction value for the one switching circuit (10) has the largest absolute value among the voltage instruction values for the two or more switching circuits (10).

This aspect allows for uniformizing switches (8), of which hard switching is to be relieved, among the plurality of switches (8).

In a power converter (100; 100A; 100B; 100C; 100D; 100E) according to a tenth aspect, which may be implemented in conjunction with the sixth aspect, the two or more switches (8) are three switches (8). When performing the second control operation, the control system (50A) allows, with respect to the first switch, the high-level period of the second control signal to entirely overlap with the high-level period of the first control signal for the target switching element corresponding to the first switch, and also allows, with respect to a third switch belonging to the three switches which is different from the first switch and the second switch, the high-level period of the second control signal to partially overlap with the high-level period of the first control signal for the target switching element corresponding to the third switch.

This aspect allows for making zero-voltage soft switching of the first switching element (1) and the second switching element (2) of the switching circuit (10) corresponding to the second switch by performing the second control operation.

In a power converter (100; 100A; 100B; 100C; 100D; 100E) according to an eleventh aspect, which may be implemented in conjunction with the tenth aspect, the first switch is one of the three switches (8) and corresponds to a first switching circuit (10) belonging to three switching circuits (10). The three switching circuits (10) are switching circuits (10) respectively corresponding to the three switches (8) which belong to the plurality of switching circuits (10). The three switching circuits (10) respectively cause load currents having mutually different absolute values to flow therethrough. The first switching circuit (10) causes a load current, of which the absolute value is the smallest in the three switching circuits (10), to flow therethrough. The third switch is one of the three switches (8) and corresponds to a second switching circuit (10) belonging to the three switching circuits (10). The three switching circuits (10) are switching circuits (10) respectively corresponding to the three switches (8) which belong to the plurality of switching circuits (10). The three switching circuits (10) respectively cause load currents having the mutually different absolute values to flow therethrough. The second switching circuit (10) causes a load current, of which the absolute value is the second smallest in the three switching circuits (10), to flow therethrough.

This aspect allows the switching loss to be further cut down.

In a power converter (100; 100A; 100B; 100C; 100D; 100E) according to a twelfth aspect, which may be implemented in conjunction with the tenth aspect, the third switch is one of the three switches (8) and corresponds to a first switching circuit (10) belonging to three switching circuits (10). The three switching circuits (10) are switching circuits (10) respectively corresponding to the three switches (8) which belong to the plurality of switching circuits (10). The three switching circuits (10) respectively cause load currents having mutually different absolute values to flow therethrough. The first switching circuit (10) causes a load current, of which the absolute value is the smallest in the three switching circuits (10), to flow therethrough. The first switch is one of the three switches (8) and corresponds to a second switching circuit (10) belonging to the three switching circuits (10). The three switching circuits (10) are switching circuits (10) respectively corresponding to the three switches (8) which belong to the plurality of switching circuits (10). The three switching circuits (10) respectively cause load currents having the mutually different absolute values to flow therethrough. The second switching circuit (10) causes a load current, of which the absolute value is the second smallest in the three switching circuits (10), to flow therethrough.

This aspect allows the switching loss to be further cut down.

In a power converter (100; 100A; 100B; 100C; 100D; 100E) according to a thirteenth aspect, which may be implemented in conjunction with the tenth aspect, the first switch is one of the three switches (8) and corresponds to a first switching circuit (10) belonging to three switching circuits (10). The three switching circuits (10) are switching circuits (10) respectively corresponding to the three switches (8) which belong to the plurality of switching circuits (10). Voltage instruction values for the three switching circuits (10) have mutually different absolute values. The voltage instruction value for the first switching circuit (10) has the smallest absolute value among the voltage instruction values for the three switching circuits (10). The third switch is one of the three switches (8) and corresponds to a second switching circuit (10) belonging to the three switching circuits (10). The three switching circuits (10) are switching circuits (10) respectively corresponding to the three switches (8) which belong to the plurality of switching circuits (10). The voltage instruction values for the three switching circuits (10) have the mutually different absolute values. The voltage instruction value for the second switching circuit (10) has the second smallest absolute value among the voltage instruction values for the three switching circuits (10).

This aspect allows the switches (8) to be subjected to zero-voltage soft switching to be uniformized among the plurality of switches (8) when shortening control is performed.

In a power converter (100; 100A; 100B; 100C; 100D; 100E) according to a fourteenth aspect, which may be implemented in conjunction with the tenth aspect, the third switch is one of the three switches (8) and corresponds to a first switching circuit (10) belonging to three switching circuits (10). The three switching circuits (10) are switching circuits (10) respectively corresponding to the three switches (8) which belong to the plurality of switching circuits (10). Voltage instruction values for the three switching circuits (10) have mutually different absolute values. The voltage instruction value for the first switching circuit (10) has the smallest absolute value among the voltage instruction values for the three switching circuits (10). The first switch is one of the three switches (8) and corresponds to a second switching circuit (10) belonging to the three switching circuits (10). The three switching circuits (10) are switching circuits (10) respectively corresponding to the three switches (8) which belong to the plurality of switching circuits (10). The voltage instruction values for the three switching circuits (10) have the mutually different absolute values. The voltage instruction value for the second switching circuit (10) has the second smallest absolute value among the voltage instruction values for the three switching circuits (10).

This aspect allows the switches (8) to be subjected to zero-voltage soft switching to be uniformized among the plurality of switches (8) when the shortening control is performed.

In a power converter (100; 100A; 100B; 100C; 100D; 100E) according to a fifteenth aspect, which may be implemented in conjunction with the tenth aspect, the first switch is one of the three switches (8) and corresponds to a first switching circuit (10) belonging to three switching circuits (10). The three switching circuits (10) are switching circuits (10) respectively corresponding to the three switches (8) which belong to the plurality of switching circuits (10). Voltage instruction values for the three switching circuits (10) have mutually different absolute values. The voltage instruction value for the first switching circuit (10) has the largest absolute value among the voltage instruction values for the three switching circuits (10). The third switch is one of the three switches (8) and corresponds to a second switching circuit (10) belonging to the three switching circuits (10). The three switching circuits (10) are switching circuits (10) respectively corresponding to the three switches (8) which belong to the plurality of switching circuits (10). The voltage instruction values for the three switching circuits (10) have the mutually different absolute values. The voltage instruction value for the second switching circuit (10) has the second largest absolute value among the voltage instruction values for the three switching circuits (10).

This aspect allows the switching loss to be further cut down.

In a power converter (100; 100A; 100B; 100C; 100D; 100E) according to a sixteenth aspect, which may be implemented in conjunction with the tenth aspect, the third switch is one of the three switches (8) and corresponds to a first switching circuit (10) belonging to three switching circuits (10). The three switching circuits (10) are switching circuits (10) respectively corresponding to the three switches (8) which belong to the plurality of switching circuits (10). Voltage instruction values for the three switching circuits (10) have mutually different absolute values. The voltage instruction value for the first switching circuit (10) has the largest absolute value among the voltage instruction values for the three switching circuits (10). The first switch is one of the three switches (8) and corresponds to a second switching circuit (10) belonging to the three switching circuits (10). The three switching circuits (10) are switching circuits (10) respectively corresponding to the three switches (8) which belong to the plurality of switching circuits (10). The voltage instruction values for the three switching circuits (10) have the mutually different absolute values. The voltage instruction value for the second switching circuit (10) has the second largest absolute value among the voltage instruction values for the three switching circuits (10).

In a power converter (100; 100A; 100B; 100C; 100D; 100E; 100F) according to a seventeenth aspect, which may be implemented in conjunction with the fifth aspect, when determining that resonant currents, respectively passing through two or more switches (8) belonging to the plurality of switches (8), should be going to flow simultaneously through the single resonant inductor (L1) upon the application of a second control signal having a preset high-level period to each of the plurality of switches (8), the control system (50A) performs either the first control operation or the second control operation on at least one switch (8) belonging to the two or more switches (8).

### Reference Signs List

1 First Switching Element
2 Second Switching Element
3 Connection Node
4 First Diode
5 Second Diode
6 Third Switching Element
7 Fourth Switching Element
8 Switch
81 First End
82 Second End
9 Resonant Capacitor
10 Switching Circuit
13 First Clamping Diode
14 Second Clamping Diode
11 Power Converter Circuit
15 Regenerative Capacitor
153 Fifth End
154 Sixth End
31 First DC Terminal
32 Second DC Terminal
41 AC Terminal
50, 50A Control System
51, 51A Controller
52, 52D Signal Generator Circuit
100, 100A, 100B, 100C, 100D, 100E, 100F Power Converter
iU, iV, iW Output Current (Load Current)
L1 Resonant Inductor
RA1 AC Load
S1, S2 First Control Signal
SU1, SU2, SV1, SV2, SW1, SW2 First Control Signal
S6 Second Control Signal
SU6, SU7, SU8, SV6, SV7, SV8, SW6, SW7, SW8 Second Control Signal
T01 First Period
T02 Second Period
T03 Third Period
Tad Additional Time
Td1 First Dead Time Period
Td2 Second Dead Time Period
V15 Voltage

## Claims

1. A power converter comprising:
a first DC terminal and a second DC terminal;
a power converter circuit including a plurality of first switching elements and a plurality of second switching elements, the power converter circuit being implemented as a parallel connection of a plurality of switching circuits in each of which one of the plurality of first switching elements and a corresponding one of the plurality of second switching elements are connected one to one in series, the plurality of first switching elements being connected to the first DC terminal, the plurality of second switching elements being connected to the second DC terminal;
a plurality of AC terminals provided one to one for the plurality of switching circuits, each of the plurality of AC terminals being connected to a connection node between the first switching element and the second switching element of a corresponding one of the plurality of switching circuits, a load current flowing through each of the plurality of AC terminals;
a plurality of switches provided one to one for the plurality of switching circuits, each of the plurality of switches having a first end thereof connected to the connection node between the first switching element and the second switching element of a corresponding one of the plurality of switching circuits;
a plurality of resonant capacitors provided one to one for the plurality of switches, each of the plurality of resonant capacitors being connected between the first end of a corresponding one of the plurality of switches and the second DC terminal;
at least one resonant inductor having a third end and a fourth end, the third end of the at least one resonant inductor being connected to a second end of a corresponding one of the plurality of switches;
a regenerative capacitor having a fifth end and a sixth end, the fifth end of the regenerative capacitor being connected to the second DC terminal, the sixth end of the regenerative capacitor being connected to the fourth end of the at least one resonant inductor; and
a control system configured to apply a first control signal, having a potential alternating between a high level and a low level, to each of the plurality of first switching elements and the plurality of second switching elements and apply a second control signal, having a potential alternating between the high level and the low level, to each of the plurality of switches,
the control system being able to perform a first control operation and a second control operation when changing, in each of the plurality of switching circuits, the first control signal for a target switching element from the low level to the high level, the target switching element being one of the first and second switching elements that is going to be turned ON in the switching circuit,
the first control operation including allowing, with respect to each of the plurality of switching circuits, at least a part of a high-level period of the second control signal for one of the plurality of switches which corresponds to the switching circuit, to overlap with a dead time period provided between a high-level period of the first control signal for the first switching element and a high-level period of the first control signal for the second switching element,
the second control operation including allowing at least a part of the high-level period of the second control signal to overlap with the high-level period of the first control signal for the target switching element by shifting the high-level period of the second control signal to shorten an overlap period between the high-level period of the second control signal to be applied to each of the plurality of switches and the dead time period compared to a situation where the first control operation is performed.

2. The power converter of claim 1, wherein
the control system includes:
a controller configured to apply the first control signal to each of the plurality of first switching elements and the plurality of second switching elements; and
a signal generator circuit configured to apply the second control signal to each of the plurality of switches,
the controller is configured to set a second dead time period as the dead time period, the second dead time period being a sum of a first dead time period and a predetermined amount of time, the first dead time period having been set in advance to prevent respective ON periods of the first switching element and the second switching element from overlapping with each other,
the predetermined amount of time is determined in accordance with a current value of the load current, inductance of the resonant inductor, and a voltage value of the regenerative capacitor, and
the signal generator circuit is configured to generate, with respect to each of the plurality of switches, the second control signal, of which the high-level period is determined in accordance with the second dead time period for a corresponding one of the plurality of switching circuits.

3. The power converter of claim 2, wherein
the signal generator circuit is configured to generate, with respect to each of the plurality of switches, the second control signal using at least one of the first control signal for the first switching element of a corresponding one of the plurality of switching circuits or the first control signal for the second switching element of the corresponding one of the plurality of switching circuits.

4. The power converter of claim 3, wherein
the signal generator circuit includes a plurality of logic circuits but includes no microcontrollers.

5. The power converter of any one of claims 1 to 4, wherein
the at least one resonant inductor is a single resonant inductor, and
the respective second ends of the plurality of switches are connected in common to the single resonant inductor.

6. The power converter of claim 5, wherein
the control system is configured to, when determining that resonant currents, respectively passing through two or more switches belonging to the plurality of switches, are going to flow simultaneously through the single resonant inductor upon application of a second control signal having a preset high-level period to each of the plurality of switches, perform the second control operation on a first switch belonging to the two or more switches and perform the first control operation on a second switch belonging to the two or more switches which is different from the first switch.

7. The power converter of claim 6, wherein
the first switch is one of the two or more switches and corresponds to one switching circuit belonging to two or more switching circuits,
the two or more switching circuits are switching circuits respectively corresponding to the two or more switches which belong to the plurality of switching circuits, the two or more switching circuits respectively causing load currents having mutually different absolute values to flow therethrough, and
the one switching circuit causes a load current, of which the absolute value is smallest among the two or more switching circuits, to flow therethrough.

8. The power converter of claim 6, wherein
the first switch is one of the two or more switches and corresponds to one switching circuit belonging to two or more switching circuits,
the two or more switching circuits are switching circuits respectively corresponding to the two or more switches which belong to the plurality of switching circuits,
voltage instruction values for the two or more switching circuits have mutually different absolute values, and
the voltage instruction value for the one switching circuit has a smallest absolute value among the voltage instruction values for the two or more switching circuits.

9. The power converter of claim 6, wherein
the first switch is one of the two or more switches and corresponds to one switching circuit belonging to two or more switching circuits,
the two or more switching circuits are switching circuits respectively corresponding to the two or more switches which belong to the plurality of switching circuits,
voltage instruction values for the two or more switching circuits have mutually different absolute values, and
the voltage instruction value for the one switching circuit has a largest absolute value among the voltage instruction values for the two or more switching circuits.

10. The power converter of claim 6, wherein
the two or more switches are three switches,
the control system is configured to, when performing the second control operation,
allow, with respect to the first switch, the high-level period of the second control signal to entirely overlap with the high-level period of the first control signal for the target switching element corresponding to the first switch, and
allow, with respect to a third switch belonging to the three switches which is different from the first switch and the second switch, the high-level period of the second control signal to partially overlap with the high-level period of the first control signal for the target switching element corresponding to the third switch.

11. The power converter of claim 10, wherein
the first switch is one of the three switches and corresponds to a first switching circuit belonging to three switching circuits,
the three switching circuits are switching circuits respectively corresponding to the three switches which belong to the plurality of switching circuits, the three switching circuits respectively causing load currents having mutually different absolute values to flow therethrough, and
the first switching circuit causes a load current, of which the absolute value is smallest in the three switching circuits, to flow therethrough, and
the third switch is one of the three switches and corresponds to a second switching circuit belonging to the three switching circuits,
the three switching circuits are switching circuits respectively corresponding to the three switches which belong to the plurality of switching circuits, the three switching circuits respectively causing load currents having the mutually different absolute values to flow therethrough, and
the second switching circuit causes a load current, of which the absolute value is second smallest in the three switching circuits, to flow therethrough.

12. The power converter of claim 10, wherein
the third switch is one of the three switches and corresponds to a first switching circuit belonging to three switching circuits,
the three switching circuits are switching circuits respectively corresponding to the three switches which belong to the plurality of switching circuits, the three switching circuits respectively causing load currents having mutually different absolute values to flow therethrough, and
the first switching circuit causes a load current, of which the absolute value is smallest in the three switching circuits, to flow therethrough, and
the first switch is one of the three switches and corresponds to a second switching circuit belonging to the three switching circuits,
the three switching circuits are switching circuits respectively corresponding to the three switches which belong to the plurality of switching circuits, the three switching circuits respectively causing load currents having the mutually different absolute values to flow therethrough, and
the second switching circuit causes a load current, of which the absolute value is second smallest in the three switching circuits, to flow therethrough.

13. The power converter of claim 10, wherein
the first switch is one of the three switches and corresponds to a first switching circuit belonging to three switching circuits,
the three switching circuits are switching circuits respectively corresponding to the three switches which belong to the plurality of switching circuits,
voltage instruction values for the three switching circuits have mutually different absolute values, and
the voltage instruction value for the first switching circuit has a smallest absolute value among the voltage instruction values for the three switching circuits, and
the third switch is one of the three switches and corresponds to a second switching circuit belonging to the three switching circuits,
the three switching circuits are switching circuits respectively corresponding to the three switches which belong to the plurality of switching circuits,
the voltage instruction values for the three switching circuits have the mutually different absolute values, and
the voltage instruction value for the second switching circuit has a second smallest absolute value among the voltage instruction values for the three switching circuits.

14. The power converter of claim 10, wherein
the third switch is one of the three switches and corresponds to a first switching circuit belonging to three switching circuits,
the three switching circuits are switching circuits respectively corresponding to the three switches which belong to the plurality of switching circuits,
voltage instruction values for the three switching circuits have mutually different absolute values, and
the voltage instruction value for the first switching circuit has a smallest absolute value among the voltage instruction values for the three switching circuits, and
the first switch is one of the three switches and corresponds to a second switching circuit belonging to the three switching circuits,
the three switching circuits are switching circuits respectively corresponding to the three switches which belong to the plurality of switching circuits,
the voltage instruction values for the three switching circuits have the mutually different absolute values, and
the voltage instruction value for the second switching circuit has a second smallest absolute value among the voltage instruction values for the three switching circuits.

15. The power converter of claim 10, wherein
the first switch is one of the three switches and corresponds to a first switching circuit belonging to three switching circuits,
the three switching circuits are switching circuits respectively corresponding to the three switches which belong to the plurality of switching circuits,
voltage instruction values for the three switching circuits have mutually different absolute values, and
the voltage instruction value for the first switching circuit has a largest absolute value among the voltage instruction values for the three switching circuits, and
the third switch is one of the three switches and corresponds to a second switching circuit belonging to the three switching circuits,
the three switching circuits are switching circuits respectively corresponding to the three switches which belong to the plurality of switching circuits,
the voltage instruction values for the three switching circuits have the mutually different absolute values, and
the voltage instruction value for the second switching circuit has a second largest absolute value among the voltage instruction values for the three switching circuits.

16. The power converter of claim 10, wherein
the third switch is one of the three switches and corresponds to a first switching circuit belonging to three switching circuits,
the three switching circuits are switching circuits respectively corresponding to the three switches which belong to the plurality of switching circuits,
voltage instruction values for the three switching circuits have mutually different absolute values, and
the voltage instruction value for the first switching circuit has a largest absolute value among the voltage instruction values for the three switching circuits, and
the first switch is one of the three switches and corresponds to a second switching circuit belonging to the three switching circuits,
the three switching circuits are switching circuits respectively corresponding to the three switches which belong to the plurality of switching circuits,
the voltage instruction values for the three switching circuits have the mutually different absolute values, and
the voltage instruction value for the second switching circuit has a second largest absolute value among the voltage instruction values for the three switching circuits.

17. The power converter of claim 5, wherein
the control system is configured to, when determining that resonant currents, respectively passing through two or more switches belonging to the plurality of switches, are going to flow simultaneously through the single resonant inductor upon application of a second control signal having a preset high-level period to each of the plurality of switches, perform either the first control operation or the second control operation on at least one switch belonging to the two or more switches.
